(19) Europäisches Patentamt
European Patent Office
Office européen des brevets

(11) **EP 4 730 766 A1**

(12) **EUROPEAN PATENT APPLICATION**

(43) Date of publication:
**22.04.2026 Bulletin 2026/17**

(21) Application number: **25210174.6**

(22) Date of filing: **21.10.2025**

(51) International Patent Classification (IPC):
**H04N 19/00** $^{(2014.01)}$

(52) Cooperative Patent Classification (CPC):
**H04N 19/597; G06T 9/001; G06T 9/004; G06T 9/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.10.2024 US 202463709672 P**

(71) Applicant: **Comcast Cable Communications, LLC**
**Philadelphia, PA 19103 (US)**

(72) Inventors:
• **TAQUET, Jonathan**
**Philadelphia, 19103 (US)**
• **LASSERRE, Sébastien**
**Philadelphia, 19103 (US)**

(74) Representative: **V.O.**
**P.O. Box 87930**
**2508 DH Den Haag (NL)**

(54) **INFERRING CODING REGION ADAPTIVE HIERARCHICAL TRANSFORM (RAHT) PREDICTION MODE**

(57) Systems, apparatus, and methods are described for inferring region adaptive hierarchical transform (RAHT) coefficients based on a quantity of coefficients related to a quantity of child nodes of a RAHT tree. Based on the quantity of coefficients, the indication of a prediction mode may be inferred from previously coded (encoded or decoded) neighboring RAHT nodes, or, alternatively, determined from a set of possible prediction modes or from a bitstream. The indication may be inferred from the set of possible prediction modes, for example, if the quantity of child nodes is below a threshold. The indication may be determined from the bitstream, for example, if the quantity of child nodes is above the threshold.

EP 4 730 766 A1

*FIG. 29*

**Description**

CROSS-REFERENCE TO RELATED APPLICATIONS

This application claims the benefit of U.S. Provisional Application No. 63/709,672, filed on October 21, 2024. The above referenced application is hereby incorporated by reference in its entirety.

BACKGROUND

An object or scene may be described using volumetric visual data consisting of a series of points in three-dimensional space that may be stored as a point cloud. As point clouds may be large in data size, sending and processing point cloud data may need a data compression scheme specifically designed with respect to the unique characteristics of point cloud data.

SUMMARY

The following summary presents a simplified summary of certain features. The summary is not an extensive overview and is not intended to identify key or critical elements.

A Region Adaptive Hierarchical Transform (RAHT) may be used for encoding point cloud data, and its inverse transform may be used for decoding point cloud data. Coefficients of the RAHT include a coefficient inherited from a parent node and may include up to one coefficient for each child node. If the RAHT tree is an octree, for example, there may be between 0 and 7 child coefficients. A prediction mode selected for encoding or decoding point cloud data may be correlated with the quantity of modes used for encoding coefficients of already encoded neighboring RAHT nodes. The quantity of coefficients of a RAHT node related to child nodes may be determined, and this quantity may be used, for example, to determine the prediction mode. The indication of the prediction mode may be selected from a set of prediction modes, for example, if the quantity of coefficients associated with child nodes is closer to the quantity of child nodes. The prediction mode may be inferred from prediction modes used for neighboring RAHT nodes, for example, if the quantity of coefficients associated with child nodes is close to zero. An indication of the prediction mode need not be sent, for example, if a prediction mode is inferred. Thus, by inferring a prediction mode used for coding AC coefficients of the current RAHT node, an indication of a prediction mode need not be signaled in a bitstream, and this may lead to a lower bitrate and higher compression gains.

These and other features and advantages are described in greater detail below.

BRIEF DESCRIPTION OF THE DRAWINGS

Examples of several of the various embodiments of the present disclosure are described herein with reference to the drawings.

FIG. 1 shows an example point cloud coding system.

FIG. 2 shows an example Morton order.

FIG. 3 shows an example scanning order.

FIG. 4 shows an example neighborhood of cuboids for coding the occupancy of a child cuboid.

FIG. 5 shows an example of a dynamic reduction function that may be used in dynamic Optimal Binary Coders with Update on the Fly (OBUF).

FIG. 6 shows an example method for coding occupancy of a cuboid using dynamic OBUF.

FIG. 7 shows an example of an occupied cuboid.

FIG. 8A shows an example cuboid corresponding to a TriSoup node.

FIG. 8B shows an example refinement to the TriSoup model.

FIG. 8C shows an example of coding a centroid residual value.

FIG. 9A shows an example of voxelization.

FIG. 9B shows an example of voxelization.

FIG. 10 shows an example method for encoding a point cloud.

FIG. 11 shows an example method for encoding attributes.

FIG. 12 shows an example method for decoding a point cloud.

FIG. 13A shows an example method for decoding attributes.

FIG. 13B shows an example of an inter-prediction attribute parametric model.

FIG. 13C shows an example of an inter-prediction attribute parametric model.

FIG. 14 shows an example method for determining attribute predictors.

FIG. 15 shows an example method for encoding attributes based on attribute predictors.

FIG. 16 shows an example method for encoding attributes based on attribute predictors.

FIG. 17 shows an example method for decoding attributes based on attribute predictors.

FIG. 18 shows an example method for decoding attributes based on attribute predictors.

FIG. 19 shows an example Region Adaptive Hierarchical Transform (RAHT) transformation.

FIG. 20 shows an example RAHT transformation.

FIG. 21 shows an example method for encoding attribute information for child RAHT nodes using top-down coding and inter-depth prediction, .

FIG. 22 shows an example method for decoding attribute information for child RAHT nodes using top-down decoding and inter-depth prediction, .

FIG. 23 shows an example method for up-sampling mean sums of attributes values of RAHT nodes at depth d-1.

FIG. 24 shows an example method for encoding, in a bitstream, a selected prediction mode used for encoding AC coefficients of a current RAHT node.

FIG. 25 shows an example method for decoding, from a bitstream, a prediction mode used for encoding AC coefficients of a current RAHT node.

FIG. 26 shows an example method for encoding or inferring a prediction mode used for encoding AC coefficients of a current RAHT node.

FIG. 27 shows an example method for decoding or inferring a prediction mode used for decoding AC coefficients of a current RAHT node.

FIG. 28A shows an example histogram plot of occurrence of intra prediction mode as a selected prediction mode.

FIG. 28B shows an example histogram plot of occurrence of inter prediction mode as a selected prediction mode.

FIG. 29 shows an example method for determining an indication of a prediction mode for coding AC coefficients of a current RAHT node.

FIG. 30 shows an example method for encoding or inferring a prediction mode used for encoding AC coefficients of a current RAHT node.

FIG. 31 shows an example method for decoding or inferring a prediction mode used for decoding AC coefficients of a current RAHT node.

FIG. 32 shows an example computer system in which examples of the present disclosure may be implemented.

FIG. 33 shows example elements of a computing device that may be used to implement any of the various devices described herein.

DETAILED DESCRIPTION

The accompanying drawings and descriptions provide examples. It is to be understood that the examples shown in the drawings and/or described are non-exclusive, and that features shown and described may be practiced in other examples. Examples are provided for operation of point cloud or point cloud sequence encoding or decoding systems. More particularly, the technology disclosed herein may relate to point cloud compression as used in encoding and/or decoding devices and/or systems.

At least some visual data may describe an object or scene in content and/or media using a series of points. Each point may comprise a position in two dimensions (x and y) and one or more optional attributes like color. Volumetric visual data may add another positional dimension to these visual data. For example, volumetric visual data may describe an object or scene in content and/or media using a series of points that each may comprise a position in three dimensions (x, y, and z) and one or more optional attributes like color, reflectance, time stamp, etc. Volumetric visual data may provide a more immersive way to experience visual data, for example, compared to the at least some visual data. For example, an object or scene described by volumetric visual data may be viewed from any (or multiple) angles, whereas the at least some visual data may generally only be viewed from the angle in which it was captured or rendered. As a format for the representation of visual data (e.g., volumetric visual data, three-dimensional video data, etc.) point clouds are versatile in their capability in representing all types of three-dimensional (3D) objects, scenes, and visual content. Point clouds are well suited for use in various applications including, among others: movie post-production, real-time 3D immersive media or telepresence, extended reality, free viewpoint video, geographical information systems, autonomous driving, 3D mapping, visualization, medicine, multi-view replay, and real-time Light Detection and Ranging (LiDAR) data acquisition.

As explained herein, volumetric visual data may be used in many applications, including extended reality (XR). XR encompasses various types of immersive technologies, including augmented reality (AR), virtual reality (VR), and mixed reality (MR). Sparse volumetric visual data may be used in the automotive industry for the representation of three-dimensional (3D) maps (e.g., cartography) or as input to assisted driving systems. In the case of assisted driving systems, volumetric visual data may be typically input to driving decision algorithms. Volumetric visual data may be used to store valuable objects in digital form. In applications for preserving cultural heritage, a goal may be to keep a representation of objects that may be threatened by natural disasters. For example, statues, vases, and temples may be entirely scanned and stored as volumetric visual data having several billions of samples. This use-case for volumetric visual data may be particularly relevant for valuable objects in locations where earthquakes, tsunamis and typhoons are frequent. Volumetric visual data may take the form of a volumetric frame. The volumetric frame may describe an object or scene captured at a particular time instance. Volumetric visual data may take the form of a sequence of volumetric frames (referred to as a volumetric sequence or volumetric video). The sequence of volumetric frames may describe an object or scene captured at multiple different time instances.

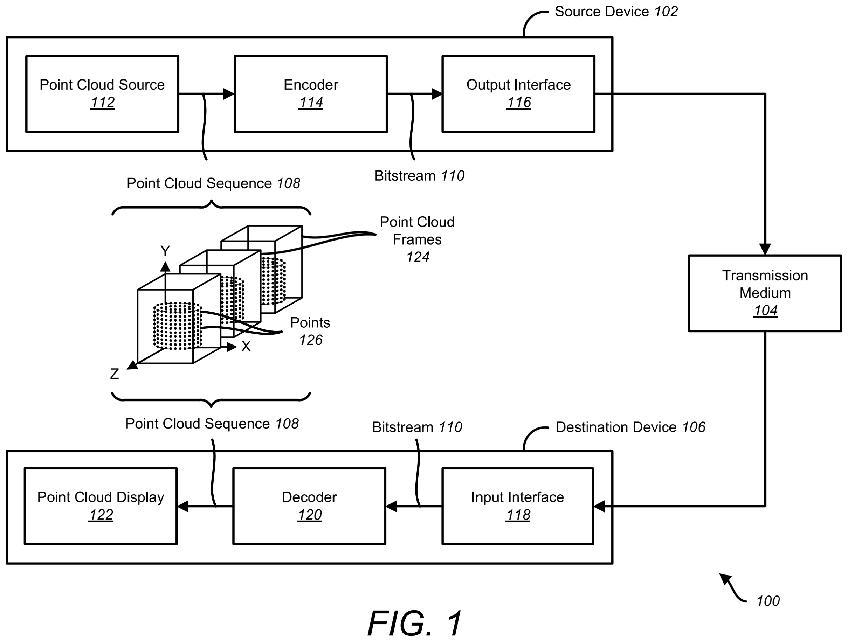

Volumetric visual data may be stored in various formats. A point cloud may comprise a collection of points in a 3D space. Such points may be used create a mesh comprising vertices and polygons, or other forms of visual content. As described herein, point cloud data may take the form of a point cloud frame, which describes an object or scene in content that is captured at a particular time instance. Point cloud data may take the form of a sequence of point cloud frames (e.g., point cloud video). As further described herein, point cloud data may be encoded by a source device (e.g., source device 102 as described herein with respect to FIG. 1) that outputs a bitstream containing the encoded point cloud data. The source device may encode the point cloud data based on point cloud compression coding, for example, geometry-based point cloud compression (G-PCC) coding and/or video-based point cloud compression (V-PCC) coding, or next generation coding. A destination device (e.g., destination device 106 as described herein with respect to FIG. 1) receives the bitstream containing the point cloud data and decodes the bitstream containing the point cloud data. The destination device may decode the point cloud data by performing point cloud decompression coding. The decompression coding may be an inverse process of the point cloud compression coding. The point cloud decompression coding may include, for example, G-PCC coding. Decoding may be used to decompress the point cloud data for display and/or other forms of consumption (e.g., further analysis, storage, etc.). The destination device (or a different device) may include, for example, a renderer for rendering the decoded point cloud data. The renderer may output content, for example, by rendering the point cloud data. The renderer may output content, for example, by rendering the point cloud data along with other data (e.g., audio data).

One format for storing volumetric visual data may be point clouds. A point cloud may comprise a collection of points in 3D space. Each point in a point cloud may comprise geometry information that may indicate the point's position in 3D space. For example, the geometry information may indicate the point's position in 3D space, for example, using three Cartesian coordinates (x, y, and z) and/or using spherical coordinates (r, phi, theta) (e.g., if acquired by a rotating sensor). The positions of points in a point cloud may be quantized according to a space precision. The space precision may be the same or different in each dimension. The quantization process may create a grid in 3D space. One or more points residing within each sub-grid volume may be mapped to the sub-grid center coordinates, referred to as voxels. A voxel may be considered as a 3D extension of pixels corresponding to the 2D image grid coordinates. A voxel may be referred to as a volumetric pixel. For example, similar to a pixel being the smallest unit in the example of dividing the 2D space (or 2D image) into discrete, uniform (e.g., equally sized) regions, a voxel may be the smallest unit of volume in the example of dividing 3D space into discrete, uniform regions. The sub-grid center coordinates may correspond to voxels. The sub-grid center coordinates may be referred to as a voxelized grid. A point in a point cloud may comprise one or more types of attribute information. Attribute information may indicate a property of a point's visual appearance. For example, attribute information may indicate a texture (e.g., color) of the point, a material type of the point, transparency information of the point, reflectance information of the point, a normal vector to a surface of the point, a velocity at the point, an acceleration at the point, a time stamp indicating when the point was captured, or a modality indicating how the point was captured (e.g., running, walking, or flying). A point in a point cloud may comprise light field data in the form of multiple view-dependent texture information. Light field data may be another type of optional attribute information.

The points in a point cloud may describe an object or a scene. For example, the points in a point cloud may describe the external surface and/or the internal structure of an object or scene. The object or scene may be synthetically generated by a computer. The object or scene may be generated from the capture of a real-world object or scene. The geometry information of a real-world object or a scene may be obtained by 3D scanning and/or photogrammetry. 3D scanning may include different types of scanning, for example, laser scanning, structured light scanning, and/or modulated light scanning. 3D scanning may obtain geometry information. 3D scanning may obtain geometry information, for example, by moving one or more laser heads, structured light cameras, and/or modulated light cameras relative to an object or scene being scanned. Photogrammetry may obtain geometry information. Photogrammetry may obtain geometry information, for example, by triangulating the same feature or point in different spatially shifted 2D photographs. Point cloud data may take the form of a point cloud frame. The point cloud frame may describe an object or scene captured at a particular time instance. Point cloud data may take the form of a sequence of point cloud frames. The sequence of point cloud frames may be referred to as a point cloud sequence or point cloud video. The sequence of point cloud frames may describe an object or scene captured at multiple different time instances.

The data size of a point cloud frame or point cloud sequence may be excessive (e.g., too large) for storage and/or transmission in many applications. For example, a single point cloud may comprise over a million points or even billions of points. Each point may comprise geometry information and one or more optional types of attribute information. The geometry information of each point may comprise three Cartesian coordinates (x, y, and z) and/or spherical coordinates (r, phi, theta) that may be each represented, for example, using at least 10 bits per component or 30 bits in total. The attribute information of each point may comprise a texture corresponding to a plurality of (e.g., three) color components (e.g., R, G, and B color components). Each color component may be represented, for example, using 8-10 bits per component or 24-30 bits in total. For example, a single point may comprise at least 54 bits of information, with at least 30 bits of geometry information and at least 24 bits of texture. If a point cloud frame includes a million such points, each point cloud frame may require 54 million bits or 54 megabits to represent. For dynamic point clouds that change over time, at a frame rate of 30 frames per second, a data rate of 1.62 gigabits per second may be required to send (e.g., transmit) the points of the point cloud sequence. Raw representations of point clouds may require a large amount of data, and the practical deployment of point-cloud-based technologies may need compression technologies that enable the storage and distribution of point clouds with a reasonable cost.

Encoding may be used to compress and/or reduce the data size of a point cloud frame or point cloud sequence to provide for more efficient storage and/or transmission. Decoding may be used to decompress a compressed point cloud frame or point cloud sequence for display and/or other forms of consumption (e.g., by a machine learning based device, neural network-based device, artificial intelligence-based device, or other forms of consumption by other types of machine-based processing algorithms and/or devices). Compression of point clouds may be lossy (introducing differences relative to the original data) for the distribution to and visualization by an end-user, for example, on AR or VR glasses or any other 3D-capable device. Lossy compression may allow for a high ratio of compression but may imply a trade-off between compression and visual quality perceived by an end-user. Other frameworks, for example, frameworks for medical applications or autonomous driving, may require lossless compression to avoid altering the results of a decision obtained, for example, based on the analysis of the sent (e.g., transmitted) and decompressed point cloud frame.

FIG. 1 shows an example point cloud coding (e.g., encoding and/or decoding) system 100. Point cloud coding system 100 may comprise a source device 102, a transmission medium 104, and a destination device 106. Source device 102 may encode a point cloud sequence 108 into a bitstream 110 for more efficient storage and/or transmission. Source device 102 may store and/or send (e.g., transmit) bitstream 110 to destination device 106 via transmission medium 104. Destination device 106 may decode bitstream 110 to display point cloud sequence 108 or for other forms of consumption (e.g., further analysis, storage, etc.). Destination device 106 may receive bitstream 110 from source device 102 via a storage medium or transmission medium 104. Source device 102 and destination device 106 may include any number of different devices. Source device 102 and destination device 106 may include, for example, a cluster of interconnected computer systems acting as a pool of seamless resources (also referred to as a cloud of computers or cloud computer), a server, a desktop computer, a laptop computer, a tablet computer, a smart phone, a wearable device, a television, a camera, a video gaming console, a set-top box, a video streaming device, a vehicle (e.g., an autonomous vehicle), or a head-mounted display. A head-mounted display may allow a user to view a VR, AR, or MR scene and adjust the view of the scene, for example, based on movement of the user's head. A head-mounted display may be connected (e.g., tethered) to a processing device (e.g., a server, a desktop computer, a set-top box, or a video gaming console) or may be fully self-contained.

A source device 102 may comprise a point cloud source 112, an encoder 114, and an output interface 116. A source device 102 may comprise a point cloud source 112, an encoder 114, and an output interface 116, for example, to encode point cloud sequence 108 into a bitstream 110. Point cloud source 112 may provide (e.g., generate) point cloud sequence 108, for example, from a capture of a natural scene and/or a synthetically generated scene. A synthetically generated scene may be a scene comprising computer generated graphics. Point cloud source 112 may comprise one or more point cloud capture devices, a point cloud archive comprising previously captured natural scenes and/or synthetically generated scenes, a point cloud feed interface to receive captured natural scenes and/or synthetically generated scenes from a point cloud content provider, and/or a processor(s) to generate synthetic point cloud scenes. The point cloud capture devices may include, for example, one or more laser scanning devices, structured light scanning devices, modulated light scanning devices, and/or passive scanning devices.

Point cloud sequence 108 may comprise a series of point cloud frames 124 (e.g., an example shown in FIG. 1). A point cloud frame may describe an object or scene captured at a particular time instance. Point cloud sequence 108 may achieve the impression of motion by using a constant or variable time to successively present point cloud frames 124 of point cloud sequence 108. A point cloud frame may comprise a collection of points (e.g., voxels) 126 in 3D space. Each point 126 may comprise geometry information that may indicate the point's position in 3D space. The geometry information may indicate, for example, the point's position in 3D space using three Cartesian coordinates (x, y, and z). One or more of points 126 may comprise one or more types of attribute information. Attribute information may indicate a property of a point's visual appearance. For example, attribute information may indicate, for example, a texture (e.g., color) of a point, a material type of a point, transparency information of a point, reflectance information of a point, a normal vector to a surface of a point, a velocity at a point, an acceleration at a point, a time stamp indicating when a point was captured, a modality indicating how a point was captured (e.g., running, walking, or flying), etc. One or more of points 126 may comprise, for example, light field data in the form of multiple view-dependent texture information. Light field data may be another type of optional attribute information. Color attribute information of one or more of points 126 may comprise a luminance value and two chrominance values. The luminance value may represent the brightness (e.g., luma component, Y) of the point. The chrominance values may respectively represent the blue and red components of the point (e.g., chroma components, Cb and Cr) separate from the brightness. Other color attribute values may be represented, for example, based on different color schemes (e.g., an RGB or monochrome color scheme).

Encoder 114 may encode point cloud sequence 108 into a bitstream 110. To encode point cloud sequence 108, encoder 114 may use one or more lossless or lossy compression techniques to reduce redundant information in point cloud sequence 108. To encode point cloud sequence 108, encoder 114 may use one or more prediction techniques to reduce redundant information in point cloud sequence 108. Redundant information is information that may be predicted at a decoder 120 and may not be needed to be sent (e.g., transmitted) to decoder 120 for accurate decoding of point cloud sequence 108. For example, Motion Picture Expert Group (MPEG) introduced a geometry-based point cloud compression (G-PCC) standard (ISO/IEC standard 23090-9: Geometry-based point cloud compression). G-PCC specifies the encoded bitstream syntax and semantics for transmission and/or storage of a compressed point cloud frame and the decoder operation for reconstructing the compressed point cloud frame from the bitstream. During standardization of G-PCC, a reference software (ISO/IEC standard 23090-21: Reference Software for G-PCC) was developed to encode the geometry and attribute information of a point cloud frame. To encode geometry information of a point cloud frame, the G-PCC reference software encoder may perform voxelization. The G-PCC reference software encoder may perform voxelization, for example, by quantizing positions of points in a point cloud. Quantizing positions of points in a point cloud may create a grid in 3D space. The G-PCC reference software encoder may map the points to the center coordinates of the sub-grid volume (e.g., voxel) that their quantized locations reside in. The G-PCC reference software encoder may perform geometry analysis using an occupancy tree to compress the geometry information. The G-PCC reference software encoder may entropy encode the result of the geometry analysis to further compress the geometry information. To encode attribute information of a point cloud, the G-PCC reference software encoder may use a transform tool, such as Region Adaptive Hierarchical Transform (RAHT), the Predicting Transform, and/or the Lifting Transform. The Lifting Transform may be built on top of the Predicting Transform. The Lifting Transform may include an extra update/lifting step. The Lifting Transform and the Predicting Transform may be referred to as Predicting/Lifting Transform or pred lift. Encoder 114 may operate in a same or similar manner to an encoder provided by the G-PCC reference software.

Output interface 116 may be configured to write and/or store bitstream 110 onto transmission medium 104. The bitstream 110 may be sent (e.g., transmitted) to destination device 106. In addition or alternatively, output interface 116 may be configured to send (e.g., transmit), upload, and/or stream bitstream 110 to destination device 106 via transmission medium 104. Output interface 116 may comprise a wired and/or wireless transmitter configured to send (e.g., transmit), upload, and/or stream bitstream 110 according to one or more proprietary, open-source, and/or standardized communication protocols. The one or more proprietary, open-source, and/or standardized communication protocols may include, for example, Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, Wireless Application Protocol (WAP) standards, and/or any other communication protocol.

Transmission medium 104 may comprise a wireless, wired, and/or computer readable medium. For example, transmission medium 104 may comprise one or more wires, cables, air interfaces, optical discs, flash memory, and/or magnetic memory. In addition or alternatively, transmission medium 104 may comprise one or more networks (e.g., the Internet) or file server(s) configured to store and/or send (e.g., transmit) encoded video data.

Destination device 106 may decode bitstream 110 into point cloud sequence 108 for display or other forms of consumption. Destination device 106 may comprise one or more of an input interface 118, a decoder 120, and/or a point cloud display 122. Input interface 118 may be configured to read bitstream 110 stored on transmission medium 104. Bitstream 110 may be stored on transmission medium 104 by source device 102. In addition or alternatively, input interface 118 may be configured to receive, download, and/or stream bitstream 110 from source device 102 via transmission medium 104. Input interface 118 may comprise a wired and/or wireless receiver configured to receive, download, and/or stream bitstream 110 according to one or more proprietary, open-source, standardized communication protocols, and/or any other communication protocol. Examples of the protocols include Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, and Wireless Application Protocol (WAP) standards.

Decoder 120 may decode point cloud sequence 108 from encoded bitstream 110. For example, decoder 120 may operate in a same or similar manner as a decoder provided by G-PCC reference software. Decoder 120 may decode a point cloud sequence that approximates a point cloud sequence 108. Decoder 120 may decode a point cloud sequence that approximates a point cloud sequence 108 due to, for example, lossy compression of the point cloud sequence 108 by encoder 114 and/or errors introduced into encoded bitstream 110, for example, if transmission to destination device 106 occurs.

Point cloud display 122 may display a point cloud sequence 108 to a user. The point cloud display 122 may comprise, for example, a cathode rate tube (CRT) display, a liquid crystal display (LCD), a plasma display, a light emitting diode (LED) display, a 3D display, a holographic display, a head-mounted display, or any other display device suitable for displaying point cloud sequence 108.

Point cloud coding (e.g., encoding/decoding) system 100 is presented by way of example and not limitation. Point cloud coding systems different from the point cloud coding system 100 and/or modified versions of the point cloud coding system 100 may perform the methods and processes as described herein. For example, the point cloud coding system 100 may comprise other components and/or arrangements. Point cloud source 112 may, for example, be external to source device 102. Point cloud display device 122 may, for example, be external to destination device 106 or omitted altogether (e.g., if point cloud sequence 108 is intended for consumption by a machine and/or storage device). Source device 102 may further comprise, for example, a point cloud decoder. Destination device 106 may comprise, for example, a point cloud encoder. For example, source device 102 may be configured to further receive an encoded bit stream from destination device 106. Receiving an encoded bit stream from destination device 106 may support two-way point cloud transmission between the devices.

As described herein, an encoder may quantize the positions of points in a point cloud according to a space precision, which may be the same or different in each dimension of the points. The quantization process may create a grid in 3D space. The encoder may map any points residing within each sub-grid volume to the sub-grid center coordinates, referred to as a voxel or a volumetric pixel. A voxel may be considered as a 3D extension of pixels corresponding to 2D image grid coordinates.

An encoder may represent or code a point cloud (e.g., a voxelized). An encoder may represent or code a point cloud, for example, using an occupancy tree. For example, the encoder may split the initial volume or cuboid containing the point cloud into sub-cuboids. The initial volume or cuboid may be referred to as a bounding box. A cuboid may be, for example, a cube. The encoder may recursively split each sub-cuboid that contains at least one point of the point cloud. The encoder may not further split sub-cuboids that do not contain at least one point of the point cloud. A sub-cuboid that contains at least one point of the point cloud may be referred to as an occupied sub-cuboid. A sub-cuboid that does not contain at least one point of the point cloud may be referred to as an unoccupied sub-cuboid. The encoder may split an occupied sub-cuboid into, for example, two sub-cuboids (to form a binary tree), four sub-cuboids (to form a quadtree), or eight sub-cuboids (to form an octree). The encoder may split an occupied sub-cuboid to obtain further sub-cuboids. The sub-cuboids may have the same size and shape at a given depth level of the occupancy tree. The sub-cuboids may have the same size and shape at a given depth level of the occupancy tree, for example, if the encoder splits the occupied sub-cuboid along a plane passing through the middle of edges of the sub-cuboid.

The initial volume or cuboid containing the point cloud may correspond to the root node of the occupancy tree. Each occupied sub-cuboid, split from the initial volume, may correspond to a node (of the root node) in a second level of the occupancy tree. Each occupied sub-cuboid, split from an occupied sub-cuboid in the second level, may correspond to a node (off the occupied sub-cuboid in the second level from which it was split) in a third level of the occupancy tree. The occupancy tree structure may continue to form in this manner for each recursive split iteration until, for example, some maximum depth level of the occupancy tree is reached or each occupied sub-cuboid has a volume corresponding to one voxel.

Each non-leaf node of the occupancy tree may comprise or be associated with an occupancy word representing the occupancy state of the cuboid corresponding to the node. For example, a node of the occupancy tree corresponding to a cuboid that is split into 8 sub-cuboids may comprise or be associated with a 1-byte occupancy word. Each bit (referred to as an occupancy bit) of the 1-byte occupancy word may represent or indicate the occupancy of a different one of the eight sub-cuboids. Occupied sub-cuboids may be each represented or indicated by a binary "1" in the 1-byte occupancy word. Unoccupied sub-cuboids may be each represented or indicated by a binary "0" in the 1-byte occupancy word. Occupied and un-occupied sub-cuboids may be represented or indicated by opposite 1-bit binary values (e.g., a binary "0" representing or indicating an occupied sub-cuboid and a binary "1" representing or indicating an unoccupied sub-cuboid) in the 1-byte occupancy word.

Each bit of an occupancy word may represent or indicate the occupancy of a different one of the eight sub-cuboids. Each bit of an occupancy word may represent or indicate the occupancy of a different one of the eight sub-cuboids, for example, following the so-called Morton order. For example, the least significant bit of an occupancy word may represent or indicate, for example, the occupancy of a first one of the eight sub-cuboids following the Morton order. The second least significant bit of an occupancy word may represent or indicate, for example, the occupancy of a second one of the eight sub-cuboids following the Morton order, etc.

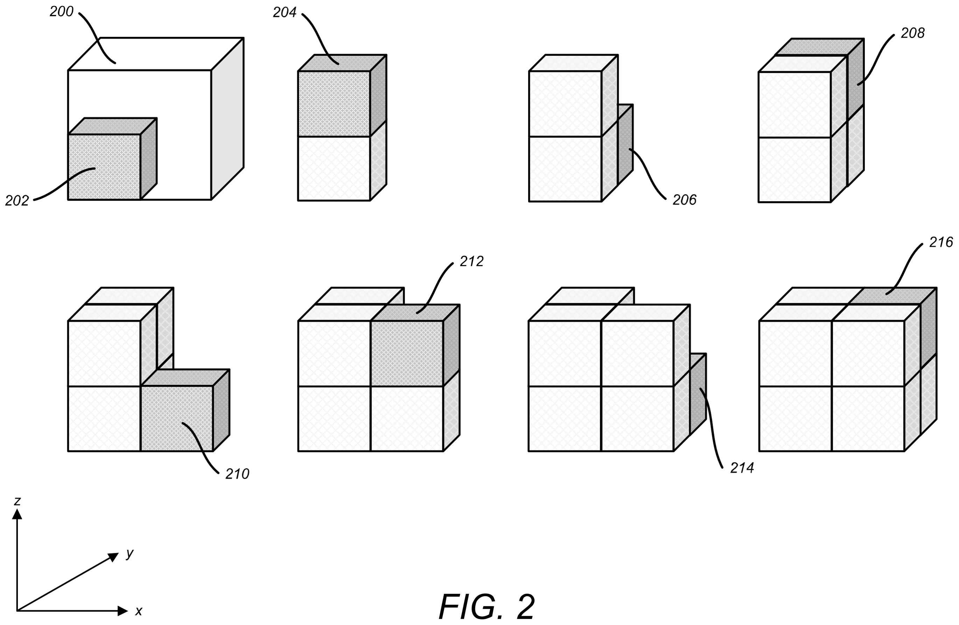

FIG. 2 shows an example Morton order. More specifically, FIG. 2 shows a Morton order of eight sub-cuboids 202-216 split from a cuboid 200. Sub-cuboids 202-216 may be labeled, for example, based on their Morton order, with child node 202 being the first in Morton order and child node 216 being the last in Morton order. The Morton order for sub-cuboids 202-216 may be a local lexicographic order in xyz.

The geometry of a point cloud may be represented by, and may be determined from, the initial volume and the occupancy words of the nodes in an occupancy tree. An encoder may send (e.g., transmit) the initial volume and the occupancy words of the nodes in the occupancy tree in a bitstream to a decoder for reconstructing the point cloud. The encoder may entropy encode the occupancy words. The encoder may entropy encode the occupancy words, for example, before sending (e.g., transmitting) the initial volume and the occupancy words of the nodes in the occupancy tree. The encoder may encode an occupancy bit of an occupancy word of a node corresponding to a cuboid. The encoder may encode an occupancy bit of an occupancy word of a node corresponding to a cuboid, for example, based on one or more occupancy bits of occupancy words of other nodes corresponding to cuboids that are adjacent or spatially close to the cuboid of the occupancy bit being encoded.

An encoder and/or a decoder may code (e.g., encode and/or decode) occupancy bits of occupancy words in sequence of a scan order. The scan order may also be referred to as a scanning order. For example, an encoder and/or a decoder may scan an occupancy tree in breadth-first order. All the occupancy words of the nodes of a given depth (e.g., level) within the occupancy tree may be scanned. All the occupancy words of the nodes of a given depth (e.g., level) within the occupancy tree may be scanned, for example, before scanning the occupancy words of the nodes of the next depth (e.g., level). Within a given depth, the encoder and/or decoder may scan the occupancy words of nodes in the Morton order. Within a given node, the encoder and/or decoder may scan the occupancy bits of the occupancy word of the node further in the Morton order.

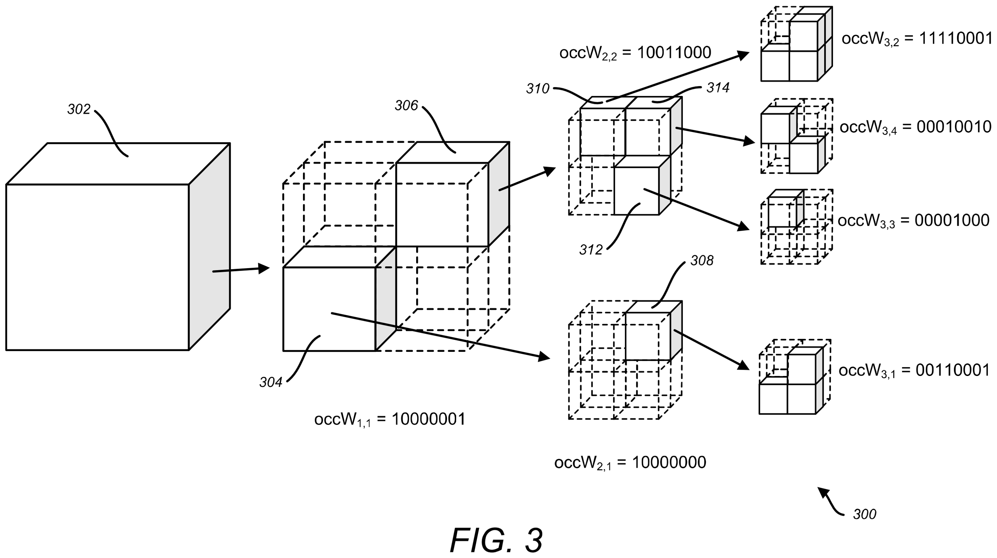

FIG. 3 shows an example scanning order. FIG. 3 shows an example scanning order (e.g., breadth-first order as described herein) for an occupancy tree 300. More specifically, FIG. 3 shows a scanning order for the first three example levels of an occupancy tree 300. A plurality of cuboids (e.g., cubes) may be generated, for example, at each level of the occupancy tree 300. In FIG. 3, a cuboid (e.g., cube) 302 corresponding to a root node of the occupancy tree 300 may be divided into eight sub-cuboids (e.g., sub-cubes). Two sub-cuboids 304 and 306 of the eight sub-cuboids may be occupied. The other six sub-cuboids of the eight sub-cuboids may be unoccupied. Following the Morton order, a first eight-bit occupancy word (e.g., $occW_{1,1}$) may be constructed to represent the occupancy word of the root node. An (e.g., each) occupancy bit of the first eight-bit occupancy word (e.g., $occW_{1,1}$) may represent or indicate the occupancy of a sub-cube of the eight sub-cuboids in the Morton order. For example, the least significant occupancy bit of the first eight-bit occupancy word $occW_{1,1}$ may represent or indicate the occupancy of the first sub-cuboid of the eight sub-cuboids in the Morton order. The second least significant occupancy bit of the first eight-bit occupancy word $occW_{1,1}$ may represent or indicate the occupancy of the second sub-cuboid of the eight sub-cuboids in the Morton order, etc.

Each of occupied sub-cuboids (e.g., two occupied sub-cuboids 304 and 306) may correspond to a node off the root node in a second level of an occupancy tree 300. The occupied sub-cuboids (e.g., two occupied sub-cuboids 304 and 306) may be each further split into eight sub-cuboids. For example, one of the sub-cuboids 308 of the eight sub-cuboids split from the sub-cube 304 may be occupied, and the other seven sub-cuboids may be unoccupied. Three of the sub-cuboids 310, 312, and 314 of the eight sub-cuboids split from the sub-cube 306 may be occupied, and the other five sub-cuboids of the eight sub-cuboids split from the sub-cube 306 may be unoccupied. Two second eight-bit occupancy words $occW_{2,1}$ and $occW_{2,2}$ may be constructed in this order to respectively represent the occupancy word of the node corresponding to the sub-cuboid 304 and the occupancy word of the node corresponding to the sub-cuboid 306.

Each of occupied sub-cuboids (e.g., four occupied sub-cuboids 308, 310, 312, and 314) may correspond to a node in a third level of an occupancy tree 300. The occupied sub-cuboids (e.g., four occupied sub-cuboids 308, 310, 312, and 314) may be each further split into eight sub-cuboids or 32 sub-cuboids in total. For example, four third level eight-bit occupancy words $occW_{3,1}$, $occW_{3,2}$, $occW_{3,3}$ and $occW_{3,4}$ may be constructed in this order to respectively represent the occupancy word of the node corresponding to the sub-cuboid 308, the occupancy word of the node corresponding to the sub-cuboid 310, the occupancy word of the node corresponding to the sub-cuboid 312, and the occupancy word of the node corresponding to the sub-cuboid 314.

Occupancy words of an example occupancy tree 300 may be entropy coded (e.g., entropy encoded by an encoder and/or entropy decoded by a decoder), for example, following the scanning order discussed herein (e.g., Morton order). The occupancy words of the example occupancy tree 300 may be entropy coded (e.g., entropy encoded by an encoder and/or entropy decoded by a decoder) as the succession of the seven occupancy words $occW_{1,1}$ to $occW_{3,4}$, for example, following the scanning order discussed herein. The scanning order discussed herein may be a breadth-first scanning order. The occupancy word(s) of all node(s) having the same depth (or level) as a current parent node may have already been entropy coded, for example, if the occupancy word of a current child node belonging to the current parent node is being entropy coded. For example, the occupancy word(s) of all node(s) having the same depth (e.g., level) as the current child node and having a lower Morton order than the current child node may have also already been entropy coded. Part of the already coded occupancy word(s) may be used to entropy code the occupancy word of the current child node. The already coded occupancy word(s) of neighboring parent and child node(s) may be used, for example, to entropy code the occupancy word of the current child node. The occupancy bit(s) of the occupancy word having a lower Morton order than a particular occupancy bit may have also already been entropy coded and may be used to code the occupancy bit of the occupancy word of the current child node, for example, if the particular occupancy bit of the occupancy word of the current child node is being coded (e.g., entropy coded).

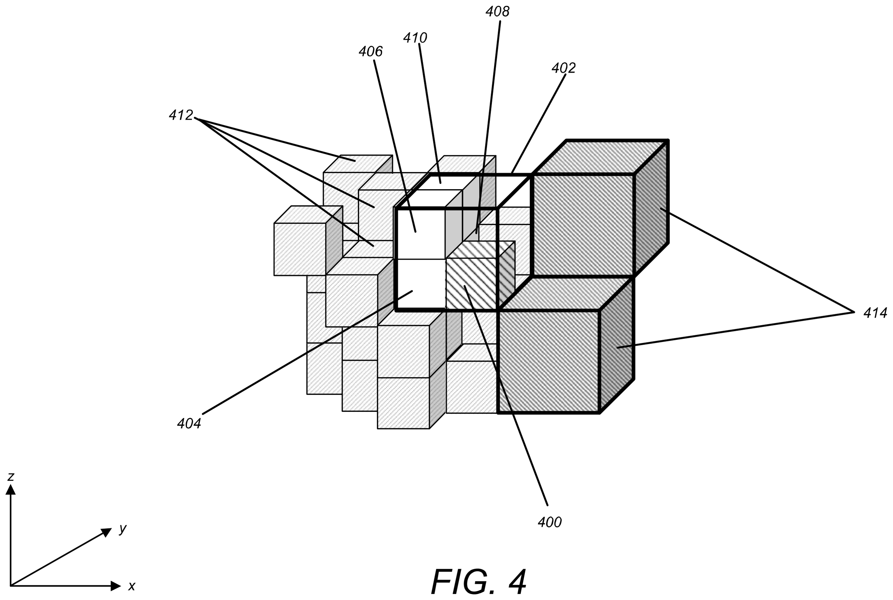

FIG. 4 shows an example neighborhood of cuboids for coding the occupancy of a child cuboid. More specifically, FIG. 4 shows an example neighborhood of cuboids with already-coded (e.g., previously-coded) occupancy bits. The neighborhood of cuboids with already-coded occupancy bits may be used to entropy code the occupancy bit of a current child cuboid 400. The neighborhood of cuboids with already-coded occupancy bits may be determined, for example, based on the scanning order of an occupancy tree representing the geometry of the cuboids in FIG. 4 as discussed herein. The neighborhood of cuboids, of a current child cuboid, may include one or more of: a cuboid adjacent to the current child cuboid, a cuboid sharing a vertex with the current child cuboid, a cuboid sharing an edge with the current child cuboid, a cuboid sharing a face with the current child cuboid, a parent cuboid adjacent to the current child cuboid, a parent cuboid sharing a vertex with the current child cuboid, a parent cuboid sharing an edge with the current child cuboid, a parent cuboid sharing a face with the current child cuboid, a parent cuboid adjacent to the current parent cuboid, a parent cuboid sharing a vertex with the current parent cuboid, a parent cuboid sharing an edge with the current parent cuboid, a parent cuboid sharing a face with the current parent cuboid, etc. As shown in FIG. 4, current child cuboid 400 may belong to a current parent cuboid 402. Following the scanning order of the occupancy words and occupancy bits of nodes of the occupancy tree, the occupancy bits of four child cuboids 404, 406, 408, and 410, belonging to the same current parent cuboid 402, may have already been coded. The occupancy bit of child cuboids 412 of preceding parent cuboids may have already been coded. The occupancy bits of parent cuboids 414, for which the occupancy bits of child cuboids have not already been coded, may have already been coded. The already-coded occupancy bits of cuboids 404, 406, 408, 410, 412, and 414 may be used to code the occupancy bit of the current child cuboid 400.

The number (e.g., quantity) of possible occupancy configurations (e.g., sets of one or more occupancy words and/or occupancy bits) for a neighborhood of a current child cuboid may be $2^N$, where N is the number (e.g., quantity) of cuboids in the neighborhood of the current child cuboid with already-coded occupancy bits. The neighborhood of the current child cuboid may comprise several dozens of cuboids. The neighborhood of the current child cuboid (e.g., several dozens of cuboids) may comprise 26 adjacent parent cuboids sharing a face, an, edge, and/or a vertex with the parent cuboid of the current child cuboid and also several adjacent child cuboids having occupancy bits already coded sharing a face, an edge, or a vertex with the current child cuboid. The occupancy configuration for a neighborhood of the current child cuboid may have billions of possible occupancy configurations, even limited to a subset of the adjacent cuboids, making its direct use impractical. An encoder and/or decoder may use the occupancy configuration for a neighborhood of the current child cuboid to select the context (e.g., a probability model), among a set of contexts, of a binary entropy coder (e.g., binary arithmetic coder) that may code the occupancy bit of the current child cuboid. The context-based binary entropy coding may be similar to the Context Adaptive Binary Arithmetic Coder (CABAC) used in MPEG-H Part 2 (also known as High Efficiency Video Coding (HEVC)).

An encoder and/or a decoder may use several methods to reduce the occupancy configurations for a neighborhood of a current child cuboid being coded to a practical number (e.g., quantity) of reduced occupancy configurations. The $2^6$ or 64 occupancy configurations of the six adjacent parent cuboids sharing a face with the parent cuboid of the current child cuboid may be reduced to 9 occupancy configurations. The occupancy configurations may be reduced by using geometry invariance. An occupancy score for the current child cuboid may be obtained from the $2^{26}$ occupancy configurations of the 26 adjacent parent cuboids. The score may be further reduced into a ternary occupancy prediction (e.g., "predicted occupied," "unsure", or "predicted unoccupied") by using score thresholds. The number (e.g., quantity) of occupied adjacent child cuboids and the number (e.g., quantity) of unoccupied adjacent child cuboids may be used instead of the individual occupancies of these child cuboids.

An encoder and/or a decoder using/employing one or more of the methods described herein may reduce the number (e.g., quantity) of possible occupancy configurations for a neighborhood of a current child cuboid to a more manageable number (e.g., a few thousands). It has been observed that instead of associating a reduced number (e.g., quantity) of contexts (e.g., probability models) directly to the reduced occupancy configurations, another mechanism may be used, namely Optimal Binary Coders with Update on the Fly (OBUF). An encoder and/or a decoder may implement OBUF to limit the number (e.g., quantity) of contexts to a lower number (e.g., 32 contexts).

OBUF may use a limited number (e.g., 32) of contexts (e.g., probability models). The number (e.g., quantity) of contexts in OBUF may be a fixed number (e.g., fixed quantity). The contexts used by OBUF may be ordered, referred to by a context index (e.g., a context index in the range of 0 to 31), and associated from a lowest virtual probability to a highest virtual probability to code a "1". A Look-Up Table (LUT) of context indices may be initialized at the beginning of a point cloud coding process. For example, the LUT may initially point to a context (e.g., with a context index 15) with the median virtual probability to code a "1" for all input. The LUT may initially point to a context with the median virtual probability to code a "1", among the limited number (e.g., quantity) of contexts, for all input. This LUT may take an occupancy configuration for a neighborhood of current child cuboid as input and output the context index associated with the occupancy configuration. The LUT may have as many entries as reduced occupancy configurations (e.g., around a few thousand entries). The coding of the occupancy bit of a current child cuboid may comprise steps including determining the reduced occupancy configuration of the current child node, obtaining a context index by using the reduced occupancy configuration as an entry to the LUT, coding the occupancy bit of the current child cuboid by using the context pointed to (or indicated) by the context index, and updating the LUT entry corresponding to the reduced occupancy configuration, for example, based on the value of the coded occupancy bit of the current child cuboid. The LUT entry may be decreased to a lower context index value, for example, if a binary "0" (e.g., indicating the current child cuboid is unoccupied) is coded. The LUT entry may be increased to a higher context index value, for example, if a binary "1" (e.g., indicating the current child cuboid is occupied) is coded. The update process of the context index may be, for example, based on a theoretical model of optimal distribution for virtual probabilities associated with the limited number (e.g., quantity) of contexts. This virtual probability may be fixed by a model and may be different from the internal probability of the context that may evolve, for example, if the coding of bits of data occurs. The evolution of the internal context may follow a well-known process similar to the process in CABAC.

An encoder and/or a decoder may implement a "dynamic OBUF" scheme. The "dynamic OBUF" scheme may enable an encoder and/or a decoder to handle a much larger number (e.g., quantity) of occupancy configurations for a neighborhood of a current child cuboid, for example, than general OBUF. The use of a larger number (e.g., quantity) of occupancy configurations for a neighborhood of a current child cuboid may lead to improved compression capabilities, and may maintain complexity within reasonable bounds. By using an occupancy tree compressed by OBUF, an encoder and/or a decoder may reach a lossless compression performance as good as 1 bit per point (bpp) for coding the geometry of dense point clouds. An encoder and/or a decoder may implement dynamic OBUF to potentially further reduce the bit rate by more than 25% to 0.7 bpp.

OBUF may not take as input a large variety of reduced occupancy configurations for a neighborhood of a current child cuboid, and may potentially cause a loss of useful correlation. With OBUF, the size of the LUT of context indices may be increased to handle more various occupancy configurations for a neighborhood of a current child cuboid as input. Due to such increase, statistics may be diluted, and compression performance may be worsened. For example, if the LUT has millions of entries and the point cloud has a hundred thousand points, then most of the entries may be never visited (e.g., looked up, accessed, etc.). Many entries may be visited only a few times and their associated context index may not be updated enough times to reflect any meaningful correlation between the occupancy configuration value and the probability of occupancy of the current child cuboid. Dynamic OBUF may be implemented to mitigate the dilution of statistics due to the increase of the number (e.g., quantity) of occupancy configurations for a neighborhood of a current child cuboid. This mitigation may be performed by a "dynamic reduction" of occupancy configurations in dynamic OBUF.

Dynamic OBUF may add an extra step of reduction of occupancy configurations for a neighborhood of a current child cuboid, for example, before using the LUT of context indices. This step may be called a dynamic reduction because it evolves, for example, based on the progress of the coding of the point cloud or, more precisely, based on already visited (e.g., looked up in the LUT) occupancy configurations.

As discussed herein, many possible occupancy configurations for a neighborhood of a current child cuboid may be potentially involved but only a subset may be visited if the coding of a point cloud occurs. This subset may characterize the type of the point cloud. For example, most of the visited occupancy configurations may exhibit occupied adjacent cuboids of a current child cuboid, for example, if AR or VR dense point clouds are being coded. On the other hand, most of the visited occupancy configurations may exhibit only a few occupied adjacent cuboids of a current child cuboid, for example, if sensor-acquired sparse point clouds are being coded. The role of the dynamic reduction may be to obtain a more precise correlation, for example, based on the most visited occupancy configuration while putting aside (e.g., reducing aggressively) other occupancy configurations that are much less visited. The dynamic reduction may be updated on-the-fly. The dynamic reduction may be updated on-the-fly, for example, after each visit (e.g., a lookup in the LUT) of an occupancy configuration, for example, if the coding of occupancy data occurs.

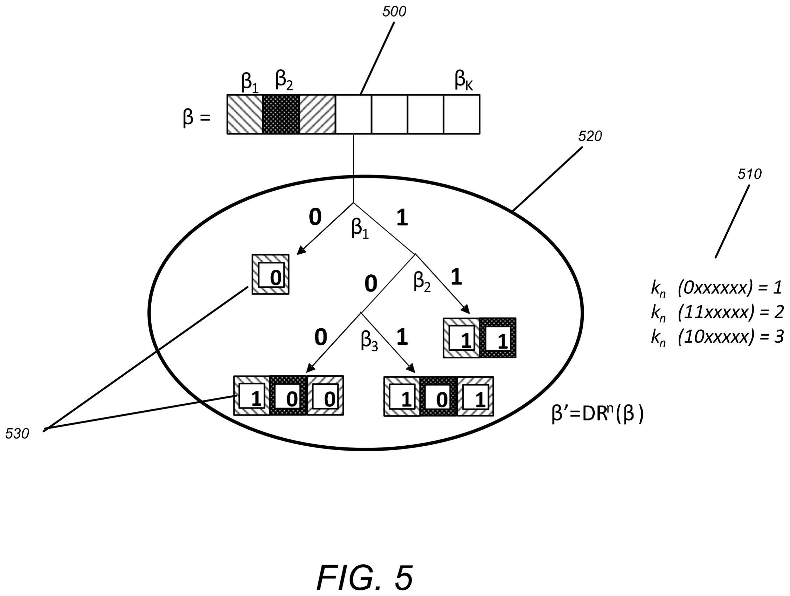

FIG. 5 shows an example of a dynamic reduction function DR that may be used in dynamic OBUF. The dynamic reduction function DR may be obtained by masking bits $\beta_j$ of occupancy configurations 500:

$$\beta = \beta_1 \dots \beta_K$$

made of K bits. The size of the mask may decrease, for example, if occupancy configurations are visited (e.g., looked up in the LUT) a certain number (e.g., quantity) of times. The initial dynamic reduction function $DR^0$ may mask all bits for all occupancy configurations such that it is a constant function $DR^0(\beta) = 0$ for all occupancy configurations $\beta$. The dynamic reduction function may evolve from a function $DR^n$ to an updated function $DR^{n+1}$. The dynamic reduction function may evolve from a function $DR^n$ to an updated function $DR^{n+1}$, for example, after each coding of an occupancy bit. The function may be defined by:

$$\beta' - DR^n(\beta) - \beta_1 \dots \beta_{k_n(\beta)}$$

where $k_n(\beta)$ 510 is the number (e.g., quantity) of non-masked bits. The initialization of $DR^0$ may correspond to $k_0(\beta)=0$, and the natural evolution of the reduction function toward finer statistics may lead to an increasing number (e.g., quantity) of non-masked bits $k_n(\beta) \leq k_{n+1}(\beta)$. The dynamic reduction function may be entirely determined by the values of $k_n$ for all occupancy configurations $\beta$.

The visits (e.g., instances of a lookup in the LUT) to occupancy configurations may be tracked by a variable NV(P') for all dynamically reduced occupancy configurations $\beta' = DR^n(\beta)$. The corresponding number (e.g., quantity) of visits $NV(\beta^{V'})$ may be increased by one, for example, after each instance of coding of an occupancy bit based on an occupancy configuration $\beta^V$. If this number (e.g., quantity) of visits $NV(\beta^{V'})$ is greater than a threshold $th_V$,

$$NV(\beta^{V'}) > th_V$$

then the number (e.g., quantity) of unmasked bits $k_n(\beta)$ may be increased by one for all occupancy configurations $\beta$ being dynamically reduced to $\beta^{V'}$. This corresponds to replacing the dynamically reduced occupancy configuration $\beta^{V'}$ by the two new dynamically reduced occupancy configurations $\beta^{0'}$ and $\beta^{1'}$ defined by

$$\beta^{0'} = \beta^{V'}0 = \beta^V_1 \dots \beta^V_{k_n(\beta)}0 \text{ and } \beta^{1'} = \beta^{V'}1 = \beta^V_1 \dots \beta^V_{k_n(\beta)}1.$$

In other words, the number (e.g., quantity) of unmasked bits has been increased by one $k_{n+1}(\beta) = k_n(\beta) + 1$ for all occupancy configurations $\beta$ such that $DR^n(\beta) = \beta^{V'}$. The number (e.g., quantity) of visits of the two new dynamically reduced occupancy configurations may be initialized to zero:

$$NV(\beta^{0'}) = NV(\beta^{1'}) = 0. \quad (I)$$

At the start of the coding, the initial number (e.g., quantity) of visits for the initial dynamic reduction function $DR^0$ may be set to

$$NV(DR^0(\beta)) = NV(0) = 0,$$

and the evolution of NV on dynamically reduced occupancy configurations may be entirely defined.

The corresponding LUT entry $LUT[\beta^{V'}]$ may be replaced by the two new entries $LUT[\beta^{0'}]$ and $LUT[\beta^{1'}]$ that are initialized by the coder index associated with $\beta^{V'}$. The corresponding LUT entry $LUT[\beta^{V'}]$ may be replaced by the two new entries $LUT[\beta^{0'}]$ and $LUT[\beta^{1'}]$ that are initialized by the coder index associated with $\beta^{V'}$, for example, if a dynamically reduced occupancy configuration $\beta^{V'}$ is replaced by the two new dynamically reduced occupancy configurations $\beta^{0'}$ and $\beta^{1'}$

$$LUT[\beta^{0'}] = LUT[\beta^{1'}] = LUT[\beta^{V'}], \qquad (II)$$

and then evolve separately. The evolution of the LUT of coder indices on dynamically reduced occupancy configurations may be entirely defined.

The reduction function $DR^n$ may be modeled by a series of growing binary trees $T^n$ 520 whose leaf nodes 530 are the reduced occupancy configurations $\beta' = DR^n(\beta)$. The initial tree may be the single root node associated with $0 = DR^0(\beta)$. The replacement of the dynamically reduced to $\beta^{V'}$ by $\beta^{0'}$ and $\beta^{1'}$ may correspond to growing the tree $T^n$ from the leaf node associated with $\beta^{V'}$, for example, by attaching to it two new nodes associated with $\beta^{0'}$ and $\beta^{1'}$. The tree $T^{n+1}$ may be obtained by this growth. The number (e.g., quantity) of visits NV and the LUT of context indices may be defined on the leaf nodes and evolve with the growth of the tree through equations (I) and (II).

The practical implementation of dynamic OBUF may be made by the storage of the array $NV[\beta']$ and the $LUT[\beta']$ of context indices, as well as the trees $T^n$ 520. An alternative to the storage of the trees may be to store the array $k_n[\beta]$ 510 of the number (e.g., quantity) of non-masked bits.

A limitation for implementing dynamic OBUF may be its memory footprint. In some applications, a few million occupancy configurations may be practically handled, leading to about 20 bits $\beta_i$ constituting an entry configuration $\beta$ to the reduction function DR. Each bit $\beta_i$ may correspond to the occupancy status of a neighboring cuboid of a current child cuboid or a set of neighboring cuboids of a current child cuboid.

Higher (e.g., more significant) bits $\beta_i$ (e.g., $\beta_0$, $\beta_1$, etc.) may be the first bits to be unmasked. Higher (e.g., more significant) bits $\beta_i$ (e.g., $\beta_0$, $\beta_1$, etc.) may be the first bits to be unmasked, for example, during the evolution of the dynamic reduction function DR. The order of neighbor-based information put in the bits $\beta_i$ may impact the compression performance. Neighboring information may be ordered from higher (e.g., highest) priority to lower priority and put in this order into the bits $\beta_i$, from higher to lower weight. The priority may be, from the most important to the least important, occupancy of sets of adjacent neighboring child cuboids, then occupancy of adjacent neighboring child cuboids, then occupancy of adjacent neighboring parent cuboids, then occupancy of non-adjacent neighboring child nodes, and finally occupancy of non-adjacent neighboring parent nodes. Adjacent nodes sharing a face with the current child node may also have higher priority than adjacent nodes sharing an edge (but not sharing a face) with the current child node. Adjacent nodes sharing an edge with the current child node may have higher priority than adjacent nodes sharing only a vertex with the current child node.

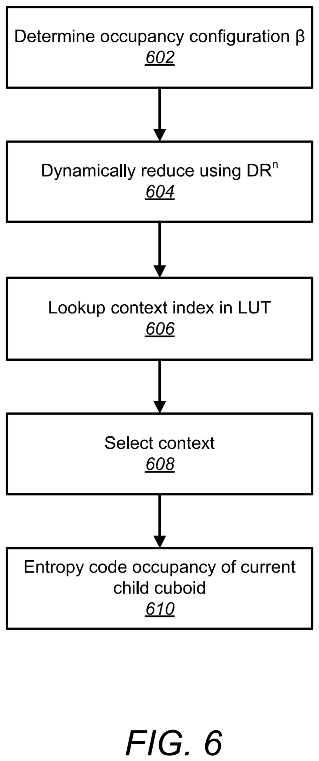

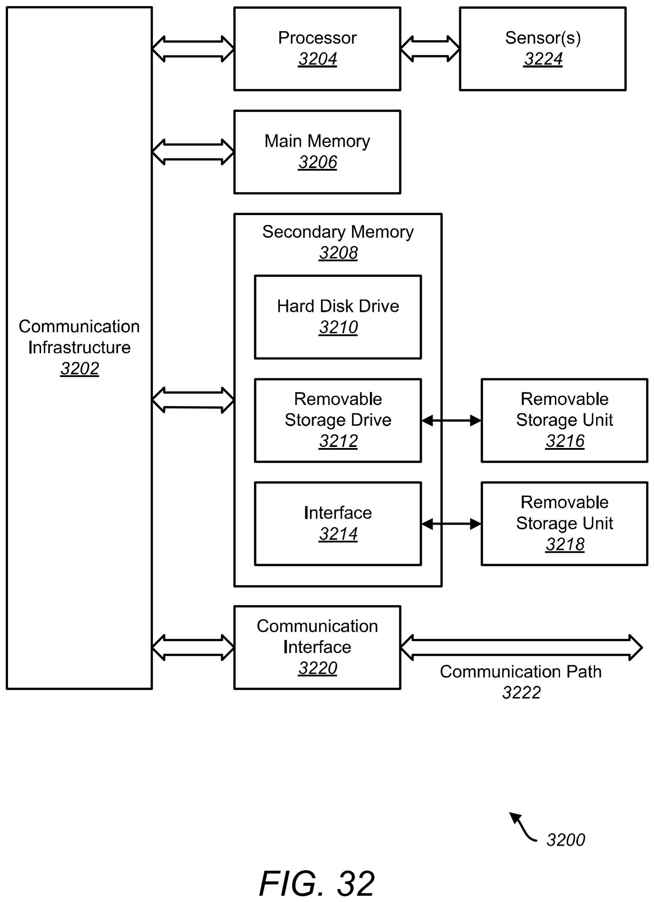

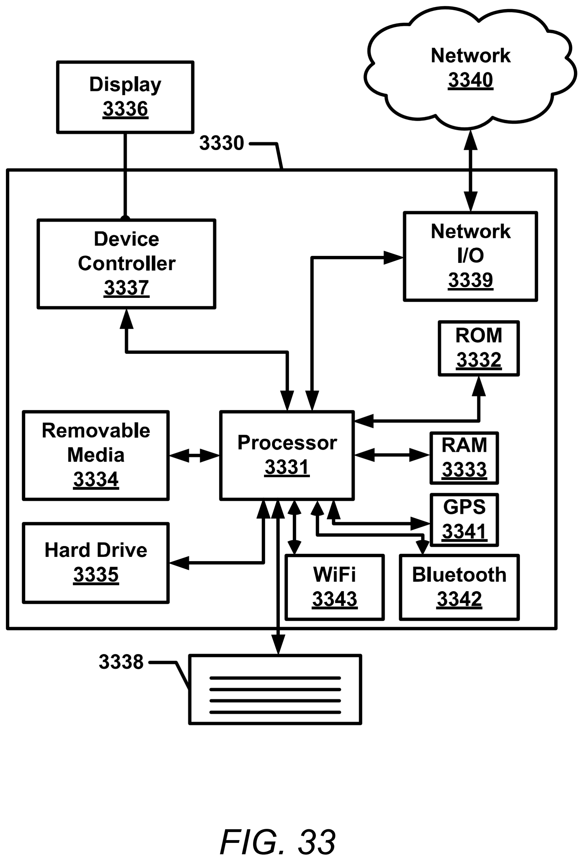

FIG. 6 shows an example method for coding occupancy of a cuboid using dynamic OBUF. More specifically, FIG. 6 shows an example method for coding occupancy bit of a current child cuboid using dynamic OBUF. One or more steps of FIG. 6 may be performed by an encoder and/or a decoder (e.g., the encoder 114 and/or decoder 120 in FIG. 1). All or portions of the flowchart may be implemented by a coder (e.g., the encoder 114 and/or decoder 120 in FIG. 1), an example computer system 3200 in FIG. 32, and/or an example computing device 3330 in FIG. 33.

At step 602, an occupancy configuration (e.g., occupancy configuration $\beta$) of the current child cuboid may be determined. The occupancy configuration (e.g., occupancy configuration $\beta$) of the current child cuboid may be determined, for example, based on occupancy bits of already-coded cuboids in a neighborhood of the current child cuboid. At step 604, the occupancy configuration (e.g., occupancy configuration $\beta$) may be dynamically reduced. The occupancy configuration may be dynamically reduced, for example, using a dynamic reduction function DR". For example, the occupancy configuration $\beta$ may be dynamically reduced into a reduced occupancy configuration $\beta' = DR^n(\beta)$. At step 606, context index may be looked up, for example, in a look-up table (LUT). For example, the encoder and/or decoder may look up context index $LUT[\beta']$ in the LUT of the dynamic OBUF. At step 608, context (e.g., probability model) may be selected. For example, the context (e.g., probability model) pointed to by the context index may be selected. At step 610, occupancy of the current child cuboid may be entropy coded. For example, the occupancy bit of the current child cuboid may be entropy coded (e.g., arithmetic coded), for example, based on the context. The occupancy bit of the current child cuboid may be coded based on the occupancy bits of the already-coded cuboids neighboring the current child cuboid.

Although not shown in FIG. 6, the encoder and/or decoder may update the reduction function and/or update the context index. For example, the encoder and/or decoder may update the reduction function $DR^n$ into $DR^{n+1}$ and/or update the context index $LUT[\beta']$, for example, based on the occupancy bit of the current child cuboid. The method of FIG. 6 may be repeated for additional or all child cuboids of parent cuboids corresponding to nodes of the occupancy tree in a scan order, such as the scan order discussed herein with respect to FIG. 3.

In general, the occupancy tree is a lossless compression technique. The occupancy tree may be adapted to provide lossy compression, for example, by modifying the point cloud on the encoder side (e.g., down-sampling, removing points, moving points, etc.). The performance of the lossy compression may be weak. The lossy compression may be a useful lossless compression technique for dense point clouds.

One approach to lossy compression for point cloud geometry may be to set the maximum depth of the occupancy tree to not reach the smallest volume size of one voxel but instead to stop at a bigger volume size (e.g., NxNxN cuboids (e.g., cubes), where N > 1). The geometry of the points belonging to each occupied leaf node associated with the bigger volumes may then be modeled. This approach may be particularly suited for dense and smooth point clouds that may be locally modeled by smooth functions such as planes or polynomials. The coding cost may become the cost of the occupancy tree plus the cost of the local model in each of the occupied leaf nodes.

A scheme for modeling the geometry of the points belonging to each occupied leaf node associated with a volume size larger than one voxel may use sets of triangles as local models. The scheme may be referred to as the "TriSoup" scheme. TriSoup is short for "Triangle Soup" because the connectivity between triangles may not be part of the models. An occupied leaf node of an occupancy tree that corresponds to a cuboid with a volume greater than one voxel may be referred to as a TriSoup node. An edge belonging to at least one cuboid corresponding to a TriSoup node may be referred to as a TriSoup edge. A TriSoup node may comprise a presence flag ($s_k$) for each TriSoup edge of its corresponding occupied cuboid. A presence flag ($s_k$) of a TriSoup edge may indicate whether a TriSoup vertex ($V_k$) is present or not on the TriSoup edge. At most one TriSoup vertex ($V_k$) may be present on a TriSoup edge. For each vertex ($V_k$) present on a TriSoup edge of an occupied cuboid, the TriSoup node corresponding to the occupied cuboid may comprise a position ($p_k$) of the vertex ($V_k$) along the TriSoup edge.

In addition to the occupancy words of an occupancy tree, an encoder may entropy encode, for each TriSoup node of the occupancy tree, the TriSoup vertex presence flags and positions of each TriSoup edge belonging to TriSoup nodes of the occupancy tree. A decoder may similarly entropy decode the TriSoup vertex presence flags and positions of each TriSoup edge and vertex along a respective TriSoup edge belonging to a TriSoup node of the occupancy tree, in addition to the occupancy words of the occupancy tree.

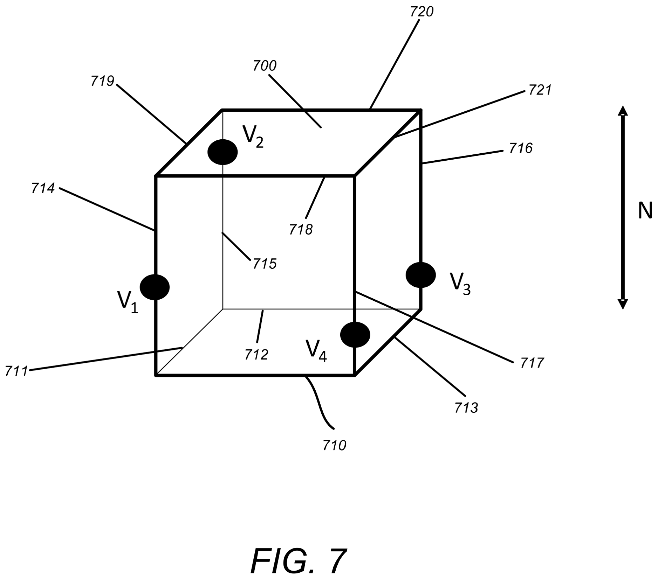

FIG. 7 shows an example of an occupied cuboid (e.g., cube) 700. More specifically, FIG. 7 shows an example of an occupied cuboid (e.g., cube) 700 of size NxNxN (where N > 1) that corresponds to a TriSoup node of an occupancy tree. An occupied cuboid 700 may comprise edges (e.g., TriSoup edges 710 - 721). The TriSoup node, corresponding to the occupied cuboid 700, may comprise a presence flag ($s_k$) for each edge (e.g., each TriSoup edge of the TriSoup edges 710-721). For example, the presence flag of a TriSoup edge 714 may indicate that a TriSoup vertex $V_1$ is present on the TriSoup edge 714. The presence flag of a TriSoup edge 715 may indicate that a TriSoup vertex $V_2$ is present on the TriSoup edge 715. The presence flag of a TriSoup edge 716 may indicate that a TriSoup vertex $V_3$ is present on the TriSoup edge 716. The presence flag of a TriSoup edge 717 may indicate that a TriSoup vertex $V_4$ is present on the TriSoup edge 717. The presence flags of the remaining TriSoup edges each may indicate that a TriSoup vertex is not present on their corresponding TriSoup edge. The TriSoup node, corresponding to the occupied cuboid 700, may comprise a position for each TriSoup vertex present along one of its TriSoup edges 710-721. More specifically, the TriSoup node, corresponding to the occupied cuboid 700, may comprise a position $p_1$ for TriSoup vertex $V_1$, a position $p_2$ for TriSoup vertex $V_2$, a position $p_3$ for TriSoup vertex $V_3$, and a position $p_4$ for TriSoup vertex $V_4$. The TriSoup vertices may be shared among TriSoup nodes along common TriSoup edge(s).

A presence flag ($s_k$) and, if the presence flag ($s_k$) may indicate the presence of a vertex, a position ($p_k$) of a current TriSoup edge may be entropy coded. The presence flag ($s_k$) and position ($p_k$) may be individually or collectively referred to as vertex information or TriSoup vertex information. A presence flag ($s_k$) and, if the presence flag ($s_k$) indicates the presence of a vertex, a position ($p_k$) of a current TriSoup edge may be entropy coded, for example, based on already-coded presence flags and positions, of present TriSoup vertices, of TriSoup edges that neighbor the current TriSoup edge. A presence flag ($s_k$) and, if the presence flag ($s_k$) may indicate the presence of a vertex, a position ($p_k$) of a current TriSoup edge (e.g., indicating a position of the vertex the edge is along) may be additionally or alternatively entropy coded. The presence flag ($s_k$) and the position ($p_k$) of a current TriSoup edge may be additionally or alternatively entropy coded, for example, based on occupancies of cuboids that neighbor the current TriSoup edge. Similar to the entropy coding of the occupancy bits of the occupancy tree, a configuration $\beta_{TS}$ for a neighborhood (also referred to as a neighborhood configuration $\beta_{TS}$) of a current TriSoup edge may be obtained and dynamically reduced into a reduced configuration $\beta_{TS}' = DR^n(\beta_{TS})$, for example, by using a dynamic OBUF scheme for TriSoup. A context index $LUT[\beta_{TS}']$ may be obtained from the OBUF LUT. At least a part of the vertex information of the current TriSoup edge may be entropy coded using the context (e.g., probability model) pointed to by the context index.

The TriSoup vertex position ($p_k$) (if present) along its TriSoup edge may be binarized. The TriSoup vertex position

($p_k$) (if present) along its TriSoup edge may be binarized, for example, to use a binary entropy coder to entropy code at least part of the vertex information of the current TriSoup edge. A number (e.g., quantity) of bits $N_b$ may be set for the quantization of the TriSoup vertex position ($p_k$) along the TriSoup edge of length N. The TriSoup edge of length N may be uniformly divided into $2^{Nb}$ quantization intervals. By doing so, the TriSoup vertex position ($p_k$) may be represented by $N_b$ bits ($p_k^j$, j=1, ..., $N_b$) that may be individually coded by the dynamic OBUF scheme as well as the bit corresponding to the presence flag ($s_k$). The neighborhood configuration $\beta_{TS}$, the OBUF reduction function DR", and the context index may depend on the nature, characteristic, and/or property of the coded bit (e.g., a presence flag ($s_k$), a highest position bit ($p_{k1}$), a second highest position bit ($p_{k2}$), etc.) of the coded bit (e.g., presence flag ($s_k$), highest position bit ($p_k^1$), second highest position bit ($p_k^2$), etc.). There may practically be several dynamic OBUF schemes, each dedicated to a specific bit of information (e.g., presence flag ($s_k$) or position bit ($p_k^j$)) of the vertex information.

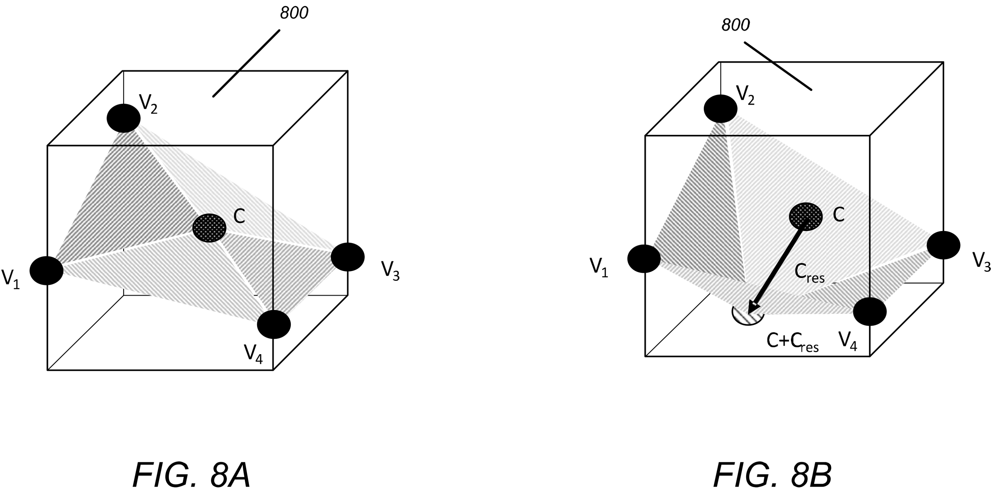

FIG. 8A shows an example cuboid 800 (e.g., a cube) corresponding to a TriSoup node. A cuboid 800 may correspond to a TriSoup node with a number K of TriSoup vertices $V_k$. Within cuboid 800, TriSoup triangles may be constructed from the TriSoup vertices $V_k$. TriSoup triangles may be constructed from the TriSoup vertices $V_k$, for example, if at least three (K≥3) TriSoup vertices are present on the TriSoup edges of cuboid 800. For example, with respect to FIG. 8A, four TriSoup vertices may be present and TriSoup triangles may be constructed. The TriSoup triangles may be constructed around the centroid vertex C defined as the mean of the TriSoup vertices $V_k$. A dominant direction may be determined, then vertices $V_k$ may be ordered by turning around this direction, and the following K TriSoup triangles (listed as triples of vertices) may be constructed: $V_1V_2C$, $V_2V_3C$, ..., $V_KV_1C$. The dominant direction may be chosen among the three directions respectively parallel to the axes of the 3D space to increase or maximize the 2D surface of the triangles, for example, if the triangles are projected along the dominant direction. By doing so, the dominant direction may be somewhat perpendicular to a local surface defined by the points of the point cloud belonging to the TriSoup node.

FIG. 8B shows an example refinement to the TriSoup model. The TriSoup model may be refined by coding a centroid residual value. A centroid residual value $C_{res}$ may be coded into the bitstream. A centroid residual value $C_{res}$ may be coded into the bitstream, for example, to use $C+C_{res}$ instead of C as a pivoting vertex for the triangles. By using $C+C_{res}$ as the pivoting vertex for the triangles, the vertex $C+C_{res}$ may be closer to the points of the point cloud than the centroid C, the reconstruction error may be lowered, leading to lower distortion at the cost of a small increase in bitrate needed for coding $C_{res}$.

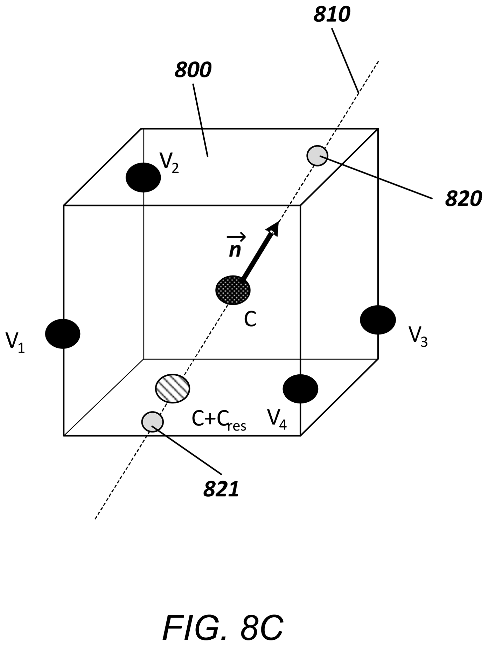

FIG. 8C shows an example of encoding a centroid residual value. An encoder may encode, for example, a centroid residual value $C_{res}$ into a bitstream. An adjusted centroid $C+C_{res}$ may be used instead of the centroid C for generating TriSoup triangles of a cuboid 800 (corresponding to a TriSoup node), for example, corresponding to a portion of a point cloud. The triangles may be generated based on the adjusted centroid $C+C_{res}$ and adjacent pairs of vertices of an ordering of the vertices $V_1$-$V_4$ (e.g., as described in FIG. 8A). The TriSoup triangles of the cuboid 800 may be voxelized (e.g., at the decoder), for example, to generate voxels representing (or modeling) the portion, of the point cloud, corresponding to the cuboid 800. The adjusted centroid $C+C_{res}$ may be used instead of the centroid C, for example, as a pivoting vertex for the triangles. A unitary vector $\vec{n}$ (e.g., also referred to as a unit vector or as a normalized vector) may be determined as a (normalized) mean and/or as a normalization of normal vectors to the triangles ($V_1V_2C$, $V_2V_3C$, ..., $V_KV_1C$). The triangles ($V_1V_2C$, $V_2V_3C$, ..., $V_KV_1C$) may be constructed by centroid C and pairs of the vertices of the cuboid 800, for example, by pivoting around the centroid C (e.g., as described in FIG. 8A). The unit vector $\vec{n}$ may be the normalized vector of the following mean of cross-products (e.g., representing areas of the triangles): $(\overrightarrow{V_1C} \times \overrightarrow{V_2C} + \overrightarrow{V_2C} \times \overrightarrow{V_3C} + ... + \overrightarrow{V_KC} \times \overrightarrow{V_1C})/K$. The unit vector $\vec{n}$ may be determined by dividing the mean vector (n) by the norm (or length) of the mean vector (i.e., $\vec{n}$ = n / ‖n‖).

A value resulting from each cross product is equal to an area of a parallelogram formed by the two vectors in the cross product. Therefore, the value may be representative of an area of a triangle formed by the two vectors because the area of the triangle is equal to half of the value. The unit vector $\vec{n}$ may be indicative of the direction normal to a local surface that is represented by the point cloud, for example, since the unit vector $\vec{n}$ indicates a direction of the triangles (e.g., TriSoup triangles) representing (e.g., modeling) the portion of the point cloud. A one-component residual $\alpha_{res}$ along the line (C, $\vec{n}$) 810 may be coded (e.g., encoded) instead of a 3D centroid residual value $C_{res}$, for example, to increase (e.g., maximize) the effect of the centroid residual value $C_{res}$ and/or to decrease (e.g., minimize) its coding cost. The 3D centroid residual value $C_{res}$ may be, for example, the one-component residual $\alpha_{res}$ multiplied by the unitary vector $\vec{n}$ (e.g., $C_{res} = \alpha_{res}\vec{n}$).

The encoder may determine the residual value $\alpha_{res}$. The encoder may determine the residual value of $\alpha_{res}$, for example, as the intersection between the current point cloud and the line (C, $\vec{n}$), which is along the same direction of the normalized vector $\vec{n}$. A set of points, of the portion of the point cloud, closest (e.g., within a threshold distance and/or a threshold number of/quantity of points) to the line may be determined. The set of points may be projected on the line and the residual value $\alpha_{res}$ may be the mean component along the line of the projected points. The mean may be a weighted mean, for example, whose weights may depend on a distance of the set of points from the line. A point from the set closer to the line may, for example, have a higher weight than another point from the set farther from the line.

The residual value $\alpha_{res}$ may be quantized. The residual value $\alpha_{res}$ may be quantized, for example, by a uniform quantization function that may have a quantization step similar to the quantization precision of the TriSoup vertices $V_k$. The

quantization error may be uniform over all vertices $V_k$ and/or $C+C_{res}$ such that the local surface may be uniformly approximated.

The residual value $\alpha_{res}$ may be binarized and/or coded (e.g., entropy coded) into the bitstream. The residual value $\alpha_{res}$ may be binarized and/or coded (e.g., entropy coded) into the bitstream, for example, by using a typical unary-based (coding) scheme. The residual value $\alpha_{res}$ may be coded, for example, using a set of flags. A flag $f_0$ may be coded, for example, to indicate if the residual value $\alpha_{res}$ is equal to zero. If the flag $f_0$ indicates the residual value $\alpha_{res}$ is zero, no further syntax elements may be needed. If $\alpha_{res}$ is not equal to zero, a sign bit may be coded and/or the residual magnitude $|\alpha_{res}|-1$ may be coded using an entropy code. The residual magnitude may be coded, for example, using a unary scheme that may code successive flags $f_i$ ($i \geq 1$) indicating if the residual value magnitude $|\alpha_{res}|$ is equal to 'i'. A binary entropy coder may binarize the residual value $\alpha_{res}$ into the flags $f_i$ ($i \geq 0$). A binary entropy coder may entropy code the binarized residual value and/or the sign bit.

Compression of the residual value $\alpha_{res}$ may be improved. Compression of the residual value $\alpha_{res}$ may be improved, for example, by determining bounds as shown in FIG. 8C. The line $(C, \vec{n})$ 810 may intersect the current cuboid 800 (corresponding to a TriSoup node) at two bounding points 820 and 821. The encoder may ensure that the point $C+C_{res}$ (e.g., the adjusted centroid vertex) is located between the two bounding points 820 and 821. By ensuring that the point $C+C_{res}$ is located between the two bounding points 820 and 821, this implies bounds on the (quantized) residual value $\alpha_{res}$ such that the (quantized) residual value $\alpha_{res}$ may belong to an integral interval *[m, M]*, where $m \leq 0 \leq M$. Some bits of the binarized residual value $\alpha_{res}$ may be inferred. $A_{res}$ may be necessarily equal to zero, for example, if *m=M=0.* The sign bit may be necessarily positive, for example, if *m=0<M.* The magnitude of the residual value $|\alpha_{res}|$ may be bounded by either |*m*| or *M* such that the magnitude may be coded by a truncated unary (coding) scheme that may infer the value of the last of successive flags $f_i$ ($i \geq 1$), for example, if the residual value $\alpha_{res}$ is not equal to zero and its sign is known.

The coder (e.g., the binary entropy coder) used to code the binarized residual value $\alpha_{res}$ may be a context-adaptive binary arithmetic coder (CABAC). The probability model (or context or entropy coder) used to code at least one bit ($f_i$ or sign bit) of the binarized residual value $\alpha_{res}$ may be updated, for example, depending on the value of the at least one bit ($f_i$ or sign bit) of the binarized residual value $\alpha_{res}$. The probability model of the coder (e.g., the binary entropy coder) may be determined, for example, based on contextual information. The contextual information may comprise the values of the bounds m and M, the location of vertices $V_k$, and/or the size of the TriSoup node (e.g., the cuboid 800). The selection of the coder (or the selection of the probability model of the coder) may be performed by a dynamic OBUF scheme that may use the contextual information described herein as entry (e.g., inputs).

The reconstruction of a decoded point cloud from a set of TriSoup triangles may be referred to as "voxelization" and may be performed, for example, by ray tracing or rasterization, for each triangle individually before duplicate voxels from the voxelized triangles are removed.

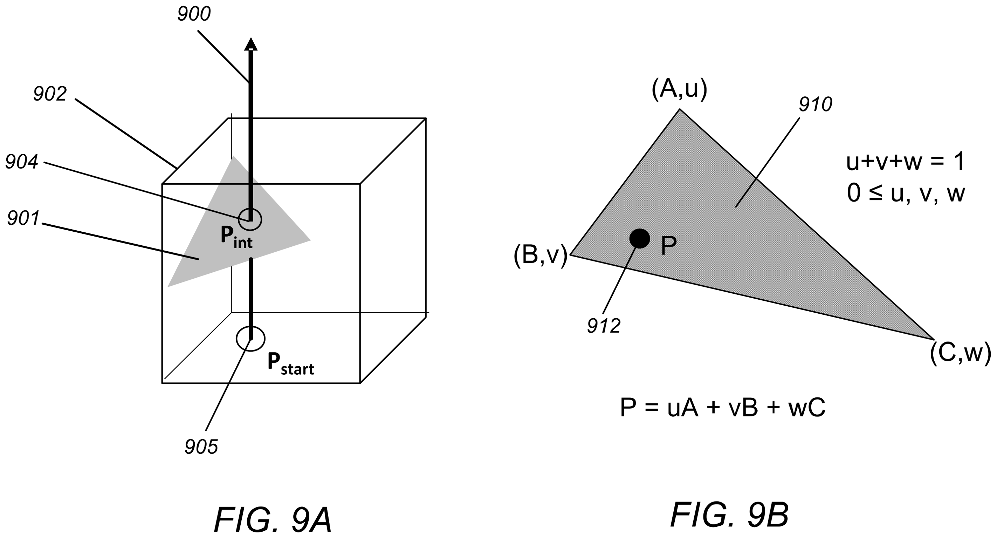

FIG. 9A shows an example of voxelization using ray tracing. Ray-triangle intersection algorithms, such as the Möller-Trumbore algorithm, may take advantage of launching rays, for example, to determine whether rays intersect with TriSoup triangles and if so, at what points of the TriSoup triangles. Rays may be launched from integral coordinates that correspond to the centers of voxels. As shown in FIG. 9A, rays, for example, ray 900 may be launched substantially parallel to one of the three coordinate axes of the 3D space, starting from integral coordinates (sometimes referred to as integer coordinates) such as an origin point 905 (shown as origin or starting point $P_{start}$ in FIG. 9A).

An intersection point 904 (shown as $P_{int}$ in FIG. 9A), if any, between ray 900 and a TriSoup triangle 901 belonging to a cube 902, corresponding to a TriSoup node, may be rounded (or, e.g., quantized) to obtain a decoded point corresponding to a voxel. A ray, for example, launched substantially parallel to a coordinate axis in 3D space, may intersect a TriSoup triangle. The ray may intersect the TriSoup triangle, for example, if and only if the projection, along the ray direction, of the center of a voxel belongs to the TriSoup triangle. In other words, the ray may be determined to intersect the TriSoup triangle if the point of intersection corresponds to the center of the voxel. This intersection may be determined, for example, by using a ray-triangle intersection algorithm (e.g., tracing or ray casting technique) such as the Möller-Trumbore algorithm to generate voxels representing the triangle.

Ray tracing techniques such as the Möller-Trumbore algorithm is based on generating, with respect to a triangle, barycentric coordinates of points of intersection between rays and a plane of the triangle. Then, points of the triangle may be determined from the barycentric coordinates.

FIG. 9B shows an example of voxelization using barycentric coordinates. More particularly, FIG. 9B shows an example of voxelization using barycentric coordinates (u, v, w) of a point 912 (P) relative to a TriSoup triangle 910 having vertices labeled A, B, and C in the 3D space. Point 912 may be determined as an intersection between a ray and a plane of TriSoup triangle 910 (e.g., containing or passing through the three vertices A, B, and C of TriSoup triangle 910). The ray may be launched, for example, substantially parallel to one of the three coordinate axes in 3D space. In some examples, this intersection point 912 may be uniquely represented as a sum of the three vertices of TriSoup triangle 910:

$$P = uA + vB + wC$$

under the condition u + v + w = 1. Therefore, any point P of the plane (containing TriSoup triangle 910) has unique coordinates (u,v,w) in the barycentric coordinate system. A point with barycentric coordinates (u,v,w) may include an ordered triple of numbers u, v, and w. A point with barycentric coordinates (u,v,w) that sum to 1 (e.g., u + v + w = 1) may be referred to as homogeneous barycentric coordinates and/or normalized barycentric coordinates. The barycentric coordinates of the intersection point with respect to TriSoup triangle 910 may be determined using algorithms, for example, the Möller-Trumbore algorithm.

By converting points with Cartesian coordinates in 3D space to homogeneous barycentric coordinates, the three vertices A, B, C of TriSoup triangle 910 may comprise respective barycentric coordinates A(1,0,0), B(0,1,0) and C(0,0,1). The convex hull (e.g., the TriSoup triangle 910) of the three vertices A, B, and C may be equal to the set of all points such that the barycentric coordinates u, v, and w is each greater than or equal to zero:

$$0 \quad \leq u, v, w$$

Therefore, the intersection point may be determined to belong to TriSoup triangle 910, for example, based on the intersection point having barycentric coordinates with an ordered triple of values that are each greater than or equal to zero. Relatedly, if at least one of barycentric coordinates (i.e., one of u, v, or w) is negative or less than 0, then the intersection point may be determined to not belong to TriSoup triangle because it will be on the plane, but not on an edge or within the TriSoup triangle. A point determined to belong to TriSoup triangle 910 may be the ray intersecting TriSoup triangle 910 (e.g., within or at an edge of TriSoup triangle 910).

Attribute coding may comprise a process to code attributes of a current point cloud. The attributes may comprise, for example, attributes associated with the geometry of the current point cloud. Attribute coding may be performed (e.g., globally) on the decoded (e.g., reconstructed) geometry of a current point cloud. Global coding may induce high memory traffic and/or footprint as well as high computation complexity. A two-pass encoding/decoding process may be required in at least some applications. In the two-pass encoding/decoding process, encoding/decoding may be performed on the attributes, for example, after completion of geometry encoding/decoding. Such two-pass encoding/decoding may induce even higher memory traffic and/or footprint as well as overall latency, for example, before outputting geometry and attributes of a first point of the decoded point cloud.

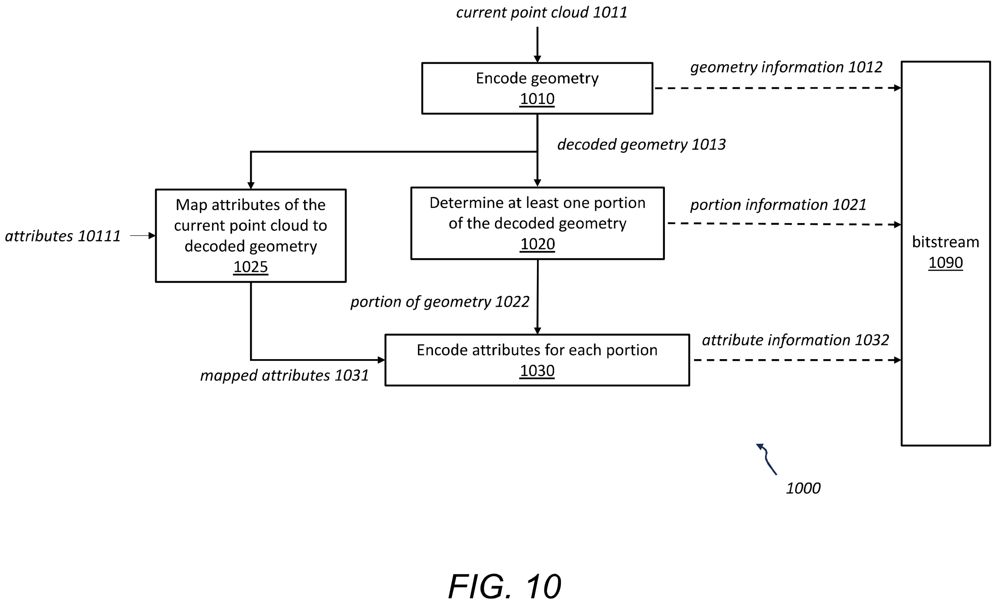

Local coding of attributes may be enabled. For example, Attribute Coding Units (ACU) has been introduced to enable local coding of attributes. ACU may be determined by dividing (e.g., segmenting) an overall decoded geometry (e.g., decoded geometry 1013 of FIG. 10) of a current point cloud (e.g., current point cloud 1011 of FIG. 10) into a set of ACUs. Each ACU may comprise (e.g., contain) a portion of geometry of the decoded geometry. The portion of geometry may indicate 3D positions in the 3D space of a subset of points of the decoded geometry (e.g., as decoded by a decoder or encoded and then decoded by an encoder). Points of the decoded geometry may refer to voxels, as described herein.

The attribute coding (e.g., encoding/decoding) may be localized to portions of the overall decoded geometry, and the attribute coding of each ACU (associated with each portion of geometry of the current point cloud) may be processed locally. Local attribute coding may bring advantages such as reduced memory traffic and footprint as well as computation complexity, for example, compared to global attribute coding.

Local attribute coding may be realized in various ways. For example, the geometry of the current point cloud may be restricted to a subset of nodes of the occupancy tree, and the restricted geometry and the associated attributes may be encoded/decoded locally by segmenting the restricted geometry into ACUs. For example, the 3D space encompassing a point cloud may be split into regions defined by subsets of nodes of the occupancy tree. The geometry of a (e.g., each) region of the 3D space may be encoded to obtain a part of the decoded geometry of the current point cloud, and this part may be segmented into a set of ACUs that are attribute encoded. For example, the geometry of a first region of the 3D space may be encoded to obtain a first part of the decoded geometry of the current point cloud. The first part may be segmented into a first set of ACUs that are attribute encoded. The geometry of a second region of the 3D space may be encoded to obtain a second part of the decoded geometry of the current point cloud. The second part may be segmented into a second set of ACUs that are attribute encoded. The memory footprint and traffic may be limited within a few regions, for example, due to neighborhood prediction between regions. The latency of point cloud codec may be reduced to the time needed for encoding geometry and attributes of a few regions. Smaller regions may lead to smaller memory footprint and traffic as well as shorter latency. The regions may be slices (also referred to as bricks) of a volume encompassing/containing the point cloud.

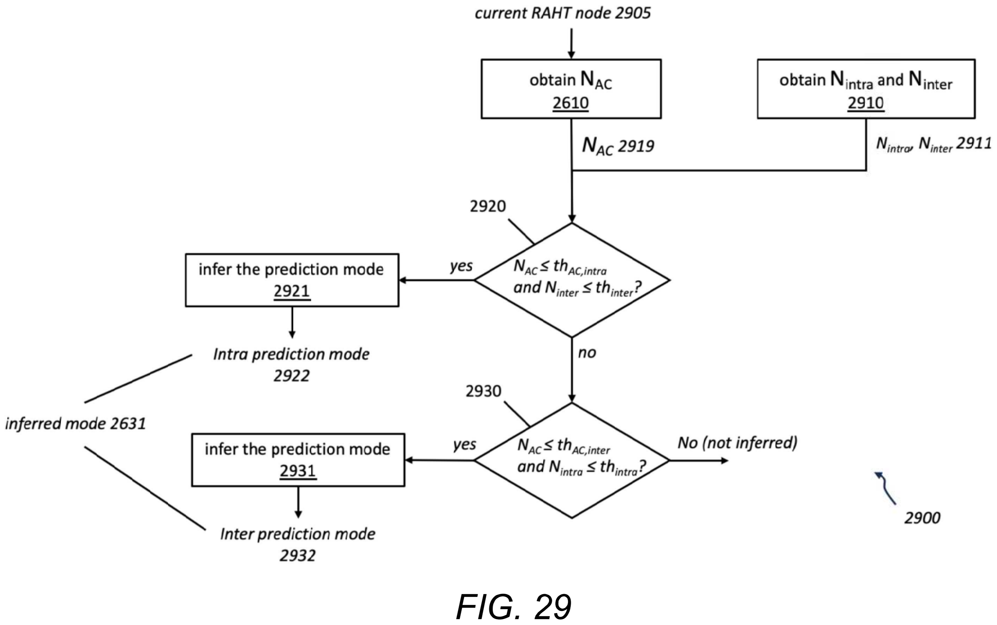

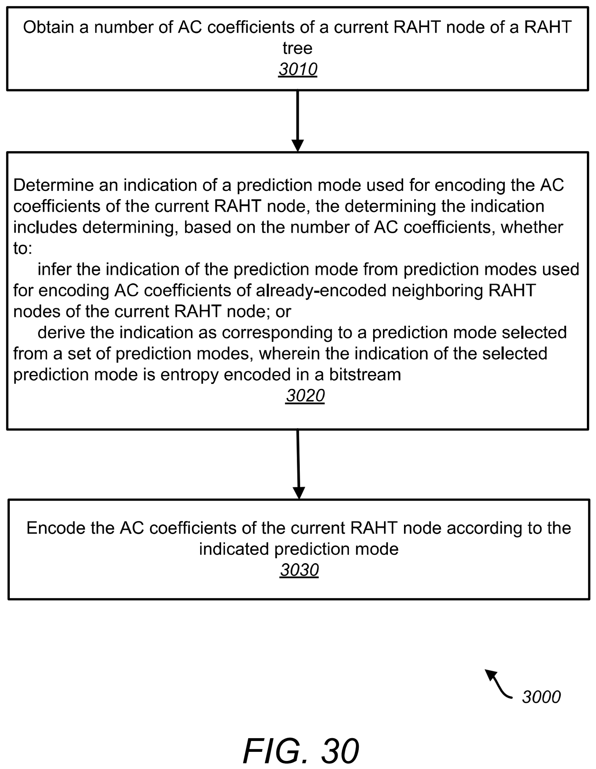

FIG. 10 shows an example method for encoding a point cloud. More specifically, FIG. 10 shows an example process 1000 of a method for encoding geometry and attributes of a current point cloud 1011. One or more steps of the example process 1000 may be performed and/or implemented by an encoder (e.g., encoder 114 of FIG. 1), an example computer system 2900 as described herein with respect to FIG. 29, and/or an example computing device 3030 as described herein with respect to FIG. 30. In some examples, steps 1010-1030 may represent components within the encoder. The current point cloud 1011 may be a point cloud frame of a sequence of point cloud frames of a dynamic point cloud.

At step 1010, an encoder may encode geometry. The encoder may encode geometry of the current point cloud. The encoder may encode geometry information 1012 representative of the geometry of the current point cloud 1011. The encoder may encode geometry information 1012 representative of the geometry of the current point cloud 1011, for example, into a bitstream 1090. The encoder may obtain a decoded (e.g., reconstructed) geometry 1013 of the point cloud 1011 as discussed herein.

At step 1020, the encoder may determine at least one portion (e.g., portion of geometry 1022) of the decoded geometry 1013. Each portion of geometry 1022 may comprise a subset of points of the decoded geometry 1013. For example, each portion of geometry 1022 may comprise positions (e.g., 3D positions) in the 3D space of the subset of points. In some examples, the decoded geometry 1013 may be divided (e.g., segmented) into a set of ACUs, and each ACU of the set of ACUs may comprise a respective portion of geometry 1022 of the decoded geometry 1013.

The encoder may encode portion information 1021. The encoder may encode portion information 1021, for example, in the bitstream 1090. The portion information 1021 may be part of the attribute information 1032. The portion information 1021 may indicate segmentation selections of the decoded geometry 1013 into the set of ACUs. For example, the portion information 1021 may indicate how the decoded geometry 1013 is segmented into the set of ACUs.

Attributes of the current point cloud 1011 (e.g., attributes associated with the points of the current point cloud) may be coded. Attributes of the current point cloud 1011 may be coded, for example, after the coding (e.g., encoding and/or decoding) of the geometry (e.g., underlying geometry) has been performed. The encoder may have direct access to the attribute values associated with the decoded geometry. The encoder may have direct access to the attribute values associated with the decoded geometry, for example, if the geometry coding is a lossless coding. A lossless coding may be performed, for example, by using an octree scheme. The attributes associated with each point of the current point cloud may be the attributes associated with the corresponding point of the decoded geometry 1013.

The decoded geometry 1013 may differ from the geometry of the current point cloud. The decoded geometry 1013 may differ from the geometry of the current point cloud, for example, if the geometry coding is a lossy coding. A lossy coding may be performed, for example, by using a TriSoup scheme. The attributes 10111 of the current point cloud 1011 may be mapped, by the encoder and from the geometry of the current point cloud 1011, to the decoded geometry 1013. The attributes 10111 of the current point cloud 1011 may be mapped to the decoded geometry 1013, for example, to determine mapped attributes 1031 associated with the decoded geometry 1013. For example, the mapped attributes 1031 may be assigned to each point of the decoded geometry 1013.

At step 1025, the encoder may map attributes of the current point cloud to decoded geometry. The encoder may determine mapped attributes 1031 of the decoded geometry 1013, for example, by mapping the attributes 10111 of the current point cloud 1011 to the decoded geometry 1013.

As discussed herein, attributes may indicate a property of a point's visual appearance such as texture, color, material, transparency, reflectance, time stamp, velocity, etc. For attributes that are colors, this attribute mapping performed by the encoder may be known as a recoloring process. The attribute mapping for attributes that are colors may be known as a recoloring process, for example, because the colors of the original geometry are used to color (e.g., recolor) the decoded geometry.

Mapped attributes may be determined based on various methods. In some examples, attributes may comprise colors and the mapped attributes may be determined based on recoloring the attributes. In some examples, mapped attributes may be determined based on a k nearest neighbor (KNN) search algorithm. The KNN search algorithm may use, for example, a space partitioning algorithm such as a k-dimensional (KD, or k-d) Tree search, a Ball/metric Tree search, brute force search, etc. The KNN search algorithm may be used, for example, to determine nearest points from the geometry of the current point cloud 1011 to the decoded geometry 1013. For example, a mapped attribute of a point of the decoded geometry 1013 may be the average attribute values associated with the nearest points of the current point cloud 1011 relative to the point of the decoded geometry 1013. In some examples, the decoded geometry 1013 may be the same as the geometry of the current point cloud 1011. The decoded geometry 1013 may be the same as the geometry of the current point cloud 1011, for example, if/when the geometry compression is lossless. In these examples, the attribute mapping may associate attributes of each point of the current point cloud 1011 to the same point of the decoded geometry 1013.

At step 1030, the encoder may encode attributes for each portion of geometry 1022. The encoder may encode the mapped attributes 1031 associated with each portion of geometry 1022, for example, in the bitstream 1090. The attributes of points associated with a portion of geometry 1022 may be encoded. The attributes of points associated with a portion of geometry 1022 may be encoded, for example, before encoding the attributes of points belonging to another portion of the decoded geometry 1013. Attribute encoding may be performed locally. The encoder may encode attribute information 1032 representing the encoded attributes.

Attributes associated with portions of the decoded geometry 1013 may be encoded based on a selected order. For example, attributes associated with portions of the decoded geometry 1013 may be encoded based on a scanning order. The encoder may distinguish between already encoded/decoded portions of the decoded geometry 1013 (e.g., portions of the decoded geometry 1013 whose attributes have been encoded/decoded) and other portions of the decoded geometry 1013 (e.g., portions of the decoded geometry 1013 whose attributes have not been encoded/decoded).

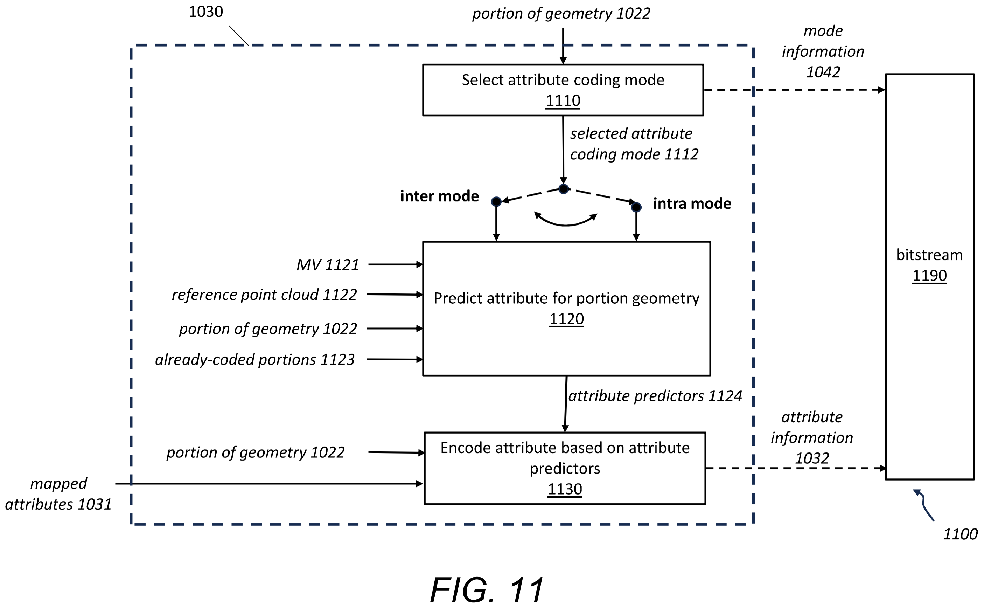

FIG. 11 shows an example method for encoding attributes. More specifically, FIG. 11 shows an example process 1100 of a method for encoding attributes associated with a portion of geometry 1022 of the decoded geometry 1013. One or more steps of the example process 1100 may be performed and/or implemented by an encoder (e.g., encoder 114 of FIG. 1), an example computer system 2900 as described herein with respect to FIG. 29, and/or an example computing device 3030 as described herein with respect to FIG. 30. In some examples, steps 1110-1130 may represent components within the encoder.

Process 1100 may comprise operations of step 1030 that may encode mapped attributes 1031 associated with the portion of geometry 1022 as attribute information 1032. The step 1030 may encode mapped attributes 1031 associated with the portion of geometry 1022 as attribute information 1032, for example, in a bitstream 1190.

At step 1110, an encoder may select an attribute coding mode. An encoder may select an attribute coding mode 1112 for encoding the attributes of the portion of geometry 1022. The encoder may encode mode information 1042 that indicates the selected attribute coding mode 1112. The encoder may encode mode information 1042 that indicates the selected attribute coding mode 1112, for example, in the bitstream 1190. For example, the attribute information 1032 encoded in the bitstream 1190 may comprise the mode information 1042.

The selection step 1110 of the attribute coding mode 1112 may be performed in implementations of point cloud coding. In some implementations of point cloud coding, the selection step 1110 of the attribute coding mode 1112 by the process 1100 may be performed by a Rate-Distortion Optimization (RDO). In the RDO, the attribute coding mode 1112 may be selected as being a candidate attribute coding mode with a smallest cost (e.g., $C_{mode}$) from a list of candidate attribute coding modes. The cost (e.g., $C_{mode}$) of a candidate attribute coding mode may be determined (e.g., computed) as a Lagrange cost. The Lagrange cost may be a combination of a bitrate (e.g., $R_{mode}$) and a distortion (e.g., $D_{mode}$). The Lagrange cost may be determined, for example, based on $C_{mode} = D_{mode} + \lambda*R_{mode}$, where $\lambda>0$ and is a fixed Lagrange parameter. The bitrate (e.g., $R_{mode}$) may be obtained for a candidate attribute coding mode as being a sum of bitrates caused by coding both the mode information 1042 and the attribute information 1032 in the bitstream 1190. The distortion (e.g., $D_{mode}$) may be obtained for the candidate attribute coding mode by comparing the attributes associated with portion of geometry 1022 with decoded attributes associated with the decoded portion of geometry 1222. The distortion (e.g., $D_{mode}$) may be obtained based on the candidate attribute coding mode.

RDO may put a plurality of (e.g., many) candidate attribute coding modes in competition. The plurality of candidate attribute coding modes may (e.g., usually) include at least one inter-prediction-based attribute coding mode and at least one intra-prediction-based attribute coding mode. An inter-prediction-based attribute coding mode may be an attribute coding mode using attribute predictors obtained based on an inter-prediction mode. An intra-prediction-based attribute coding mode may be an attribute coding mode using attribute predictors obtained based on an intra-prediction mode.

At step 1120, the encoder may determine (e.g., predict) attribute(s) for portion of geometry. The encoder may determine attribute predictors 1124 of attributes associated with the portion of geometry 1022. For example, for each point of the portion of geometry 1022, one respective attribute predictor may be determined for predicting the attribute associated with that point.

At step 1120, the encoder may determine attribute predictors 1124 based on a selected attribute coding mode. For example, if/when an inter-prediction-based attribute coding mode is selected, the encoder may determine/obtain attribute predictors 1124 from an inter-prediction attribute parametric model. The inter-prediction attribute parametric model may be based on a Motion Vector (MV) field 1121, reference point cloud (e.g., for attributes, i.e., reference point cloud for attributes) 1122, and the portion of geometry 1022. Parameters of the inter-prediction attribute parametric model may be determined/set based on (e.g., by) the selected attribute coding mode 1112. For example, if/when an intra-prediction-based attribute coding mode is selected, the encoder may determine attribute predictors 1124 from an intra-prediction attribute parametric model. The intra-prediction attribute parametric model may be based on at least one already-coded (e.g., already-decoded) portion 1123 of the decoded geometry 1013. Parameters of the intra-prediction attribute parametric model may be determined/set based on (e.g., by) the selected attribute coding mode 1112.

At step 1130, the encoder may encode attribute(s) based on attribute predictors. The encoder may encode the mapped attributes 1031 associated with the portion of geometry 1022 based on the attribute predictors 1124. The encoder may encode the mapped attributes 1031 associated with the portion of geometry 1022 as attribute information 1032, for example, in the bitstream 1190.

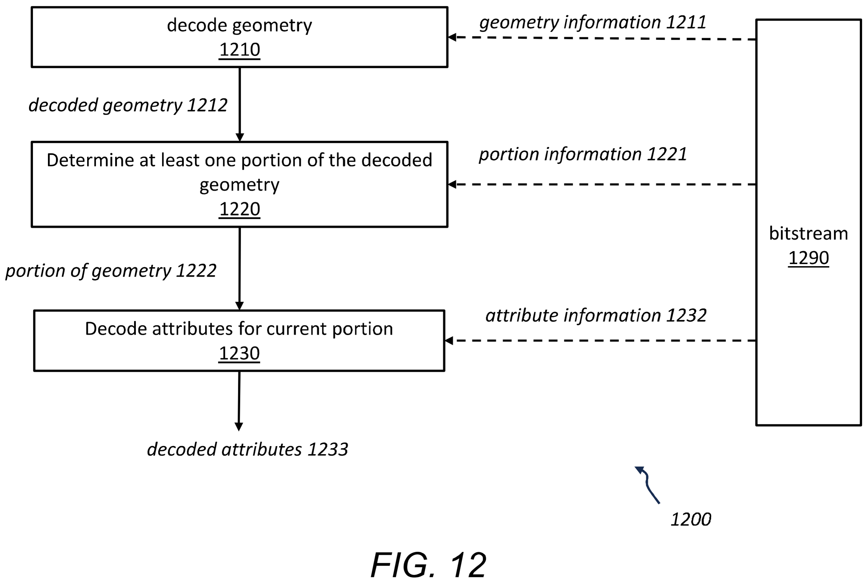

FIG. 12 shows an example method for decoding a point cloud. More specifically, FIG. 12 shows an example process 1200 of a method for decoding geometry and attributes of a current point cloud. One or more steps of the example process 1200 may be performed and/or implemented by a decoder (e.g., decoder 120 of FIG. 1), an example computer system 2900 as described herein with respect to FIG. 29, and/or an example computing device 3030 as described herein with respect to FIG. 30. In some examples, steps 1210-1230 may represent components within the decoder.

The decoded point cloud may be a point cloud frame of a sequence of point cloud frames of a dynamic point cloud. The decoded point cloud may comprise decoded geometry 1212 and decoded attributes 1233. Each decoded attribute 1233 may be associated with one point of the decoded geometry 1212.

At step 1210, a decoder may decode geometry. A decoder may obtain a decoded geometry 1212 by decoding geometry information 1211 from a bitstream 1290, as discussed herein. For example, the bitstream 1290 may be generated by the encoding method of FIG. 10.

At step 1220, the decoder may determine at least one portion of the decoded geometry 1212. For example, the decoded geometry 1212 may be divided (e.g., segmented) into a set of ACUs. Each ACU of the set of ACUs may comprise a respective portion of geometry 1222 of the decoded geometry 1212. For example, the portion of geometry 1222 may comprise positions in the 3D space of a subset of points of the decoded geometry 1212. The decoder may decode portion information 1221 from the bitstream 1290. The decoder may decode portion information 1221, for example, from (e.g., part of) attribute information 1232. The portion information 1221 may indicate segmentation selections of the decoded geometry 1212 into the set of ACUs. For example, the portion information 1221 may indicate how the decoded geometry 1212 is segmented into the set of ACUs.

At step 1230, the decoder may decode attributes for the current portion of geometry. The decoder may obtain decoded attributes 1233 associated with a (e.g., each) portion of geometry 1212. The decoder may obtain decoded attributes 1233 associated with a (e.g., each) portion of geometry 1212, for example, by decoding attribute information 1232. The attributes of points associated with a portion of geometry 1222 may be decoded. The attributes of points associated with a portion of geometry 1222 may be decoded, for example, before decoding the attributes of points belonging to another portion of the decoded geometry 1212.

Attributes associated with portions of the decoded geometry 1212 may be decoded based on a selected order. For example, attributes associated with portions of the decoded geometry 1212 may be decoded based on (or according to) a scanning order. The decoder may distinguish between already decoded portions of the decoded geometry 1212 (e.g., portions of the decoded geometry 1212 whose attributes have been decoded) and other portions of the decoded geometry 1212 (e.g., portions of the decoded geometry 1212 whose attributes have not been decoded).

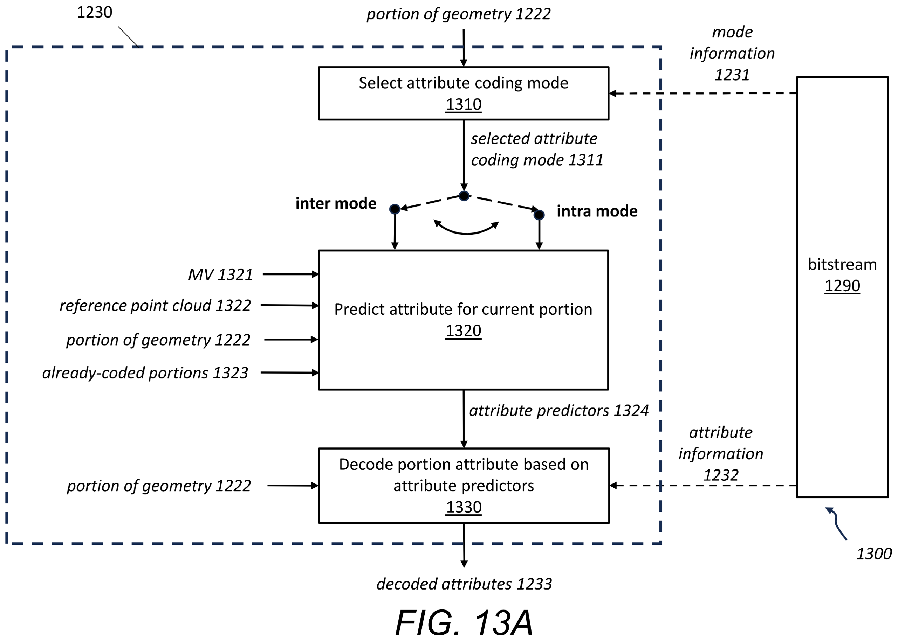

FIG. 13A shows an example method for decoding attributes. More specifically, FIG. 13A shows an example process 1300 of a method for decoding attributes associated with a portion of geometry 1222 of the decoded geometry 1212. One or more steps of the example process 1300 may be performed and/or implemented by a decoder (e.g., decoder 120 of FIG. 1), an example computer system 2900 as described herein with respect to FIG. 29, and/or an example computing device 3030 as described herein with respect to FIG. 30. In some examples, steps 1310-1330 may represent components within the decoder.

Process 1300 may comprise operations of step 1230 that may obtain decoded attributes 1233 associated with portion of geometry 1222. The step 1230 may obtain decoded attributes 1233 associated with portion of geometry 1222, for example, by decoding attribute information 1232 from the bitstream 1290.

At step 1310, a decoder may select an attribute coding mode. A decoder may select an attribute coding mode 1311 for decoding the attributes of the portion of geometry 1222. The decoder may decode mode information 1231 that indicates the selected attribute coding mode 1311. The decoder may decode mode information 1231 that indicates the selected attribute coding mode 1311, for example, from the bitstream 1290. For example, the mode information 1231 may indicate either intra-prediction attribute coding mode or inter-prediction attribute coding mode.

At step 1320, the decoder may determine (e.g., predict) attribute(s) for current portion of geometry. The decoder may determine attribute predictors 1324 of attributes associated with the portion of geometry 1222. For example, for each point of the portion of geometry 1222, one respective attribute predictor is determined for predicting the attribute associated with that point.

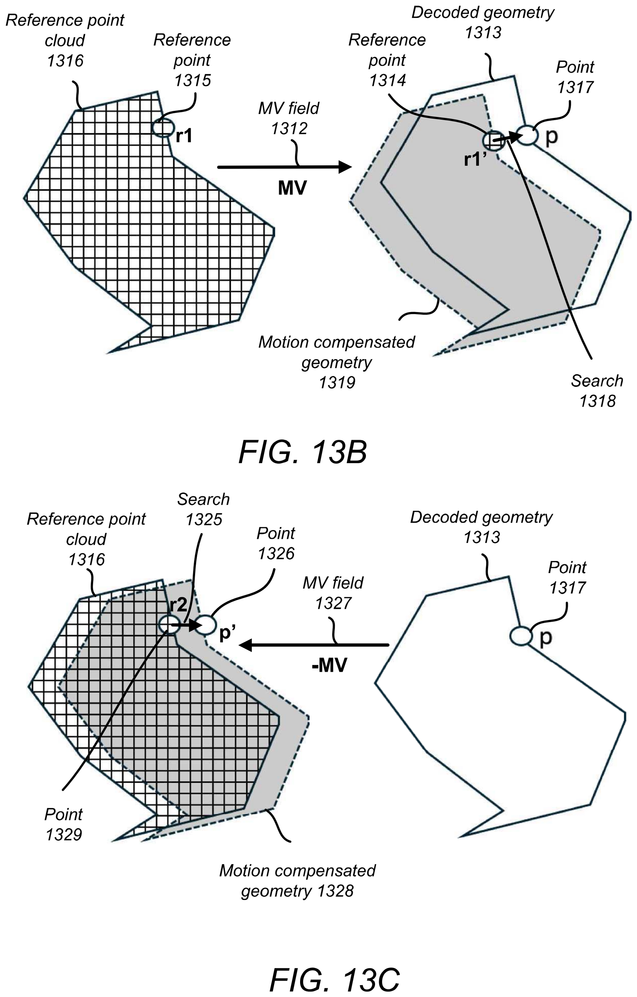

At step 1320, the decoder may determine attribute predictors 1324 based on a selected attribute coding mode. For example, if/when an inter-prediction attribute coding mode is selected, the decoder may determine/obtain attribute predictors 1324 from an inter-prediction attribute parametric model. The inter-prediction attribute parametric model may be based on a Motion Vector (MV) field 1321, reference point cloud (e.g., for attributes) 1322, and the portion of geometry 1222. Parameters of the inter-prediction attribute parametric model may be determined/set based on (e.g., by) the selected attribute coding mode 1311. For example, FIGS. 13B and 13C described below show two examples of the inter-prediction attribute parametric model. The inter-prediction attribute parametric model may be applied to project (used for projecting) attributes of the reference point cloud (e.g., for attributes) 1322 onto the portion of geometry 1222 to determine attribute predictors 1324 for attributes of points/vertices of the portion of geometry 1222.

FIG. 13B shows an example of an inter-prediction attribute parametric model. More specifically, FIG. 13B shows an example of point-to-point projection distance between a point of the portion of (decoded) geometry 1313 and its nearest neighbor point of a motion compensated geometry 1319.

The motion compensated geometry 1319 may be obtained by motion compensation of the reference point cloud (e.g., for attributes) 1316. The motion compensated geometry 1319 may be obtained by motion compensation of the reference point cloud (e.g., for attributes) 1316, for example, based on MV field 1312. The reference point cloud (e.g., for attributes) 1316 may be the reference point cloud (e.g., for attributes) 1122, 1322. The portion of the geometry 1313 may be the portion of geometry 1022, 1222.

The MV field 1312 may comprise a set of motion vectors including a motion vector MV. The MV may be used to move (e.g., translate) reference point 1315 (r1) of the reference point cloud (e.g., for attributes) 1316 to a reference point 1314 (rl') of the motion compensated geometry 1319. The nearest point of the motion compensated geometry 1319, in a neighborhood of the point 1317 of the portion of geometry 1313, may comprise reference point 1314. The nearest point (e.g., reference point 1314) may be selected in a search 1318. The nearest point (e.g., reference point 1314) may be selected in a search 1318, for example, by minimizing a point-to-point projection distance between each candidate point of the motion compensated geometry 1319 in the neighborhood of the point 1317, and the point 1317. Discontinuities of the motion compensated geometry 1319 may be introduced. Discontinuities of the motion compensated geometry 1319 may be introduced, for example, due to MV field 1312 which may not provide a granular translation of points. For example, MV field 1312 may include one MV applied to (e.g., used for) reference point cloud (e.g., for attribute) 1316. MV field 1312 may include an MV determined for a set of cuboids or per cuboid of reference point cloud (e.g., for attributes) 1316. The MV may not be determined per point of reference point cloud (e.g., for attributes) 1316 due to high complexity. As search 1318 may be performed on points of the motion compensated geometry 1319, the entirety of the motion compensated geometry 1319 may need to be generated and maintained, so that search 1318 for each point of the portion of geometry 1313 may be performed. For example, the entirety of the motion compensated geometry 1319 may need to be generated and maintained before search 1318 for each point of the portion of geometry 1313 may be performed.

A point-to-point projection distance may be determined (e.g., calculated) between a point of the portion of geometry 1313 and its nearest neighbor point of a motion compensated geometry 1319. A (e.g., each) point-to-point projection distance may be a difference between a point of the reference point cloud (e.g., for attributes) 1316 and its nearest neighbor point of a motion compensated geometry 1319. The motion compensated geometry 1319 may be obtained by performing motion compensation of the portion of the geometry 1313. The motion compensated geometry 1319 may be obtained by motion compensation of the decoded geometry of the current point cloud based on MV field.

FIG. 13C shows an example of an inter-prediction attribute parametric model. More specifically, FIG. 13C shows an example of point-to-point projection distance between a point 1329 of the reference point cloud (e.g., for attributes) 1316 and its nearest neighbor point of a motion compensated geometry 1328.

The motion compensated geometry 1328 may be obtained by motion compensation of the portion of geometry 1313. The motion compensated geometry 1328 may be obtained by motion compensation of the portion of geometry 1313, for example, based on MV field 1327. The MV field 1327 may comprise a motion vector -MV that is the inverse (e.g., having an opposite sign) of the MV field 1312. For example, point 1317 of the portion of geometry 1313 may be moved (e.g., translated) by a motion vector -MV of MV field 1327 to determine a motion-compensated position for point 1317. The motion-compensated position for point 1317 may be shown as point 1326 (p') of the motion compensated geometry 1328. The nearest point of the motion compensated geometry 1328, in a neighborhood of the point 1329 of the reference point cloud (e.g., for attributes) 1316, may comprise point 1326. The nearest point (e.g., point 1326) may be selected in a search 1325. The nearest point (e.g., point 1326) may be selected in a search 1325, for example, by minimizing a point-to-point projection distance between each candidate point of the motion compensated geometry 1328 in the neighborhood of the point 1329, and the point 1329 of the reference point cloud (e.g., for) attributes 1316.

The attribute projection quality may be determined. The attribute projection quality may be determined, for example, based on a comparison of the mapped attributes and the corresponding projected attributes. The attribute projection quality determining may be performed by the comparison of attributes expressed on a same geometry (e.g., the portion of the (decoded) geometry 1313), for example, to avoid any geometry discrepancy. The attribute projection quality may be based on differences between compared attributes. An attribute may be represented as a vector. An attribute difference may be determined (e.g., computed) as an attribute distance between vectors representing attributes that are compared. Attribute distance and attribute difference may be used interchangeably herein.

The attribute projection quality may be based on point-to-point attribute distances calculated for the set of points of the portion of geometry. The attribute projection quality may be an average or a maximum of the point-to-point attributes distances. A point-to-point attribute distance may be a difference between attributes associated with a point of the set of points of the portion of geometry and corresponding projected attributes associated with this point.

Returning to FIG. 13A, at step 1320, if/when an intra-prediction attribute mode is selected, the decoder may determine attribute predictors 1324 from an intra-prediction attribute parametric model. The intra-prediction attribute parametric model may be based on at least one already-coded (e.g., already-decoded) portion 1323 of the geometry 1222. Parameters of the intra-prediction attribute parametric model may be determined/set based on (e.g., by) the selected attribute coding mode 1311.

At step 1330, the decoder may decode portion attribute(s) based on attribute predictors. The decoder may decode attribute information 1232 from the bitstream 1290. The decoder may obtain the decoded attributes 1233 associated with the portion of geometry 1222. The decoder may obtain the decoded attributes 1233 associated with the portion of geometry 1222, for example, based on the decoded attribute information and the attributes predictors 1324.

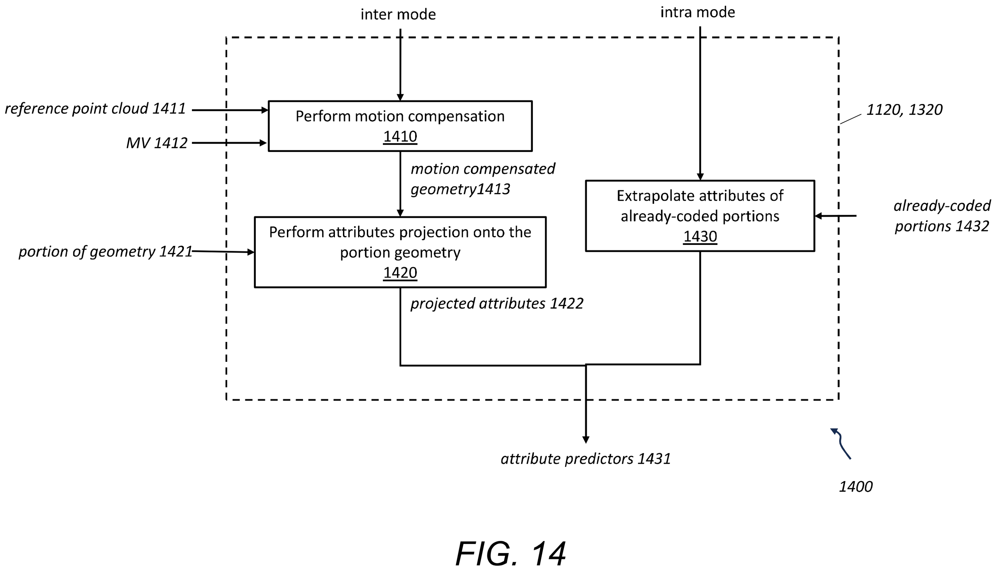

FIG. 14 shows an example method for determining attribute predictors. More specifically, FIG. 14 shows an example process 1400 of a method for determining attribute predictors 1431 of attributes associated with a portion of geometry 1421. One or more steps of the example process 1400 may be performed and/or implemented by a coder such as an encoder (e.g., encoder 114 of FIG. 1) or a decoder (e.g., decoder 120 of FIG. 1), an example computer system 2900 as described herein with respect to FIG. 29, and/or an example computing device 3030 as described herein with respect to FIG. 30. In some examples, steps 1410-1430 may represent components within the coder.

The process 1400 may be performed (e.g., identically) at both the encoder and the decoder. The process 1400 may be performed (e.g., identically) at both the encoder and the decoder, for example, to determine same attribute predictors 1431. The operations of FIG. 14 may be performed separately by the encoder and/or the decoder.

Steps 1410-1420 may relate to a process for determining inter-prediction-based attribute predictors. Step 1430 may relate to a process for determining intra-prediction-based attribute predictors.

The process for determining inter-prediction-based attribute predictors may correspond to step 1120 of FIG. 11 if/when the selected attribute coding mode 1112 may indicate an inter-prediction attribute mode (inter mode). The process for determining inter-prediction-based attribute predictors may correspond to step 1320 of FIG. 13A if/when the selected attribute coding mode 1112 may indicate an inter-prediction attribute mode (inter mode). The process for determining intra-prediction-based attribute predictors may correspond to step 1120 of FIG. 11 if/when the selected attribute coding mode 1112 may indicate an intra-prediction attribute mode (intra mode). The process for determining intra-prediction-based attribute predictors may correspond to step 1320 of FIG. 13A if/when the selected attribute coding mode 1112 may indicate an intra-prediction attribute mode (intra mode).

The portion of geometry 1421 may be the portion of geometry 1022 as described with respect to FIG. 10. The portion of geometry 1022 may be, for example, the portion of the decoded geometry 1013 as described with respect to FIG. 10. The attribute predictors 1431 may be the attribute predictors 1124 as described with respect to FIG. 11. The portion of geometry 1421 may be the portion of geometry 1222 of the decoded geometry 1212 as described with respect to FIG. 12. The attribute predictors 1431 may be the attribute predictors 1324 as described with respect to FIG. 13A. Reference point cloud (e.g., for attributes) 1411 may correspond to the reference point cloud (e.g., for attributes) 1122 as described with respect to FIG. 11 and the reference point cloud (e.g., for attributes) 1322 as described with respect to FIG. 13A.

Steps 1410-1420 may show operations of the process for determining inter-prediction-based attribute predictors. The process may obtain projected attributes 1422 (e.g., of the decoded geometry 1013, 1212). Part of projected attributes 1422 may be used as attribute predictors 1431 for attributes associated with points of portion of geometry 1421.

As explained herein with respect to FIG. 13B and FIG. 13C, the process for determining inter-prediction-based attribute predictors may include motion compensation of the geometry of the reference point cloud (e.g., for attributes) 1411 to generate a motion compensated geometry 1413. Reference point cloud for (e.g., attributes) 1411 may correspond to reference point cloud (e.g., for attributes) 1122 of FIG. 11 and/or to reference point cloud (e.g., for attributes) 1322 of FIG. 13A.

At step 1410, the coder (e.g., encoder/decoder) may perform motion compensation. The coder (e.g., encoder/decoder) may obtain the motion compensated geometry 1413 by performing motion compensation of the geometry of the reference point cloud (e.g., reference point cloud for attributes) 1411 based on MV field 1412. The MV field 1412 may correspond to MV field 1121 of FIG. 11 and MV field 1321 of FIG. 13A.

The encoder may obtain the MV field 1121. An encoder may obtain the MV field 1121, for example, by performing a motion search. An encoder may obtain the MV field 1121, for example, by performing a motion search such that the MV field 1121 may approximate the 3D motion field of attributes from the reference point cloud (e.g., for attributes) 1411 to the attributes of the current point cloud 1011. The motion search may (e.g., typically) be an iterative method that may test (or evaluate, assess, check, examine, inspect, analyze, etc.) (e.g., locally) multiple candidate motion vectors, and may select a candidate motion vector among the multiple candidate motion vectors. The selected candidate motion vector may minimize a distortion (e.g., cost) between the attributes of the current point cloud 1011 and attributes of the motion compensated geometry 1413 using the candidate motion vector.

The distortion, used by the motion search, for a point of the current point cloud 1011 may be determined. The distortion, used by the motion search, for a point of the current point cloud 1011 may be determined, for example, by comparing the attribute of this point and the attribute of (e.g., one of) its closest neighbor in the motion compensated geometry.

The encoder may encode information that indicates the reference point cloud (e.g., for attributes) 1411 among multiple candidate reference point clouds (e.g., for attributes). The encoder may encode the MV field 1121 as geometry information 1012. The decoder may obtain the reference point cloud (e.g., for attributes) 1411 and MV field 1321 by decoding geometry information 1211 and attribute information 1232 from the bitstream 1290.

At step 1420, the coder (e.g., encoder/decoder) may perform attribute(s) projection onto the portion geometry. The coder may determine projected attributes 1422. For example, the coder may determine projected attributes 1422 associated with the decoded geometry 1013, 1212 based on attributes of the reference point cloud (e.g., for attributes) 1411.

Projected attributes 1422 and attributes of the decoded geometry 1013, 1212 may belong to the same geometry. The prediction of the attributes of the portion of geometry 1022, 1222 based on the projected attributes may be much more efficient because the geometry discrepancy has been removed.

The encoder/decoder may generate (e.g., build or configure) an attribute projection model from a motion compensated geometry 1413. The attribute projection model may be used to perform attribute projection associated with the motion compensated geometry 1413. For example, the motion compensated geometry 1413 may be obtained by performing motion compensation of the geometry of the reference point cloud (e.g., for attributes) 1411. The attribute projection may determine a projection of the motion compensated geometry 1413 onto the decoded geometry 1421. For example, the motion compensated geometry 1413 may be obtained by performing motion compensation of the decoded geometry 1421. The attribute projection may determine a projection of the motion compensated geometry 1413 onto the geometry of the reference point cloud (e.g., for attributes) 1411.

Since points of motion compensated geometry 1413 may represent motion compensated points of reference point cloud (e.g., for attributes) 1411 (or decoded geometry 1421), points of motion compensated geometry 1413 may correspond respectively to points of decoded geometry 1421 (or reference point cloud (e.g., for attributes) 1411, respectively). The result of the attribute projection process at step 1420 may be a form of projection of attributes of reference point cloud (e.g., for attributes) 1411 (e.g., after using/applying MV field 1412) onto decoded geometry 1013, 1212.

The attribute projection model may be a data structure used to (e.g., efficiently) perform attribute projection onto a specific position of a point. For example, the data structure may be a spatial-partitioning data structure such as a tree data structure (e.g., a KD tree or an octree). The data structure may be used to search for a set of one or more points (e.g., $N_{pts}$) belonging to the motion compensated geometry 1413. The set of one or more points (e.g., $N_{pts}$) may be with positions in the neighborhood of a particular point (e.g., point p) from the decoded geometry 1421. The set of one or more points (e.g., $N_{pts}$) may be with positions in the neighborhood of a particular point (e.g., point p) from reference point cloud (e.g., for attributes) 1411. The set of one or more points (e.g., $N_{pts}$) may be determined to be within the neighborhood for a particular point (e.g., point p) based on distances of the set of one or more points (e.g., $N_{pts}$) from the point (e.g., point p) being within or less than a threshold value. The threshold value may be a predetermined value. The threshold value may be determined (e.g., computed) by the encoder and/or signaled to the decoder in the bitstream. The set of one or more points (e.g., $N_{pts}$) may be determined as a number (or quantity) of points with positions that are closest to the point (e.g., point p). The number may be a predetermined quantity. The number may be determined (e.g., computed) by the encoder and/or signaled to the decoder in the bitstream. The distance may be a distance such as a Manhattan distance (i.e., L1 norm), an Euclidean distance (i.e., L2 norm), Chebyshev distance (i.e., L-infinity or L∞ norm), or a Minkowski distance.

The attributes values associated with each point within the set of one or more points (e.g., $N_{pts}$) may be used at step 1420 for determining projected attributes values for the point (e.g., point p). For example, the projected attributes values may be attribute predictors of attributes for the point (e.g., point p). A value of each attribute of the point (e.g., point p) may be predicted or projected based on values of corresponding attributes (with the same type as each attribute) of the set of one or more points (e.g., $N_{pts}$).

A projected attribute (e.g., attribute predictor) for the point (e.g., point p) may be determined. A projected attribute (e.g., attribute predictor) for the point (e.g., point p) may be determined, for example, as an average of the attribute values, of the set of one or more points (e.g., $N_{pts}$), weighted by respective distance between the one or more points (e.g., $N_{pts}$) and the point (e.g., point p). The distance may be a distance such as a Manhattan distance (i.e., L1 norm), an Euclidean distance (i.e., L2 norm), Chebyshev distance (i.e., L-infinity or L∞ norm), or a Minkowski distance.

The projected attributes representing the attribute predictors for the point (e.g., point p) may be determined to be the corresponding values of the attributes of a point from the motion compensated geometry 1413 closest to the point (e.g., point p). This may enable faster projection because only one point is searched and selected from motion compensated geometry 1413 to determine an attributes predictor for the point (e.g., point p) from decoded geometry 1013, 1212.

At step 1430, the coder (e.g., encoder/decoder) may extrapolate attributes of already-coded portions. The coder may determine attribute predictors 1431 for the portion of geometry 1022, 1222. The coder may determine attribute predictors 1431 for the portion of geometry 1022, 1222, for example, based on intra-prediction attribute mode using at least one already-coded portion 1432. The already-coded portions 1432 may be the already-coded portions 1123 of FIG. 11 or the already-coded portions 1323 of FIG. 13A.

The coder (e.g., encoder/decoder) may generate (e.g., determine) the intra-prediction attribute mode based on the intra prediction mode (e.g., selected attribute coding mode 1112, 1311). For example, the attribute predictors 1431 may be obtained by extrapolating at least one attribute associated with at least one already-coded portions 1432. For example, the intra prediction mode (e.g., selected attribute coding mode 1112, 1311) may indicate that the at least one already-coded portion 1432 may comprise at least one spatial neighbor portion of the portion of geometry 1421. In some examples, the portion of geometry 1421 may be encompassed by a current ACU. The spatial neighbor portion of the portion of geometry 1421 may comprise points encompassed by an ACU having a part of its boundary overlapping with at least a portion of a boundary of the current ACU. Boundary may be defined as faces, edges and vertices of a cuboid, for example, if/when ACUs are cuboids in shape. Sharing a part of the boundary may be defined as having a common face, a common edge, or a common vertex (e.g., corner).

The intra prediction mode (e.g., selected attribute coding mode 1112, 1311) may indicate that the attribute predictors 1431 may be obtained based on extrapolation of at least one attribute associated with the at least one spatial neighbor portion of the portion of geometry 1421. Extrapolation of at least one attribute associated with the at least one spatial neighbor portion of the portion of geometry 1421 may be determined. Extrapolation of at least one attribute associated with the at least one spatial neighbor portion of the portion of geometry 1421 may be determined, for example, by fitting a 3D attribute model for the at least one attribute associated with the at least one spatial neighbor portion of the portion of geometry 1421, and by extending (e.g., extrapolating) the fitted 3D attribute model to the portion of geometry 1421. A 3D attribute model may take spatial coordinates as input and provide modeled attributes as output. Model parameters may be fit (e.g., learned) on at least one attribute associated with the at least one spatial neighbor portion of the portion of geometry 1421.

The intra prediction mode (e.g., selected attribute coding mode 1112, 1311) may have various indications. In some examples, the intra prediction mode (e.g., selected attribute coding mode 1112, 1311) may indicate that attribute predictors 1431 may be determined based on averages of attributes associated with the spatial neighbor portion of the portion of geometry 1421. In some examples, the intra prediction mode (e.g., selected attribute coding mode 1112, 1311) may indicate that attribute predictors 1431 may be determined based on a maximum of attributes associated with the spatial neighbor portion of the portion of geometry 1421. In some examples, the intra prediction mode (e.g., selected attribute coding mode 1112, 1311) may indicate a spatial direction. The spatial neighbor portion of the portion of geometry 1421 may be selected along the spatial direction. In some examples, the intra prediction mode (e.g., selected attribute coding mode 1112, 1311) may indicate that a maximum number/quantity of spatial neighbor portions of the portion of geometry 1421 may be selected. In some examples, the intra prediction mode (e.g., selected attribute coding mode 1112, 1311) may indicate a maximum distance between the spatial neighbor portion of the portion of geometry 1421 and the portion of geometry 1421. For example, the maximum distance may be between any point of the geometry 1421 and any other point of the portion of geometry 1421. For example, the maximum distance may be between centers (or opposite corners) of the spatial neighbor portion of the portion of geometry 1421 and the portion of geometry 1421. In some examples, the intra prediction mode (e.g., selected attribute coding mode 1112, 1311) may indicate an index of/to a list of indices, each index indicating one of the intra-prediction attribute modes or one of their combinations as described herein.

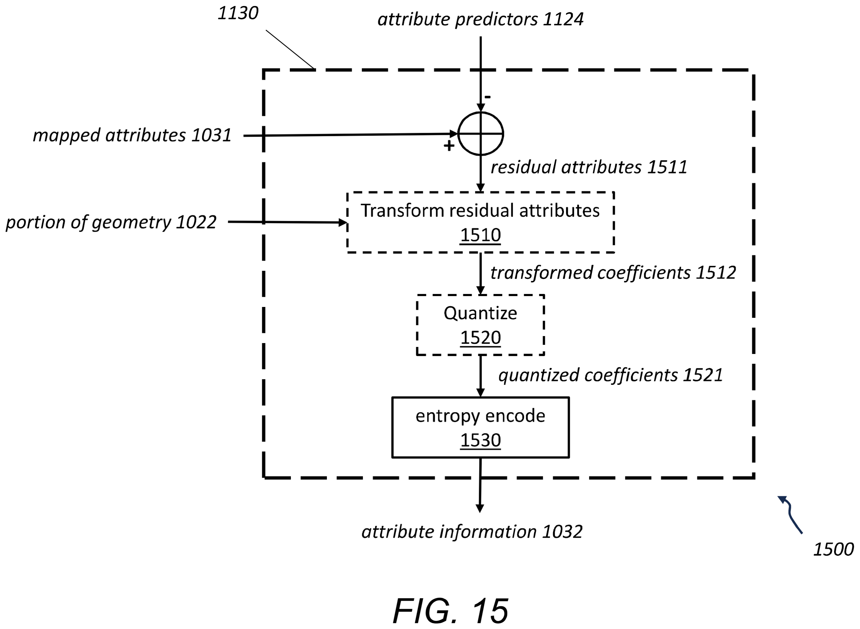

FIG. 15 shows an example method for encoding attributes based on attribute predictors. More specifically, FIG. 15 shows an example process 1500 of a method for encoding attributes based on attribute predictors 1124 associated with portion of geometry 1022. One or more steps of the example process 1500 may be performed and/or implemented by an encoder (e.g., encoder 114 of FIG. 1), an example computer system 2900 as described herein with respect to FIG. 29, and/or an example computing device 3030 as described herein with respect to FIG. 30. In some examples, steps 1510-1530 may represent components within the encoder.

The encoder may determine residual attributes 1511. The encoder may determine residual attributes 1511, for example, by subtracting the attribute predictors 1124 from the mapped attributes 1031 associated with portion of geometry 1022.

At step 1510, the encoder may transform residual attributes. The encoder may determine transformed coefficients 1512. The encoder may determine transformed coefficients 1512, for example, by using/applying a 3D transform for/to the residual attributes 1511 based on portion of geometry 1022.

At step 1520, the encoder may perform quantizing. The encoder may determine quantized residual attributes or quantized coefficients 1521. The encoder may determine quantized residual attributes or quantized coefficients 1521, for example, by quantizing the residual attributes 1511 or the transformed coefficients 1512, respectively.

At step 1530, the encoder may perform entropy encoding. The encoder may entropy encode the residual attributes 1511 or the transformed coefficients 1512 or the quantized residual attributes or the quantized coefficients 1521 as attribute information 1032.

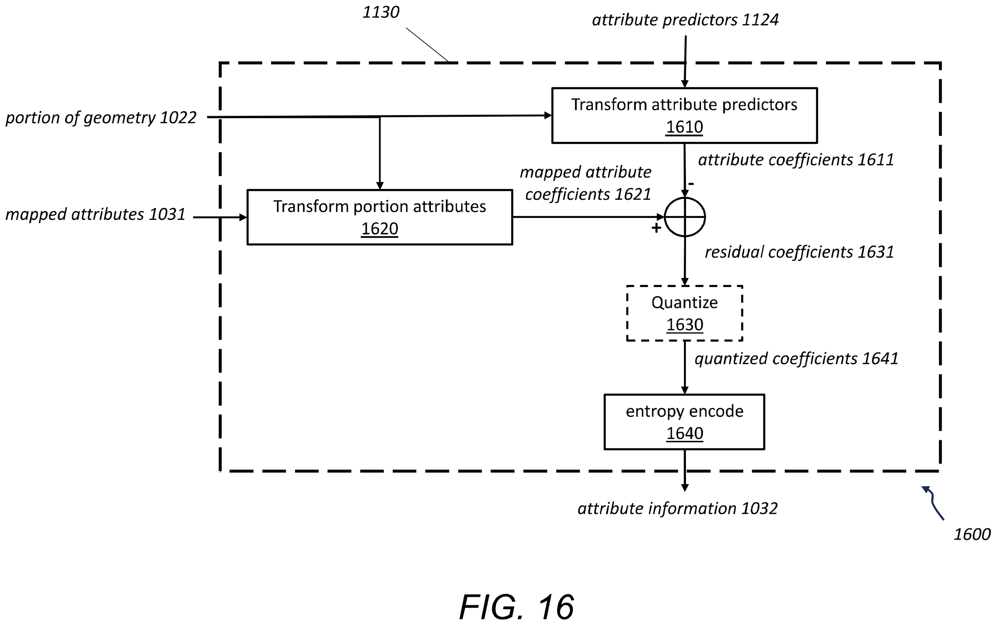

FIG. 16 shows an example method for encoding attributes based on attribute predictors. More specifically, FIG. 16 shows another example process 1600 of a method for encoding attributes based on attribute predictors 1124 associated with portion of geometry 1022. One or more steps of the example process 1600 may be performed and/or implemented by an encoder (e.g., encoder 114 of FIG. 1), an example computer system 2900 as described herein with respect to FIG. 29, and/or an example computing device 3030 as described herein with respect to FIG. 30. In some examples, steps 1610-1640 may represent components within the encoder.

At step 1610, the encoder may transform attribute predictors. The encoder may determine attribute coefficients 1611. The encoder may determine attribute coefficients 1611, for example, by applying/using a 3D transform to/for the attribute predictors 1124 based on portion of geometry 1022.

At step 1620, the encoder may transform portion attributes. The encoder may determine mapped attribute coefficients 1621. The encoder may determine mapped attribute coefficients 1621, for example, by applying/using 3D transform to/for the mapped attributes 1031 based on portion of geometry 1022.

The encoder may determine residual coefficients 1631. The encoder may determine residual coefficients 1631, for example, by subtracting the attribute coefficients 1611 from the mapped attribute coefficients 1621.

At step 1630, the encoder may perform quantizing. The encoder may determine quantized coefficients 1641. The encoder may determine quantized coefficients 1641, for example, by quantizing the residual coefficients 1631.

At step 1640, the encoder may perform entropy encoding. The encoder may entropy encode the residual coefficients 1631 or the quantized coefficients 1641 as attribute information 1032.

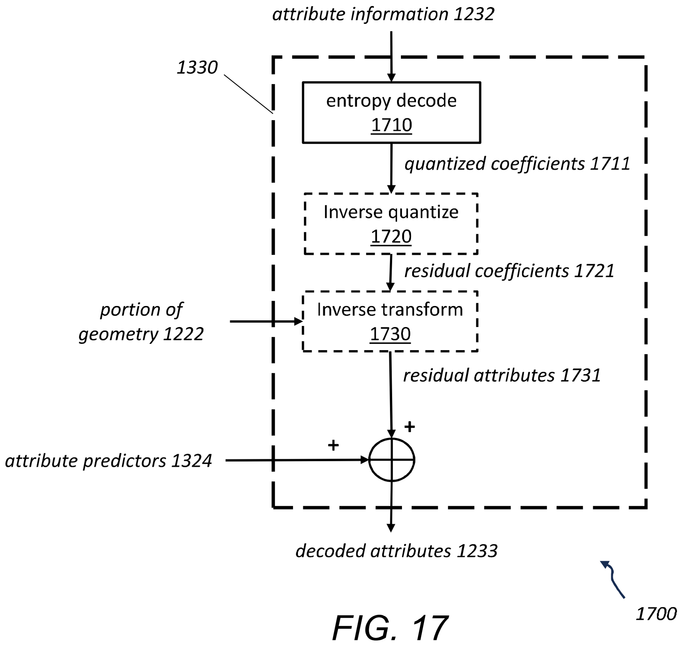

FIG. 17 shows an example method for decoding attributes based on attribute predictors. More specifically, FIG. 17 shows an example process 1700 of a method for decoding attributes based on attribute predictors 1324 associated with portion of geometry 1222. One or more steps of the example process 1700 (e.g., corresponding to step 1330 of FIG. 13A) may be performed and/or implemented by a decoder (e.g., decoder 120 of FIG. 1), an example computer system 2900 as described herein with respect to FIG. 29, and/or an example computing device 3030 as described herein with respect to FIG. 30. In some examples, steps 1710-1730 may represent components within the decoder.

At step 1710, the decoder may perform entropy decoding. The decoder may entropy decode quantized coefficients 1711 from attribute information 1232. The decoder may entropy decode quantized coefficients 1711, for example, from the bitstream 1290.

At step 1720, the decoder may perform inverse quantizing. The decoder may determine residual coefficients 1721. The decoder may determine residual coefficients 1721, for example, by inverse quantizing the quantized coefficients 1711. In some examples, the decoder may entropy decode residual coefficients 1721 from the bitstream 1290.

At step 1730, the decoder may perform inverse transforming. The decoder may determine residual attributes 1731. The decoder may determine residual attributes 1731, for example, by applying/using inverse 3D transform to/for the residual coefficients 1721 based on portion of geometry 1222.

The decoder may determine decoded attributes 1233. The decoder may determine decoded attributes 1233, for example, by adding the residual attributes 1731 with the attribute predictors 1324.

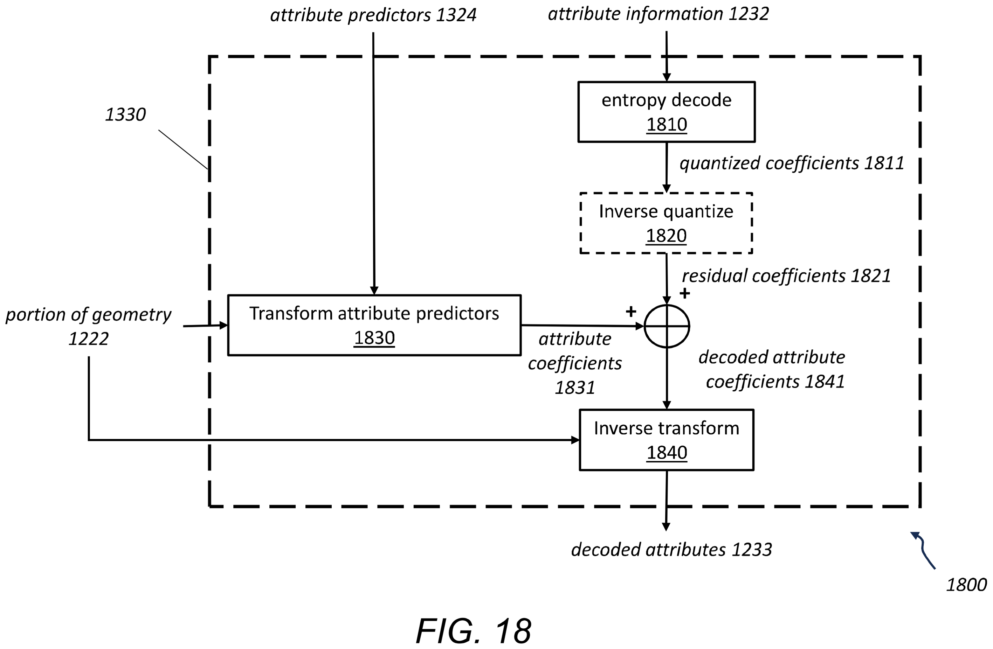

FIG. 18 shows an example method for decoding attributes based on attribute predictors. More specifically, FIG. 18 shows another example process 1800 of a method for decoding attributes based on attribute predictors 1324 associated with portion of geometry 1222. One or more steps of the example process 1800 (e.g., corresponding to step 1330 of FIG. 13A) may be performed and/or implemented by a decoder (e.g., decoder 120 of FIG. 1), an example computer system 2900 as described herein with respect to FIG. 29, and/or an example computing device 3030 as described herein with respect to FIG. 30. In some examples, steps 1810-1840 may represent components within the decoder.

At step 1810, the decoder may perform entropy decoding. The decoder may entropy decode quantized coefficients 1811 from attribute information 1232. The decoder may entropy decode quantized coefficients 1811 from attribute information 1232, for example, from the bitstream 1290.

At step 1820, the decoder may perform inverse quantizing. The decoder may determine residual coefficients 1821. The decoder may determine residual coefficients 1821, for example, by inverse quantizing the quantized coefficients 1811. In some examples, the decoder may entropy decode, from the bitstream 1290, residual coefficients 1821.

At step 1830, the decoder may transform attribute predictors. The decoder may determine attribute coefficients 1831. The decoder may determine attribute coefficients 1831, for example, by applying/using 3D transform to/for the attribute predictors 1324 based on the portion of geometry 1222.

The decoder may determine decoded attribute coefficients 1841. The decoder may determine decoded attribute coefficients 1841, for example, by adding the residual coefficients 1821 with the attribute coefficients 1831.

At step 1840, the decoder may perform inverse transforming. The decoder may determine decoded attributes 1233. The decoder may determine decoded attributes 1233, for example, by applying/using an inverse 3D transform to/for the decoded attribute coefficients 1841 based on portion of geometry 1222.

3D transform may be used/selected for transforming residual attributes 1511 of FIG. 15, mapped attributes 1031 and attribute predictors 1124 of FIG. 16, and/or attribute predictors 1324 of FIG. 18. The 3D transform may be the region-adaptive hierarchical transform (RAHT) scheme, for example, in G-PCC. Inverse 3D transform of this 3D transform may be used/selected for inverse transforming residual coefficients 1721 of FIG. 17 and/or decoded attribute coefficients 1841 of FIG. 18.

The RAHT scheme may be based on the iterative use of a two-point transform. In the framework of point cloud attribute coding, a two-point RAHT transform may be applied to (e.g., used for) two sets (e.g., $A_1$ and $A_2$) of attributes. The two sets (e.g., $A_1$ and $A_2$) of attributes may comprise respective number/quantity (e.g., $w_1$ and $w_2$) of attributes and respective associated coefficients (e.g., $c_{A1}$ and $c_{A2}$). The associated coefficients (e.g., $c_{A1}$ and $c_{A2}$) may be representative of the sum of attribute values over their respective set divided by the square root of the number/quantity of attributes.

$$c_{Ai} = \frac{1}{\sqrt{w_i}} \sum_{a \in A_i} a. \qquad (w_i = \#A_i) \qquad\qquad (*)$$

The two-point RAHT transform may depend on the weights $w_1$ and $w_2$ and may be defined by a 2x2 matrix as follows:

$$\mathrm{RAHT}(w_1, w_2) = \frac{1}{\sqrt{w_1+w_2}} \begin{bmatrix} \sqrt{w_1} & \sqrt{w_2} \\ -\sqrt{w_2} & \sqrt{w_1} \end{bmatrix}.$$

Two new coefficients DC and AC may be determined, for example, if/when applied to (e.g., used for) the two coefficients $c_{A1}$ and $c_{A2}$:

$$\begin{bmatrix} DC \\ AC \end{bmatrix} = \mathrm{RAHT}(w_1, w_2) \begin{bmatrix} c_{A1} \\ c_{A2} \end{bmatrix} \quad (1)$$

As shown below, the above property (*) on coefficients still holds for the direct current (DC) coefficient:

$$DC = \frac{1}{\sqrt{w_1 + w_2}} \left( \sqrt{w_1} c_{A1} + \sqrt{w_2} c_{A2} \right) = \frac{1}{\sqrt{w_1 + w_2}} \left( \sum_{a \in A_1} a + \sum_{a \in A_2} a \right) = \frac{1}{\sqrt{w_1 + w_2}} \sum_{a \in A_1 \cup A_2} a = c_{A1 \cup A2}$$

The two-point RAHT transform may be applied/used iteratively to/for DC coefficients. This may be referred to as the RAHT iterative method. If (e.g., once) alternating current (AC) coefficients are determined, AC coefficients do not undergo any further transformation. A direct current (DC) coefficient is the coefficient with zero frequency (e.g., zero frequency in both x and y spatial dimension) and AC coefficients are the remaining coefficients with non-zero frequencies. At the start of the RAHT iterative method, there may be initial sets of attributes. The quantity of the initial sets of attributes may be the same as the quantity of the points in the coded geometry. For example, there may be as many initial sets $A_i$ of attributes as there are points in the coded geometry S. Each initial set (e.g., $A_i$) of attributes may contain one attribute (e.g., $w_i$=1) and the coefficient $c_{Ai}$ may be equal to the value of this one attribute, thus fulfilling the property (*). By induction, the property (*) may hold for all subsequent DC coefficients, for example, all subsequent DC coefficients determined after iterative application of the two-point RAHT transform. In some examples, the points of the coded geometry (e.g., S) may refer to voxels generated/determined to represent points of the coded geometry (e.g., S).

Determined coefficients may be the union of a set of DC coefficients fulfilling the property (*) and a set of AC coefficients. Determined coefficients may be the union of a set of DC coefficients fulfilling the property (*) and a set of AC coefficients, for example, at any stage of the RAHT iterative method. The RAHT iterative method may continue until DC coefficients are depleted and only one DC coefficient is left. This one DC coefficient may be equal to $C_A$ where A is the set of all attributes to be transformed. The RAHT iterative method may (e.g., a priori) follow any order among pairs of DC coefficients.

The attributes to be transformed may be residual attributes 1511, attribute predictors 1124, mapped attributes 1031, and/or attribute predictors 1324. The one obtained DC coefficient $C_A$ may be transformed coefficients 1512, attributes coefficients 1611, mapped attributes coefficients 1621, and/or attributes coefficients 1831.

The two-point inverse RAHT transform may be defined by a 2x2 matrix as follows:

$$\mathrm{iRAHT}(w_1, w_2) = \frac{1}{\sqrt{w_1+w_2}} \begin{bmatrix} \sqrt{w_1} & -\sqrt{w_2} \\ \sqrt{w_2} & \sqrt{w_1} \end{bmatrix}$$

The two-point inverse RAHT may be applied to (e.g., used for) DC and AC coefficients to obtain (e.g., recover or reconstruct) the two coefficients $c_{A1}$ and $c_{A2}$:

$$\begin{bmatrix} c_{A1} \\ c_{A2} \end{bmatrix} = \mathrm{iRAHT}(w_1, w_2) \begin{bmatrix} DC \\ AC \end{bmatrix}$$

The inverse iterative RAHT method/scheme may apply/use the inverse two-point RAHT to/for DC and AC coefficients in a reverse order relative to obtaining DC and AC coefficients by the iterative RAHT scheme. At the end of the inverse iterative RAHT scheme, coefficients (e.g., $c_{Ai}$) associated with the initial sets (e.g., $A_i$) of attributes may be obtained. These coefficients (e.g., $c_{Ai}$) may be equal to the values of the one attributes associated with the initial sets (e.g., $A_i$). For example, attributes associated with the initial sets (e.g., $A_i$) may be the residual attributes 1731 or decoded attributes 1233.

The RAHT iterative scheme may follow an octree in a specific iterative order. The RAHT iterative scheme may follow an octree in a specific iterative order, for example, in G-PCC. DC coefficients associated with occupied child nodes of a parent node in the octree may undergo a cascade of two-point RAHT transformations until one DC coefficient remains, together with AC coefficients. For example, up to eight DC coefficients associated with up to eight occupied child nodes of a parent node in the octree may undergo a cascade of two-point RAHT transformations until one DC coefficient remains, together with up to seven AC coefficients. This one DC coefficient may be pushed at the parent node level and the scheme may be repeated at upper octree depth (e.g., at lower depth indexes) until the root node is reached.

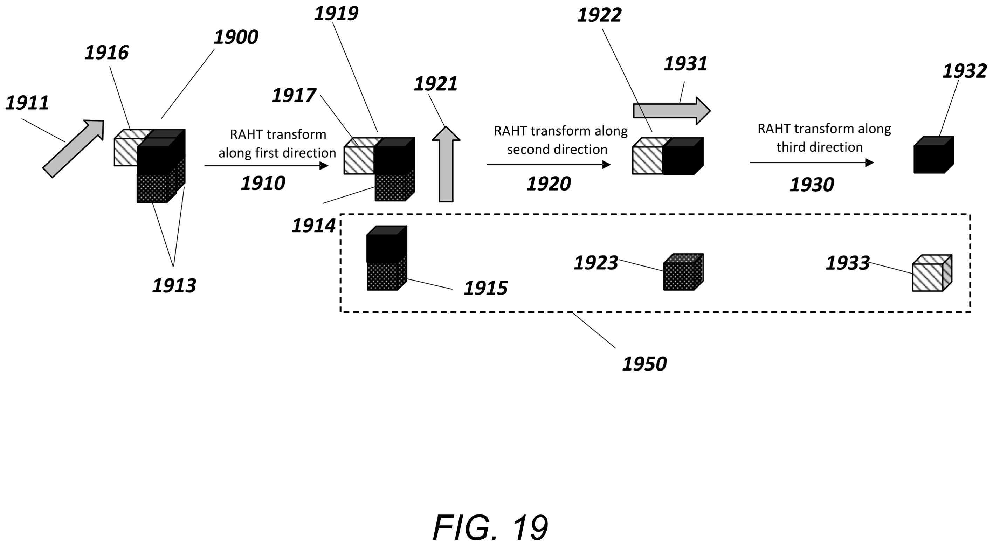

FIG. 19 shows an example RAHT transformation. More specifically, FIG. 19 shows an example RAHT transformation, of a RAHT scheme, based on (e.g., applied to) an octree. The RAHT transformation may be based on (e.g., applied to) child nodes of an octree parent node along three successive directions.

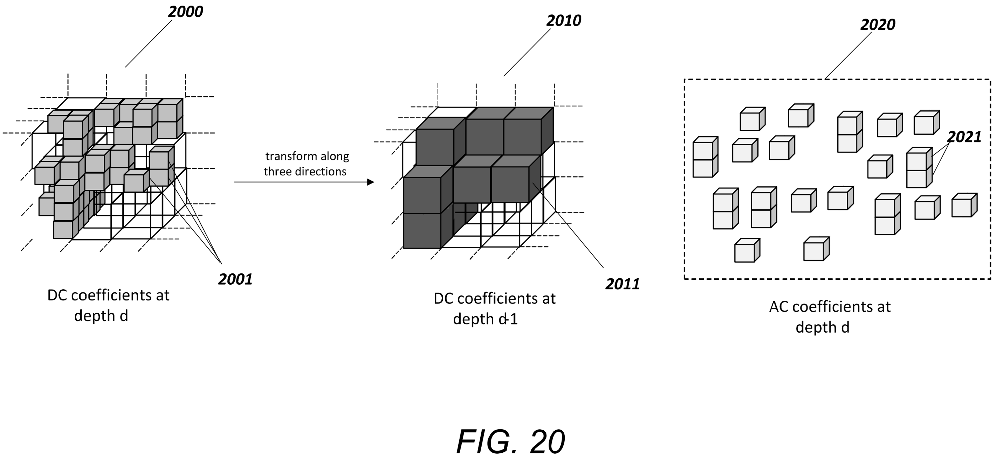

The parent node 1900 may have multiple (e.g., five) occupied child nodes each having a respective associated coefficients (e.g., $c_i$) and weights (e.g., $w_i$). A first RAHT transformation 1910 may be performed along a first direction 1911. If there are two adjacent occupied child nodes 1913 along the first direction, the two adjacent occupied child nodes 1913 may undergo a two-point RAHT transform. The two adjacent occupied child nodes 1913 may undergo a two-point RAHT transform, for example, to determine a new DC coefficient 1914 and an AC coefficient 1915. The AC coefficient 1915 may be pushed to a set 1950 of AC coefficients. The node may be left as is and its DC coefficient 1917 may be kept, for example, if there is only one occupied child node 1916 along the first direction. In this example, the child nodes may be collapsed along the first direction to determine a new set 1919 of nodes (e.g., a set of three nodes), with associated new DC coefficients. A second RAHT transformation 1920 may be performed, for example, after the first RAHT transformation. The second RAHT transformation 1920 may be performed, for example, along a second direction 1921. The second RAHT transformation 1920 may be performed, for example, in a similar way as the first RAHT transformation 1910. The second RAHT transformation 1920 may be performed, for example, to determine child nodes 1922. The child nodes 1922 may have been collapsed along the first two directions 1911 and 1921. AC coefficients 1923 may be pushed to the set 1950 of AC coefficients, for example, together with the collapse. A third RAHT transformation 1930 may be performed, for example, after the second RAHT transformation. The third RAHT transformation 1930 may be performed, for example, along a third direction 1931. The RAHT transformation 1930 may be performed, for example, in a similar way as the first and/or second RAHT transformation. RAHT transformation 1930 may be performed, for example, to determine a (e.g., unique) child node 1932. The child node 1932 may result from the collapse along all three directions. AC coefficients 1933 may be pushed to the set 1950 of AC coefficients, for example, together with the collapse. The child node 1932 may have an associated DC coefficient that is pushed to the parent node (e.g., as shown in FIG. 20).

FIG. 20 shows an example RAHT transformation. More specifically, FIG. 20 shows an example RAHT transformation based on (e.g., applied to) octree nodes (e.g., all octree nodes). The RAHT transformation may be based on (e.g., applied to) octree nodes (e.g., all octree nodes), for example, at depth 'd', to determine DC coefficients (e.g., at depth d-1) and AC coefficients. FIG. 20 shows an example of occupied nodes 2000 of an octree at depth 'd'. Occupied nodes 2000 may undergo a RAHT transformation along the three directions. Occupied nodes 2000 may undergo a RAHT transformation along the three directions, for example, to push DC coefficients up to their occupied parent nodes 2010 that belong to the octree (e.g., at depth d-1). For example, DC coefficients for each node may be pushed up to a corresponding occupied parent node. For example, the three DC coefficients of the child nodes 2001 may undergo a RAHT transformation along the three directions. The three DC coefficients of the child nodes 2001 may undergo a RAHT transformation along the three directions, for example, to determine a (e.g., unique) DC coefficient associated with their parent node 2011 and two AC coefficients 2021. The two AC coefficients 2021 may be pushed to a set 2020 of AC coefficients. By performing this method for (e.g., all) occupied nodes 2000 of the octree (e.g., at depth 'd'), the DC coefficients associated with occupied nodes of the octree (e.g., at depth 'd') may be transformed into DC coefficients associated with occupied parent nodes 2010 of the octree (e.g., at depth d-1) and a set 2020 of AC coefficients.

The RAHT transformation method may be a bottom-up method. This bottom-up method may be repeated based on depth (e.g., depth per depth). This bottom-up method may be repeated based on depth (e.g., depth per depth), for example, until reaching the minimum depth (the root node). The result of the RAHT transformation over the complete octree may comprise a set of coefficients comprising a (e.g., unique) DC coefficient and a set of (e.g., many) AC coefficients.

The RAHT transformation method may (e.g., typically) start from the highest/deepest depth. The highest/deepest depth may be, for example, farthest from the root node with a low depth index. At the highest/deepest depth, occupied child nodes may correspond to a (e.g., unique) point (e.g., voxel) of the coded geometry S. The (e.g., unique) point (e.g., voxel) may be associated with a/an (e.g., unique) attribute among the set (e.g., 'a') of attributes. The DC coefficient at the highest/deepest depth may be set as the value of the (e.g., unique) attribute associated with each occupied node, and the weights (e.g., 'w') may be set to 1.

The inverse RAHT method (e.g., on an octree) may be a top-down method. This top-down method may be used from the root node down to the last depth. The root node may comprise the lowest depth index or the most shallow depth. The last depth may comprise the highest depth index or the deepest depth. The last depth may be made of leaf nodes that each may contain only one point (e.g., voxel) of the point cloud. Each leaf node at the last depth may comprise only one attribute associated with the one point (e.g., voxel). The DC coefficients of occupied nodes 2010 of the octree at a lower depth (e.g., depth d-1) may be inverse transformed into DC coefficients of occupied nodes 2000 of the octree at a higher depth (e.g., depth d). The DC coefficients of occupied nodes 2010 of the octree at a lower depth (e.g., depth d-1) may be inverse transformed into DC coefficients of occupied nodes 2000 of the octree at a higher depth (e.g., depth d), for example, by applying/using the inverse two-point RAHT transform to/for the DC coefficient of each of the occupied node of the octree at the lower depth (e.g., depth d-1) and to/for the related AC coefficients from set 2020 of AC coefficients. The inverse two-point RAHT transform may be applied/used along the three directions, in a reverse order, such as to invert the node transformation process of FIG. 19. By doing so, DC coefficients of the leaf nodes may be obtained, and the values of these DC coefficients may correspond to the attributes associated with the (e.g., unique) point of each of the leaf nodes.

Like geometry coding of a point cloud, coding of attributes associated with the points of a current point cloud may benefit from inter-frame prediction using a motion compensated point cloud. The motion compensated point cloud may obtain (e.g., inherit) attributes from a reference point cloud that has been motion compensated. Points may keep their associated attributes. Points may keep their associated attributes, for example, during motion. Motion compensated attributes may be, for example, the attributes associated with the points of the motion compensated point cloud. The motion compensated attributes may be used to (e.g., better) compress the attributes of the coded geometry of the current point cloud.

Inter RAHT scheme may be used at steps 1610, 1620, 1730, 1830, and 1840 as described herein. Inter RAHT scheme may define an inter prediction mode that may use inter prediction for predicting the values of the DC and AC coefficients (i.e., DC coefficients and AC coefficients) determined by the RAHT iterative method or the inverse RAHT iterative method. In some examples, because the generation of DC and AC coefficients may follow an octree, it may be beneficial to maintain a common attribute octree structure for both the portion of geometry (e.g., portion of geometry 1022, 1222) and a motion compensated portion of geometry. A common bounding box encompassing both portion of geometries (i.e., both the portion of geometry and the motion compensated portion of geometry) may be determined. An octree partitioning may be performed, from a root node associated with the common bounding box, for both portion of geometries. This may lead to two octree partitioning. The two octree partitioning may be different. The two octree partitioning may be different, for example, if/when the portion of geometries are not equal. It may be likely that the portion of geometries are not equal. The two octrees may have a common subtree starting from the root node. On this subtree, occupied node topology may be the same, and a common set of DC and AC coefficients may be determined for both portion of geometries. The subset (e.g., the common set) of DC and AC coefficients associated with nodes of the common subtree may be predicted from DC and AC coefficients. The subset (e.g., the common set) of DC and AC coefficients may be determined from the attributes of the portion of geometry (e.g., portion of geometry 1022, 1222). The DC and AC coefficients may be determined from the attributes of the motion compensated portion of geometry. The encoder and/or decoder may determine coefficient residual values. The encoder and/or decoder may determine coefficient residual values, for example, by subtracting the DC and AC coefficients determined from the attributes of the motion compensated portion of geometry from the DC and AC coefficients associated with nodes of the common subtree and determined from the attributes of the portion of geometry (e.g., portion of geometry 1022, 1222).

The DC and AC coefficients that are not associated with nodes of the common subtree may not be predicted. The DC and AC coefficients that are not associated with nodes of the common subtree may be transformed (e.g., directly) in a similar way as performed for the case without inter prediction.

Predicted DC coefficients of the portion of geometry (e.g., portion of geometry 1022, 1222) may be determined. Predicted DC coefficients of the portion of geometry (e.g., portion of geometry 1022, 1222) may be determined, for example, instead of predicting AC coefficients. Predicted DC coefficients of the portion of geometry (e.g., portion of geometry 1022, 1222) may be determined at a (e.g., some) depth, for example, if (e.g., assuming) both the octree of the portion of geometry (e.g., portion of geometry 1022, 1222) and the octree of the motion compensated portion of geometry may have a same occupancy of a node at this depth. The predicted DC coefficients may be determined based on (e.g., from) their co-located DC coefficients of the motion compensated portion of geometry. DC residual values may be determined. DC residual values may be determined, for example, by subtracting the predicted DC coefficients from the DC coefficients of the portion of geometry (e.g., portion of geometry 1022, 1222). The RAHT transformation may go up in the octree starting from DC residual values replacing the DC coefficients of the portion of geometry (e.g., portion of geometry 1022, 1222).

A RAHT scheme process that does not use information from a reference point cloud different from the current point cloud may be called an intra RAHT scheme. Intra RAHT scheme may define an intra prediction mode for predicting the values of the DC and the AC coefficients determined by the RAHT iterative method or the inverse RAHT iterative method.

Intra prediction may be performed between DC and AC coefficients of an intra RAHT scheme and may be referred to as inter-depth prediction. In some implementations of point cloud coding, this inter-depth prediction within portion of geometry (e.g., portion of geometry 1022, 1222) may be integrated into the RAHT scheme as being an intra prediction mode.

The inter-depth prediction mode may predict the DC coefficients associated with a current RAHT node of a RAHT tree at a depth (e.g., depth d). The inter-depth prediction mode may predict the DC coefficients associated with a current RAHT node of a RAHT tree at a depth (e.g., depth 'd'), for example, by using interpolation of DC coefficients associated with nodes of the octree at a lower depth (e.g., depth d-1). A lower depth may comprise a lower depth index corresponding to shallower depth of the RAHT tree. A lower depth may indicate a depth level closer to root node of RAHT tree. A higher depth may indicate a depth level closer to leaf nodes of RAHT tree (i.e., farther from root node). The inter-depth prediction mode may (e.g., also) predict AC coefficients of a current RAHT node. The inter-depth prediction mode may predict AC coefficients of a current RAHT node, for example, by using attribute information from a parent node and attribute information from already-coded neighboring RAHT nodes of the parent node of the current RAHT node.

A RAHT tree may comprise RAHT nodes that are linked together according to a parent-child relationships defined as an occupancy tree over the decoded geometry. A RAHT node of the RAHT tree may be a node of the occupancy tree that is associated with a DC coefficient. The node of the occupancy tree may be (e.g., also) associated with one or more AC coefficients. The DC coefficients and the one or more AC coefficients may be obtained, for example, by applying/using the iterative RAHT (e.g., by an encoder) or inverse iterative RAHT method (e.g., by a decoder) to/for the points belonging to the sub-volumes associated with the occupied nodes of the occupancy tree.

Already-coded neighboring RAHT nodes of the parent node of the current RAHT node may include nodes that may interact with (or are spatially close to) the parent node. For example, already-coded neighboring RAHT nodes of the parent node of the current RAHT node may include nodes that are siblings to the parent node. The siblings may comprise the seven siblings in an octree structure. In some examples, already-coded neighboring RAHT nodes may include nodes that may share a face, an edge, or a vertex (e.g., corner) with the parent node.

The inter-depth prediction as discussed herein may be implemented in a bounded domain. For example, the inter-depth prediction may be implemented in a mean attribute domain which is naturally bounded by the attribute value range. The bounded property of the mean attribute domain may be advantageous. For example, the bounded property of the mean attribute domain may correlate to a more physical meaning and/or may provide better numerical stability of the inter-depth prediction. This may lead to a more efficient prediction.

Mean sums of attributes values (e.g., $a_{i,d}$) determined (e.g., calculated) for RAHT nodes at a parent RAHT node (e.g., at depth d) may be used to predict a mean sum of attribute values (e.g., $a_{i,c}$) associated with each child RAHT node (e.g., at depth d+1) of the parent RAHT node. The mean sums of attributes values (e.g., $a_{i,d}$) determined (e.g., calculated) for RAHT nodes at a parent node (e.g., at depth d) may comprise a mean sum of attributes values (e.g., $a_{i,d}$) determined (e.g., calculated) for the parent RAHT node and (e.g., possibly) a mean sum of attributes values (e.g., $a_i$) determined (e.g., calculated) from one or more already-coded neighboring RAHT nodes of the RAHT parent node.

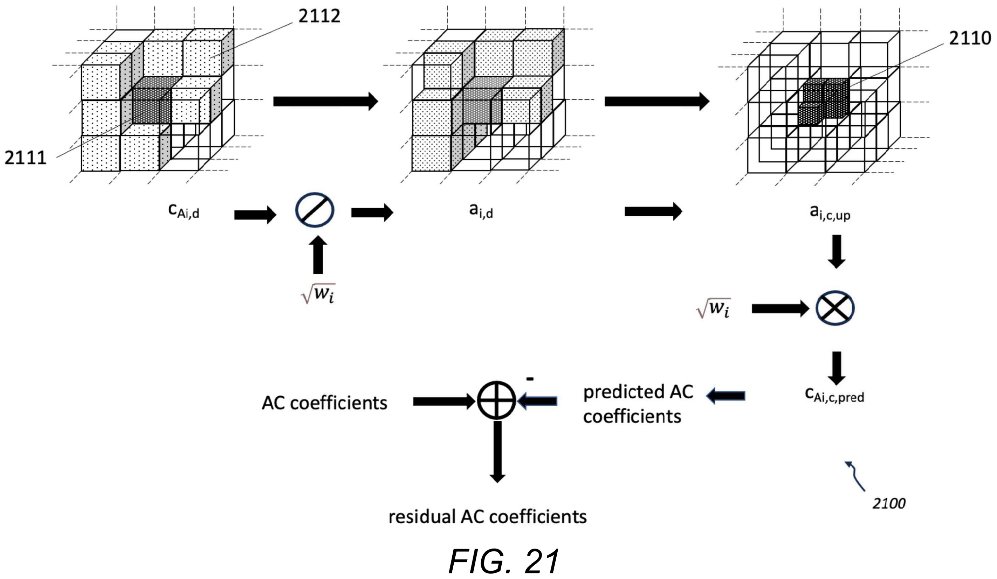

FIG. 21 shows an example method for encoding attribute information for child RAHT nodes using top-down coding and inter-depth prediction. More specifically, FIG. 21 shows an example process (e.g., process 2100) of a method for encoding attribute information for child RAHT node(s) 2110 (e.g., at depth d) of a parent RAHT node 2111 (e.g., at depth d-1) using top-down coding and inter-depth prediction. One or more steps of example process 2100 may be performed and/or implemented, for example, by an encoder (e.g., encoder 114 as described herein with respect to FIG. 1), an example computer system 3200 as described herein with respect to FIG. 32, and/or an example computing device 3330 as described herein with respect to FIG. 33. A set of already-coded neighboring RAHT nodes 2112 of the parent RAHT node 2111 may include RAHT nodes of the RAHT tree at depth d-1 that share at least a vertex with the parent RAHT node 2111.

An encoder may determine DC coefficients $c_{Ai,d}$ for a parent RAHT node 2111 and each of a set of already-coded neighboring RAHT nodes 2112, and may determine (e.g., calculate) a mean sum of attributes value $a_{i,d}$ for the parent RAHT node 2111 and a mean sum of attributes values $a_{i,d}$ for each of the already-coded neighboring RAHT nodes 2112. The encoder may determine the mean sum of attributes values $a_{i,d}$ for the parent RAHT node 2111 and the mean sum of attributes values $a_{i,d}$ for each of the already-coded neighboring RAHT nodes 2112, for example, by dividing the coefficients $c_{Ai,d}$ of each of those RAHT nodes by the square root of its corresponding quantity (e.g., number) of attributes $\sqrt{w_i}$. A mean sum of attributes values $a_{i,d}$ may be determined (e.g., obtained, calculated) as $a_{i,d} = \frac{c_{Ai,d}}{\sqrt{w_i}} = \frac{\sum_{a \in A_i} a}{w_i}$. The encoder may determine a predicted mean sum of attributes values $a_{i,c,up}$ for each child RAHT node 2110 after determining (e.g., obtaining, calculating) the mean sums. The encoder may determine (e.g., calculate, obtain) a predicted mean sum of attributes values $a_{i,c,up}$ for each child RAHT node 2110, for example, by up-sampling the mean sums of attributes values $a_{i,d}$ calculated for the RAHT nodes at the parent node depth 'd'. The encoder may determine a predicted DC coefficient $c_{Ai,c,pred}$ for each child RAHT node 2110, for example, after determining (e.g., calculating, obtaining) the predicted mean sum. The encoder may determine a predicted DC coefficient $c_{Ai,c,pred}$ for each child RAHT node 2110, for example, by multiplying the predicted mean sum of attributes $a_{i,c,up}$ calculated for each child RAHT node 2110 by the square root of its corresponding quantity (e.g., number) of attributes $\sqrt{w_i}$.

The encoder may determine predicted AC coefficients and may determine residual AC coefficients. The encoder may determine predicted AC coefficients and may determine residual AC coefficients, for example, after determining predicted DC coefficients. The encoder may determine predicted AC coefficients from predicted DC coefficient $c_{Ai,c,pred}$. The encoder may determine predicted AC coefficients from predicted DC coefficient $c_{Ai,c,pred}$, for example, based on Equation 1 as described herein. The encoder may determine residual AC coefficients, for example, by subtracting the predicted AC coefficients from original AC coefficients associated with each child RAHT node 2110. Original AC coefficients that may be associated with a child RAHT node 2110 may be determined by the RAHT transform from original attributes to be coded. The residual AC coefficients may be encoded in a bitstream, for example, through quantization (e.g., steps 1520, 1630 as described herein) and entropy coding (e.g., steps 1530, 1640 as described herein).

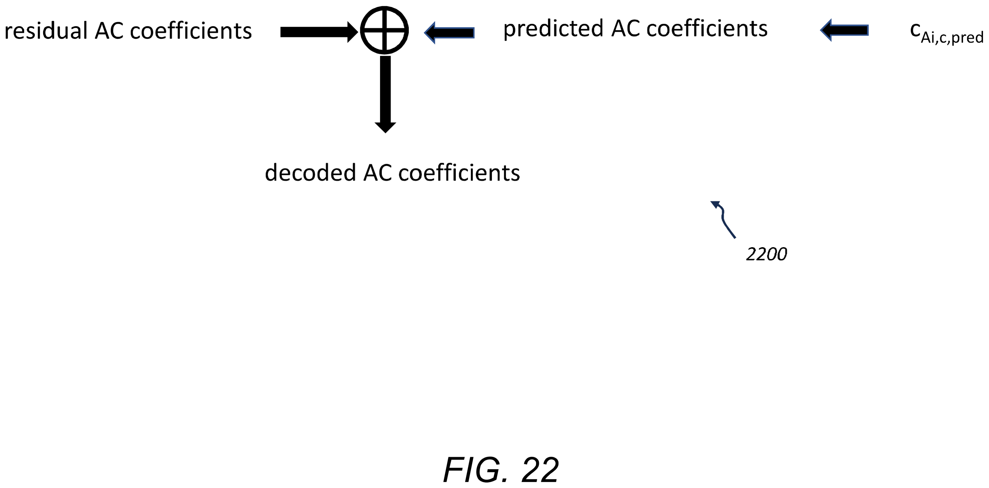

FIG. 22 shows an example method for decoding attribute information for child RAHT nodes using top-down decoding and inter-depth prediction. More specifically, FIG. 22 shows an example process 2200 of a method for decoding attribute information for child RAHT nodes, at depth d, of a parent RAHT node at depth d-1 using top-down decoding and inter-depth prediction. The decoder may perform top-down decoding because the inter-depth prediction goes from depth 'd' to depth d-1, for example, if inter-depth prediction is used in the RAHT transform and coding. One or more steps of example process 2200 may be performed and/or implemented by a decoder (e.g., decoder 120 as described herein with respect to FIG. 1), an example computer system 3200 as described herein with respect to FIG. 32, and/or an example computing device 3330 as described herein with respect to FIG. 33

A decoder may employ the same inter-depth prediction process to generate the predicted mean sum of attributes values $c_{Ai,c,pred}$ for each child node 2110 and the predicted AC coefficients. The decoder may also reconstruct residual AC coefficients from a bitstream, for example, through entropy decoding (e.g., steps 1710 and 1810 of FIGS. 17 and 18 respectively) and inverse quantization (e.g., steps 1720 and 1820 of FIGS. 17 and 18 respectively). The decoder may determine decoded AC coefficients, for example, by adding the predicted AC coefficients to the reconstructed residual AC coefficients.

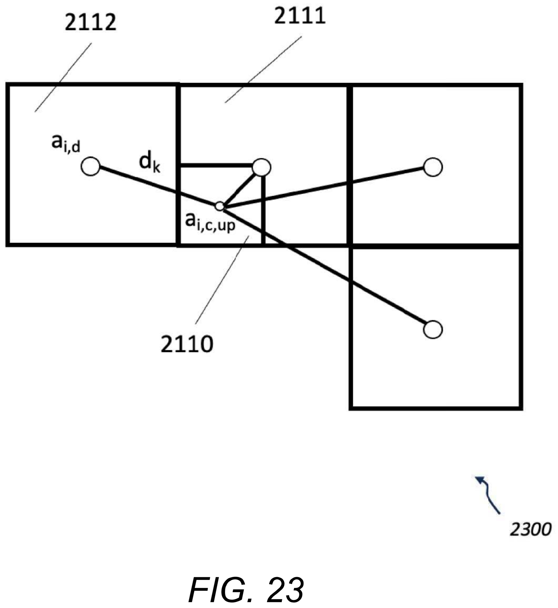

FIG. 23 shows an example method for up-sampling mean sums of attributes values of RAHT nodes at depth d-1. More specifically, FIG. 23 shows an example process 2300 of a method for up-sampling mean sums of attributes values of RAHT nodes at depth 'd-1'. The mean sums of attributes values of RAHT nodes, for example, may include a parent RAHT node 2111 and an already-coded neighboring RAHT node 2112. For clarity and ease of explanation, the example shown in Fig. 23 is illustrated in two dimensions, but extension to three dimensions will be understood in light of the description herein.

An up-sampling operation considers (e.g., uses) a distance metric $d_k$ relating the child RAHT node 2110 to a RAHT node k at depth 'd-1', (e.g., either the parent RAHT node 2111 or each of the three (as in this example) already-coded neighboring RAHT nodes 2112). This distance metric $d_k$ may represent a geometric distance between a center point of the sub-volume corresponding to the child RAHT node 2110 and a center point of the sub-volume corresponding to the RAHT node k 2111, 2112. The inverse $d_k^{-1}$ of the distance metric $d_k$ may represent the relative weight of correlation between attribute information from the child RAHT node 2110 and the RAHT node **k.** Other weighting factors, and/or additional weighting factors, may be used in other implementations of the up-sampling operation.

A predicted mean sum of attributes $a_{i,c,up}$ for a child RAHT node 2110 may be given by the weighted sum:

$$a_{i,c,up} = \sum_k d_k^{-1} a_k / \sum_k d_k^{-1}$$

where $a_k$ indicates the mean sum of attributes calculated for the RAHT node k.

AC coefficients may be directly coded. AC coefficients may be directly coded, for example, if neither intra (e.g., inter-depth prediction) nor inter prediction are used. The direct coding of AC coefficients may be equivalent to coding residual AC coefficients relative to a null predictor and therefore may be referred to as a null prediction mode for coding the current RAHT node.

Prediction modes, that may be used for coding attribute information of RAHT nodes, may be entropy coded in a bitstream to obtain improved compression performance. A prediction mode (e.g., null, intra, or inter) may be encoded as an indication comprising one or more symbols for each RAHT node of a RAHT tree. For example, at most two binary symbols (e.g., flags) may be used to represent one of the three prediction modes. The first binary symbol may signal (e.g., indicate) if the prediction mode is the null prediction mode. The second binary symbol may signal (e.g., indicate) if the prediction mode is either intra or inter prediction mode, for example, if the prediction mode is signaled to not be the null prediction mode.

Each of the one or more symbols may be entropy coded (e.g., encoded, decoded), in a bitstream, by an entropy coder that codes binary symbols based on selecting a context (e.g., a probability model or a context model). The entropy coder may indicate a probability of values of the binary symbols, according to contextual information. A context, for example, may indicate a probability of a value of the symbol being zero (or one). The contextual information may be used to derive (e.g., determine) an index to a set of contexts. The derived (e.g., determined) index may be used to obtain the context from the set of contexts. The index, for example, may point to the context in a list or table containing the set of contexts.

An already-predicted neighboring RAHT node is an already-coded neighboring RAHT node using a prediction mode for coding its AC coefficients. Contextual information may be determined. Contextual information may be determined (e.g., obtained), for example, based on determining a most used (e.g., most common) prediction mode (e.g., referred to as majority voting) among already-predicted neighboring RAHT nodes 2112 of a parent RAHT node 2111. The most used prediction mode may be determined among the prediction modes (e.g., one of null, intra, or inter) used for coding the AC coefficients of already-predicted neighboring RAHT nodes 2112. The most used prediction mode, among the prediction modes (e.g., one of null, intra, or inter), may be used for coding the AC coefficients of already-predicted neighboring RAHT nodes 2112. This may lead to ternary contextual information (e.g., most common prediction mode being one of null, intra, or inter) that may be used to code the prediction mode of a current RAHT node 2110. Contextual information may be determined (e.g., obtained), for example, based on the prediction mode (null, intra, or inter) of the parent RAHT node and based on the quantity (e.g., number) $N_{AC}$ of AC coefficients of a current RAHT node (e.g., a quantity of child nodes of the current RAHT node minus one).

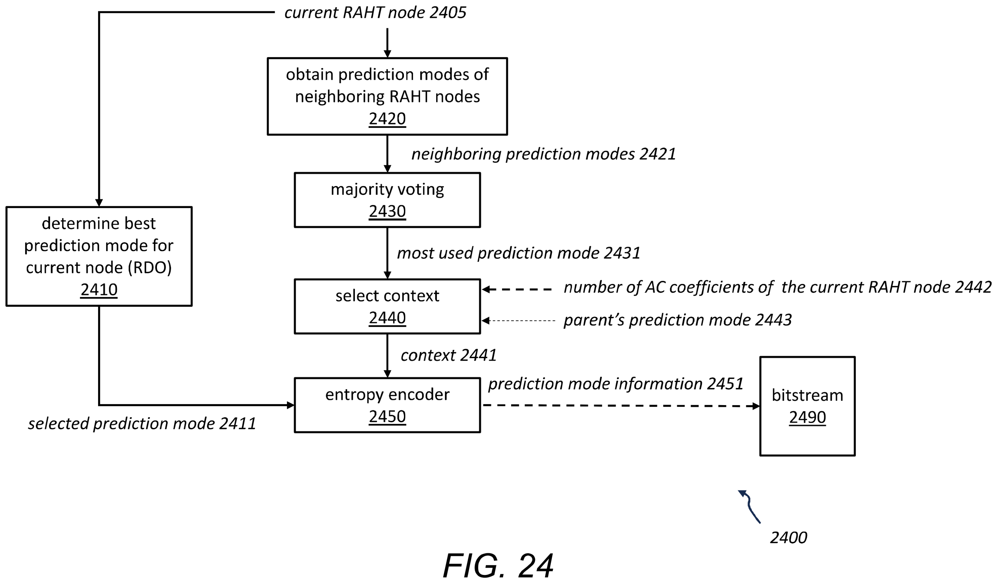

FIG. 24 shows an example method for encoding, in a bitstream, a selected prediction mode used for encoding AC coefficients of a current RAHT node. More specifically, FIG. 24 shows an example process 2400 of a method for encoding, in a bitstream, a selected prediction mode used for encoding AC coefficients of a current RAHT node 2405. One or more steps of example process 2400 may be performed and/or implemented by an encoder (e.g., encoder 114 as described herein with respect to FIG. 1), an example computer system 3200 as described herein with respect to FIG. 32, and/or an example computing device 3330 as described herein with respect to FIG. 33. Steps 2410-2450 may represent components within the encoder.

At step 2410, the encoder may determine a selected prediction mode 2411. The encoder may determine a selected prediction mode, for example, by a Rate Distortion Optimization (RDO) process that may test possible prediction modes. The encoder may determine (e.g., select) one of the possible prediction modes, for example, the prediction mode with the least rate-distortion cost. The prediction mode 2411 may be, for example, a null, intra, or inter prediction mode. At step 2450, the encoder may entropy encode, as prediction mode information 2451 in a bitstream 2490, an indication of the selected prediction mode 2411. The encoder may entropy encode, as prediction mode information 2451 in a bitstream 2490, an indication of the selected prediction mode, for example, based on a context 2441.

At step 2420, the encoder may determine (e.g., obtain) prediction modes 2421 of the already-predicted neighboring RAHT nodes 2112. At step 2430, the encoder may determine (e.g., obtain) a most used prediction mode 2431. The encoder may determine (e.g., obtain) a most used prediction mode 2431, for example, by performing a majority voting comparison among the already-predicted neighboring RAHT nodes 2112.

At step 2440, the encoder may select, for example, among a set of contexts, the context 2441. The encoder may select the context 2441, for example, based on the most used prediction mode 2431. The determined (e.g., obtained) most-used prediction mode 2431 may be used, for example, to derive an index that may point to the context from the set of contexts. The context selection may be further performed based on the quantity (e.g., number) of AC coefficients of the current RAHT node 2442, in the current RAHT node 2405. Additionally, or alternatively, the context selection may be further based on the prediction mode 2443 of the parent RAHT node of the current RAHT node 2405.

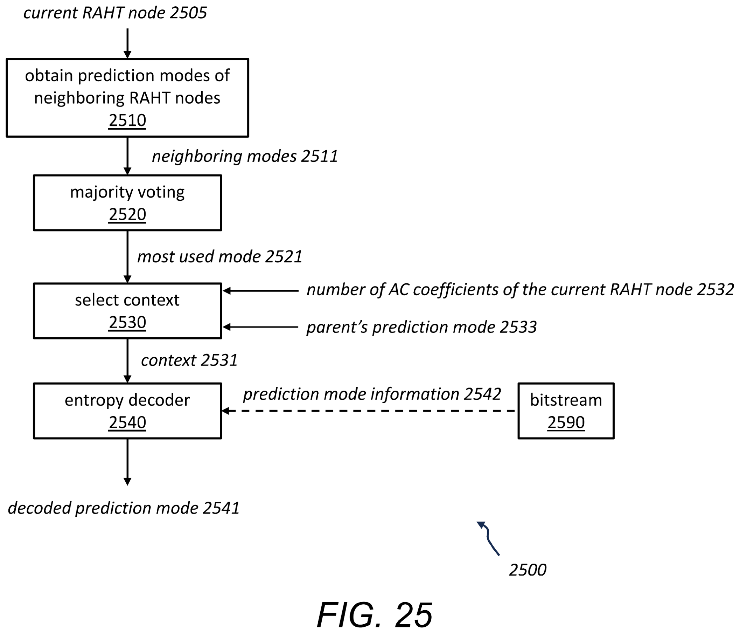

Fig. 25 shows an example method for decoding, from a bitstream, a prediction mode used for encoding AC coefficients of a current RAHT node. More specifically, FIG. 25 shows an example process 2500 of a method for decoding, from a bitstream 2590, a prediction mode used for encoding AC coefficients of a current RAHT node 2505. One or more steps of example process 2500 may be performed and/or implemented by a decoder (e.g., decoder 120 as described herein with respect to FIG. 1), an example computer system 3200 as described herein with respect to FIG. 32, and/or an example computing device 3330 as described herein with respect to FIG. 33. Steps 2510-2590 may represent components within the decoder. Bitstream 2590 may be obtained from the encoding method described herein with respect to FIG. 24.

At step 2540, a decoder may determine (e.g., obtain) a decoded prediction mode 2541 (e.g., null, intra or inter) by entropy decoding, from the bitstream 2590 and based on a context 2531, prediction mode information 2542. The decoder may entropy decode an indication of prediction mode 2541 based on the context 2531. The context 2531 may be obtained via steps 2510, 2520, and 2530, that correspond to steps 2420, 2430, and 2440, respectively, of the encoding method of FIG. 24 to ensure synchronization between encoding and decoding methods.

An iterative RAHT transform may be performed in two phases. In a first phase, a bottom-up (or ascend) traversal of a RAHT tree (e.g., octree) may be performed to compute information (e.g., quantity of attributes, weights, inter predictor, etc.) of each of the RAHT nodes. In a second phase, the transform and coding may be performed according to a top-down (descend) traversal of the RAHT tree. Encoding and decoding of RAHT coefficients may be performed, for example, if the descend phase occurs. Encoding and decoding of RAHT coefficients may be performed during the descend phase because the inter-depth prediction may use weights that may be computed during the ascend phase and AC coefficients that may be associated with already-predicted (coded) neighboring RAHT nodes at the parent node depth of the current node. Inter-depth prediction may be coded down from the root node of the RAHT tree. Encoding and decoding of RAHT coefficients may start from the root RAHT node of the RAHT tree and may proceed down depth per depth until leaf RAHT nodes (corresponding to voxels) are reached. The traversal of RAHT nodes may be in a specific order (e.g., following a Morton order or a raster scan order) for each depth.

A RAHT bitstream resulting from encoding of RAHT coefficients may be constructed according to the traversal of a RAHT tree. A prediction mode (null, intra, or inter) may be selected, for each RAHT node, for example, by performing a (RDO), and encoded in the RAHT bitstream by the RAHT encoding process. AC coefficients may be determined and encoded in the RAHT bitstream based on the selected prediction mode.

Decoding of RAHT coefficients may follow the same traversal order as an encoding of RAHT coefficients, so prediction modes and AC coefficients may be decoded accordingly in the same order as encoded by the encoding of RAHT coefficients.

It is important to ensure effective entropy coding of the prediction modes to obtain overall good compression performance of the RAHT scheme because much of a bitstream may be constituted of entropy coded prediction modes associated with RAHT nodes. Good entropy coding may be obtained by careful construction of contextual information that may drive the selection of contexts.

A cost of coding indications of prediction modes used for coding RAHT coefficients associated with a current RAHT node may be shared among the RAHT coefficients associated with the current RAHT node. There are as many RAHT coefficients as the quantity (e.g., number) $N_{node}$ of occupied RAHT child nodes of the current RAHT node. There is thus one DC coefficient (inherited from the parent RAHT node) and $N_{node}$ -1 AC coefficients that are coded. Therefore, if the RAHT tree is an octree, there are between 0 and 7 AC coefficients associated with each RAHT node.

Consequently, not all the prediction modes have the same impact on the compression scheme. Those prediction modes associated with RAHT nodes having very few AC coefficients may be coded less efficiently than those associated with RAHT nodes having more AC coefficients. This imbalance of AC coefficients in RAHT nodes may lead to lower compression performance to code indications of prediction modes.

The present disclosure is related to improved coding methods of prediction modes used for coding AC coefficients associated with a current RAHT node by inferring prediction modes used for coding AC coefficients associated with a current RAHT node under a set of conditions. The indication of the prediction mode need not be signaled in a bitstream, which may lead to lower bitrate and higher compression gains by inferring a prediction mode used for coding AC coefficients of the current RAHT node.

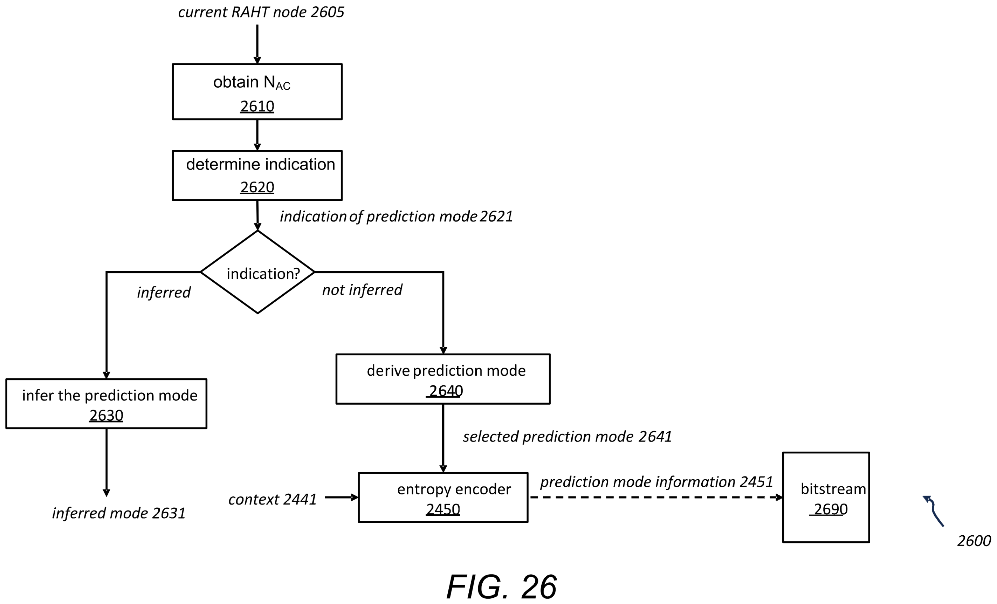

FIG. 26 shows an example method for encoding or inferring a prediction mode used for encoding AC coefficients of a current RAHT node. More specifically, FIG. 26 shows an example process 2600 of a method for entropy encoding or inferring a prediction mode used for encoding AC coefficients of a current RAHT node 2605. One or more steps of the example process 2600 shown in FIG. 26 may be performed and/or implemented, for example, by an encoder (e.g., encoder 114 as described herein with respect to FIG. 1), an example computer system 3200 as described herein with respect to FIG. 32, and/or an example computing device 3330 as described herein with respect to FIG. 33. The process 2600 shown in FIG. 26 may include the same operations (shown as having the same labeled steps) as those described with respect to FIG. 24. Steps 2610-2640 may represent components within the encoder.

An encoder may determine an indication of a prediction mode 2621 that may be used for decoding AC coefficients of the current RAHT node 2605. Determining the indication of the prediction 2621 may comprise determining whether to determine the indication of a prediction mode 2621 from prediction modes used for decoding AC coefficients of already-decoded neighboring RAHT nodes of the current RAHT node or a prediction mode selected from a set of prediction modes. The encoder may determine whether the indication of a prediction mode 2621 is from prediction modes used for decoding AC coefficients of already-decoded neighboring RAHT nodes of the current RAHT node or a prediction mode selected from a set of prediction modes, for example, based on the quantity (e.g., number) of AC coefficients. The encoder may entropy encode in a bitstream 2690 an indication of the selected prediction mode, for example, if the encoder determines to derive the indication. The encoder may encode the AC coefficients of the current RAHT node 2605 according to the indicated prediction mode 2621.

At step 2610, the encoder may obtain a quantity (e.g., number), $N_{AC}$, of AC coefficients of the current RAHT node 2605. At step 2620, the encoder may determine the indication of a prediction mode 2621. The encoder may determine the indication of a prediction mode 2621, for example, based on the quantity (e.g., number) of AC coefficients (e.g., $N_{AC}$).

At step 2630, the encoder may determine an inferred prediction mode 2631. The encoder may determine an inferred prediction mode 2631, for example, by inferring a prediction mode from prediction modes used for encoding and/or decoding AC coefficients of already-decoded neighboring RAHT nodes of the current RAHT node 2605. The encoder may determine an inferred prediction mode 2631 by inferring a prediction mode from prediction modes used for encoding and/or decoding AC coefficients of already-decoded neighboring RAHT nodes of the current RAHT node 2605, for example, if the indication of the prediction mode 2621 indicates the prediction mode used for encoding the AC coefficients of the current RAHT node is inferred.

At step 2640, the encoder may derive the indication of the prediction mode 2621. The encoder may derive the indication of the prediction mode 2621, for example, as corresponding to a prediction mode selected 2641 from a set of prediction modes. The encoder may derive the indication of the prediction mode 2621 as corresponding to a prediction mode selected 2641 from a set of prediction modes, for example, if the indication of the prediction mode 2621 indicates the prediction mode used for encoding the AC coefficients of the current RAHT node is not inferred. At step 2450, (as also described herein with respect to FIG. 24) the encoder may encode, in the bitstream 2690 and as prediction mode information 2451, an indication of the selected prediction mode 2641. The encoder may encode, in the bitstream 2690 and as prediction mode information 2451, an indication of the selected prediction mode 2641, for example, based on the context 2441.

The selection of the prediction mode from the set of prediction modes may be based on RDO costs of the set of prediction modes, as described herein with respect to step 2440 of FIG. 24. The selected prediction mode 2641 may be the selected prediction mode 2411.

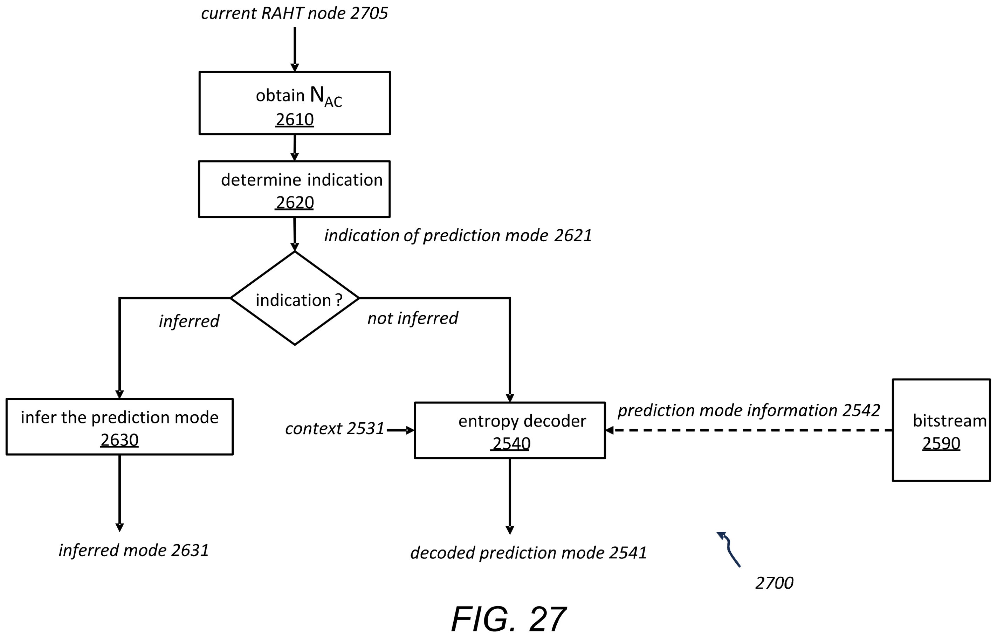

FIG. 27 shows an example method for decoding or inferring a prediction mode used for decoding AC coefficients of a current RAHT node. More specifically, FIG. 27 shows an example process 2700 of a method for entropy decoding or inferring a prediction mode used for decoding AC coefficients of a current RAHT node 2705. One or more steps of the example process 2700 shown in FIG. 27 may be performed and/or implemented, for example, by a decoder (e.g., decoder 120 as described herein with respect to FIG. 1), an example computer system 3200 as described herein with respect to FIG. 32, and/or an example computing device 3330 as described herein with respect to FIG. 33. The process 2700 shown in FIG. 27 may include the same operations (shown as having the same labeled steps) as those described herein with respect to FIG. 25 and FIG. 26.

A decoder may determine an indication of a prediction mode 2621 that may be used for decoding AC coefficients of the current RAHT node 2705. Determining the indication of a prediction mode 2621 may comprise determining, based on the quantity (e.g., number) of AC coefficients, whether to infer the indication of the prediction mode 2621 from prediction modes used for decoding AC coefficients of already-decoded neighboring RAHT nodes of the current RAHT node 2705 or entropy decoding the indication of the prediction mode 2621 from a bitstream. Determining whether to infer the indication of the prediction mode 2621 from prediction modes used for decoding AC coefficients of already-decoded neighboring RAHT nodes of the current RAHT node 2705 or entropy decoding the indication of the prediction mode 2621 from a bitstream may be based on the quantity (e.g., number) of AC coefficients. The encoder may decode the AC coefficients of the current RAHT node according to the indicated prediction mode.

At step 2610, the decoder may obtain a quantity (e.g., number) $N_{AC}$ of AC coefficients of the current RAHT node 2705. At step 2620, the decoder may determine an indication of a prediction mode 2621. The decoder may determine an indication of a prediction mode 2621, for example, based on the quantity (e.g., number) $N_{AC}$.

At step 2630, the decoder may determine an inferred prediction mode 2631. The decoder may determine an inferred prediction mode 2631, for example, by inferring the prediction mode used for decoding the AC coefficients of the current RAHT node 2705 from prediction modes used for decoding AC coefficients of already-decoded neighboring RAHT nodes of the current RAHT node 2705. The decoder may determine an inferred prediction mode 2631, for example, by inferring the prediction mode used for decoding the AC coefficients of the current RAHT node 2705 from prediction modes used for decoding AC coefficients of already-decoded neighboring RAHT nodes of the current RAHT node 2705, for example, if the indication of the prediction mode 2621 indicates the prediction mode used for decoding the AC coefficients of the current RAHT node is inferred.

At step 2540, the decoder may obtain a decoded prediction mode 2541. The decoder may obtain a decoded prediction mode 2541, for example, by entropy decoding, from bitstream 2590 and based on a context 2531, prediction mode information 2542. The decoder may obtain a decoded prediction mode 2541, for example, by entropy decoding, from bitstream 2590 and based on a context 2531, prediction mode information 2542, for example, if the indication of the prediction mode 2621 indicates the prediction mode used for decoding the AC coefficients of the current RAHT node is not inferred. The decoder may entropy decode an indication of the decoded prediction mode 2541. The decoder may entropy decode an indication of the decoded prediction mode 2541, for example, from the prediction mode information 2542. The indication may indicate the prediction mode as being, for example, a null mode, an intra prediction mode, or an inter prediction mode.

The determination to the indication of the prediction mode 2621 may be based on the quantity (e.g., number) $N_{AC}$ of AC coefficients of the current RAHT node 2705. The quantity (e.g., number) of child nodes of the current RAHT node minus one, for example, may be lower than a threshold.

It has been observed, from process 2400 of FIG. 24 for encoding an indication of the prediction mode used for encoding AC coefficients of the current RAHT node 2405, that a selection, by an RDO process 2410, of intra or inter prediction mode 2411 may be correlated to the proportion of inter prediction modes used for encoding the AC coefficients of the already-encoded neighboring RAHT nodes of the current RAHT node 2405. This proportion may be given by the ratio ρ:

$$\rho = \frac{N_{inter}}{N_{total}}$$

with $N_{total} = N_{intra} + N_{inter}$ and where $N_{intra}$ is the quantity (e.g., number) of already-intra-predicted neighboring RAHT nodes of the current RAHT node 2405 and $N_{inter}$ is the quantity (e.g., number) of already-inter-predicted neighboring RAHT nodes of the current RAHT node 2405. An already-intra-predicted neighboring RAHT node may be an already-coded neighboring RAHT node using an intra prediction mode (e.g., the inter-depth prediction mode described herein) for coding its AC coefficients. An already-inter-predicted neighboring RAHT node may be an already-coded neighboring RAHT node using an inter prediction mode, e.g., as defined by the inter RAHT scheme, for coding its AC coefficients.

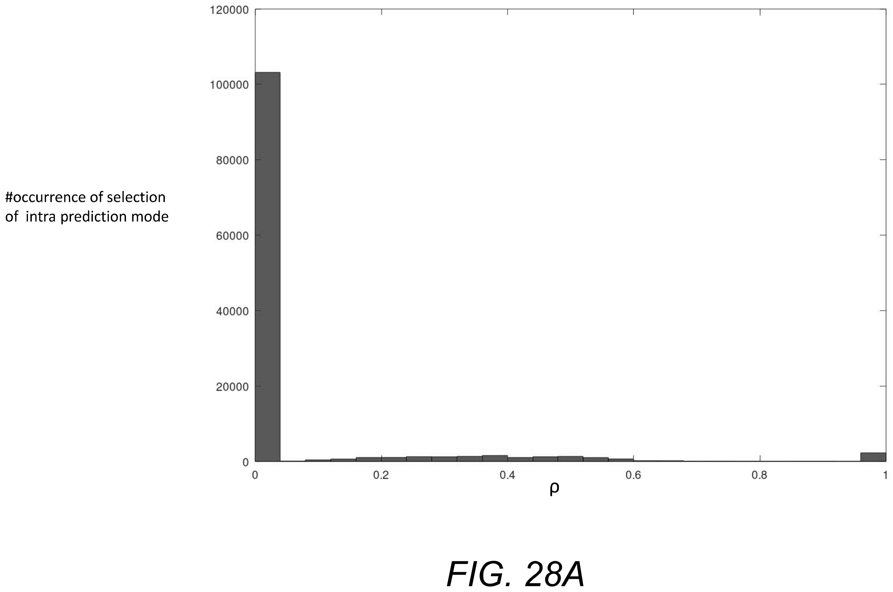

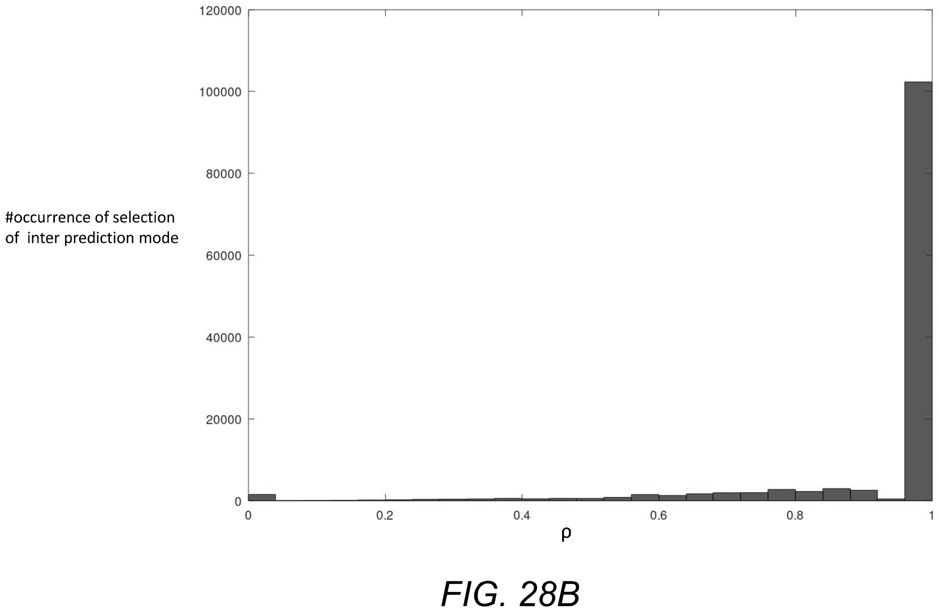

FIG. 28A and FIG. 28B show example simulation results, illustrating an occurrence of a specific prediction mode being selected by the encoder for coding AC coefficients of a RAHT node, being highly correlated with the ratio ρ of the probability of selection of inter prediction mode. FIG. 28A shows an example histogram plot of occurrence of intra prediction mode as a selected prediction mode. More specifically, FIG. 28A shows an example histogram plot of occurrence of intra prediction mode as selected prediction mode 2411 depending on the ratio ρ. FIG. 28B shows an example histogram plot of occurrence of inter prediction mode as a selected prediction mode. More specifically, FIG. 28B shows an example histogram plot of occurrence of inter prediction mode as selected prediction mode 2411 depending on the ratio ρ.

It is shown that low values of the ratio ρ are highly correlated with selection of an intra prediction mode, and high values of the ratio ρ are correlated with selection of an inter prediction mode. This confirms a correlation between the prediction modes used for encoding AC coefficients of already-coded neighboring RAHT nodes of the current RAHT node 2405 and the selected prediction mode 2411 of the current RAHT node 2405.

It is shown from the histograms of FIGS. 28A & 28B that extreme values (e.g., values close to 0 or close to 1) of the ratio ρ may be overrepresented. This may be due to the presence of many current RAHT nodes having only intra-predicted neighboring RAHT nodes or only inter-predicted neighboring RAHT nodes as already-predicted neighboring RAHT nodes. Also, it is observed from the histograms of FIGS. 28A & 28B that if $N_{intra}$ is equal to 0 (or equivalently, ρ=1), it is very likely that the selected prediction mode is inter prediction mode. On the other hand, if $N_{inter}$ is equal to 0 (or equivalently, ρ=0), it is very likely that the selected prediction mode is intra prediction mode. Accordingly, an inference of the prediction mode may have a high accuracy when the quantity (e.g., number) $N_{intra}$ or $N_{inter}$ is equal to zero.

The determination to infer indication of the prediction mode 2621 may be based on the quantity (e.g., number) $N_{intra}$ equaling zero or the quantity (e.g., number) $N_{inter}$ equaling zero. The determination to infer indication of the prediction mode 2621 may be based on the quantity (e.g., number) $N_{intra}$ being lower than a first threshold or the quantity (e.g., number) of $N_{inter}$ being lower than a second threshold.

The indication of the prediction mode 2621 may be inferred, and the prediction mode, indicated by the indication, may be an inter prediction mode. The indication of the prediction mode 2621 may be inferred, and the prediction mode may be an inter prediction mode, for example, if the quantity (e.g., number) $N_{intra}$ is either equal to zero and/or lower than a first threshold. The indication of the prediction mode 2621 may be inferred, and the prediction mode, indicated by the indication, may be an intra prediction mode. The indication of the prediction mode 2621 may be inferred, and the prediction mode may be an intra prediction mode, for example, if the quantity (e.g., number) $N_{inter}$ is either equal to zero or lower than a second threshold.

FIG. 29 shows an example method for determining an indication of a prediction mode for coding AC coefficients of a current RAHT node. More specifically, FIG. 29 shows an example process 2900 of a method for determining an indication of the prediction mode 2621 for coding (e.g., encoding or decoding) AC coefficients of a current RAHT node 2905. One or more steps of the example process 2900 may be performed and/or implemented, for example, by a coder such as an encoder (e.g., encoder 114 as described herein with respect to FIG. 1), a decoder (e.g., decoder 120 as described herein with respect to FIG. 1), an example computer system 3200 as described herein with respect to FIG. 32, and/or an example computing device 3330 as described herein with respect to FIG. 33. Steps 2910-2931 may represent components within the encoder or the decoder. The process 2900 as described herein with respect to FIG. 29 may include the same operations (e.g., shown as having the same labeled steps) as those described herein with respect to FIG. 26.

At step 2910, a coder may obtain a quantity (e.g., number) $N_{intra}$ 2911 of already-intra-predicted neighboring RAHT nodes of a current RAHT node 2905 and a quantity (e.g., number) $N_{inter}$ 2911 of already-inter-predicted neighboring RAHT nodes of the current RAHT node 2905. The current RAHT node 2905 may be the current RAHT node 2605 as described herein with respect to FIG. 26) or the current RAHT node 2705 as described herein with respect to FIG. 27.

At step 2610, the coder may obtain a quantity (e.g., number) $N_{AC}$ of AC coefficients 2919 of the current RAHT node 2905. At step 2920, the coder may determine whether the quantity (e.g., number) $N_{AC}$ 2919 is lower than or equal to a threshold $th_{AC,intra}$ and whether the quantity (e.g., number) $N_{inter}$ is lower than or equal to a threshold $th_{inter}$.

At step 2921, the coder may determine the prediction mode, for encoding or decoding the AC coefficients of the current RAHT node 2905, as being an intra prediction mode 2922. The coder may determine the prediction mode, for encoding or decoding the AC coefficients of the current RAHT node 2905, as being an intra prediction mode 2922, for example, if $N_{AC} \le th_{AC,intra}$ and $N_{inter} \le th_{inter}$. At step 2930, the coder may determine whether the quantity (e.g., number) $N_{AC}$ is lower than or equal to a threshold $th_{AC,inter}$ and whether the quantity (e.g., number) $N_{intra}$ is lower than or equal to a threshold $th_{intra}$.

At step 2931, the coder may determine the prediction mode for encoding or decoding the AC coefficients of the current RAHT node 2905 as being an inter prediction mode 2932. The coder may determine the prediction mode for encoding or decoding the AC coefficients of the current RAHT node 2905 as being an inter prediction mode 2932, for example, if $N_{AC} \le th_{AC,inter}$ and $N_{intra} \le th_{intra}$. Thresholds $th_{inter}$ and $th_{intra}$ may be, for example, equal to 0 and 1, respectively. The thresholds $th_{AC,inter}$ and $th_{AC,intra}$ may be, for example, equal to 1 and 2, respectively. Oher values of the various thresholds may be possible. Thresholds may be predetermined values at an encoder and/or a decoder. Thresholds may be signaled in a bitstream and the decoder may obtain the thresholds from the bitstream.

The prediction mode may be inferred (e.g., steps 2921 and 2931 correspond to step 2630 of FIG. 26) to be an inferred mode 2631 (e.g., one of intra prediction mode 2922 or inter prediction mode 2932). The prediction mode may be inferred to be an inferred mode 2631 (e.g., one of intra prediction mode 2922 or inter prediction mode 2932), for example, if a set of conditions specified in one of the steps 2920 or 2930 are satisfied. In some instances, the prediction mode for encoding or decoding the AC coefficients of the current RAHT node 2905 may not be inferred. An indication of the prediction mode 2621 may be encoded (e.g., step 2450 as described herein with respect to FIG. 26) in a bitstream 2490, for example, by an encoder. An indication of the prediction mode 2621 may be decoded/obtained (e.g., step 2540 as described herein with respect to FIG. 27) from the bitstream 2590, for example, by a decoder.

The encoder may derive (e.g., step 2640 as described herein with respect to FIG. 26) the indication of the prediction mode 2621 as corresponding to a prediction mode selected 2641 from a set of prediction modes. The encoder may entropy encode (e.g., step 2450), in the bitstream 2490 and as prediction mode information 2451, the indication of the selected prediction mode 2641. The encoder may entropy encode (e.g., step 2450), in the bitstream 2490 and as prediction mode information 2451, the indication of the selected prediction mode 2641, for example, based on the context 2441. The encoder may entropy encode (e.g., step 2450), in the bitstream 2490 and as prediction mode information 2451, the indication of the selected prediction mode 2641 based on the context 2441, for example, if the prediction mode is not inferred. The decoder may obtain (e.g., step 2540 as described herein with respect to FIG. 27) the decoded prediction mode 2541. The decoder may obtain (e.g., step 2540 as described herein with respect to FIG. 27) the decoded prediction mode 2541, for example, by entropy decoding, from bitstream 2590 and based on the context 2531, prediction mode information 2542. The decoder may decode, for example, the indication of the selected prediction mode, which corresponds to the selected prediction mode 2641.

An ordering of steps 2920 and 2930 of FIG. 29 may be reversed. Step 2930 may follow steps 2610 and 2910 and step 2920 may be performed, for example, if the result of step 2930 is no. Step 2930 related to checking whether the prediction mode is inferred to be an inter prediction mode may be performed, for example, before step 2920 related to checking whether the prediction mode is inferred to be an intra prediction mode.

The determination to infer the indication of the prediction mode 2621 may be based on the prediction mode of the parent RAHT node of the current RAHT node. The prediction mode may be inferred to be a prediction mode determined to be available and/or permitted, for example, depending on the prediction mode of the parent RAHT node.

At step 2920, an additional condition to determine whether to infer the prediction mode as intra prediction mode 2922 may be to determine that the prediction mode of the parent RAHT node is an intra prediction mode. An additional condition to determine whether to infer the prediction mode as intra prediction mode 2922 may be determining that the prediction mode of the parent RAHT node is an intra prediction mode, for example, if inferring the prediction mode occurs. At step 2930, an additional condition to determine whether to infer the prediction mode as inter prediction mode 2932 may be to determine that the prediction mode of the parent RAHT node is an inter prediction mode. An additional condition to determine whether to infer the prediction mode as inter prediction mode 2932 may be determining that the prediction mode of the parent RAHT node is an inter prediction mode, for example, if inferring the prediction mode occurs. The inference decision (e.g., determining whether to infer the prediction mode as inter prediction mode) may depend on $N_{intra}$, $N_{inter}$, $N_{AC}$ and/or the parent node's prediction mode.

The already-coded neighboring RAHT nodes of the current RAHT node may comprise the parent node of the current RAHT node and one or more other children RAHT nodes of the parent node. The already-coded neighboring RAHT nodes of the current RAHT node may comprise the parent node of the current RAHT nodes at parent depth spatially close to the parent (e.g., having a depth index within a threshold of a depth index of the parent), and child nodes of the latter.

FIGS. 30 shows an example method for encoding or inferring a prediction mode used for encoding AC coefficients of a current RAHT node. More specifically, FIG. 30 shows a flowchart 3000 of an example method for entropy encoding or inferring a prediction mode used for encoding AC coefficients of a current RAHT node. The example method of flowchart 3000 may be performed and/or implemented, for example, by an encoder (e.g., encoder 114 as described herein with respect to FIG. 1), an example computer system 3200 as described herein with respect to FIG. 32, and/or an example computing device 3330 as described herein with respect to FIG. 33. At step 3010, an encoder may determine (e.g., obtain) a quantity (e.g., number) of AC coefficients of a current RAHT node of a RAHT tree.

At step 3020 the encoder may determine an indication of a prediction mode used for encoding the AC coefficients of the current RAHT node. Determining the indication of the prediction mode may comprise determining, whether to infer the indication of the prediction mode from prediction modes used for encoding AC coefficients of already-encoded neighboring RAHT nodes of the current RAHT node. Determining the indication of the prediction mode may comprise deriving, at step 3020, the indication of the prediction mode as corresponding to a prediction mode selected from a set of prediction modes. Determining whether to infer the indication of the prediction mode or derive the indication of the prediction mode may be, for example, based on the quantity (e.g., number) of AC coefficients. The indication of the selected prediction mode may be entropy encoded in a bitstream. The encoder may entropy encode the indication of the selected prediction mode in the bitstream to be decoded by a decoder. The encoder may entropy encode the indication of the selected prediction mode in the bitstream to be decoded by a decoder, for example, after deriving the indication of the prediction mode.

Step 3020 may be split into two consecutive steps. First, the encoder may determine whether to infer an indication of a prediction mode or to derive the indication of the prediction mode based on the number of AC coefficients. Following this determination, the encoder may either derive the indication of the prediction mode from a set of prediction modes or may infer the indication of the prediction mode from already-encoded neighboring RAHT nodes.

At step 3030, the encoder may encode AC coefficients of the current RAHT node according to the indicated prediction mode. Examples of encoding the AC coefficients in an intra prediction mode or an inter prediction mode are described herein with respect to FIGS. 24-26.

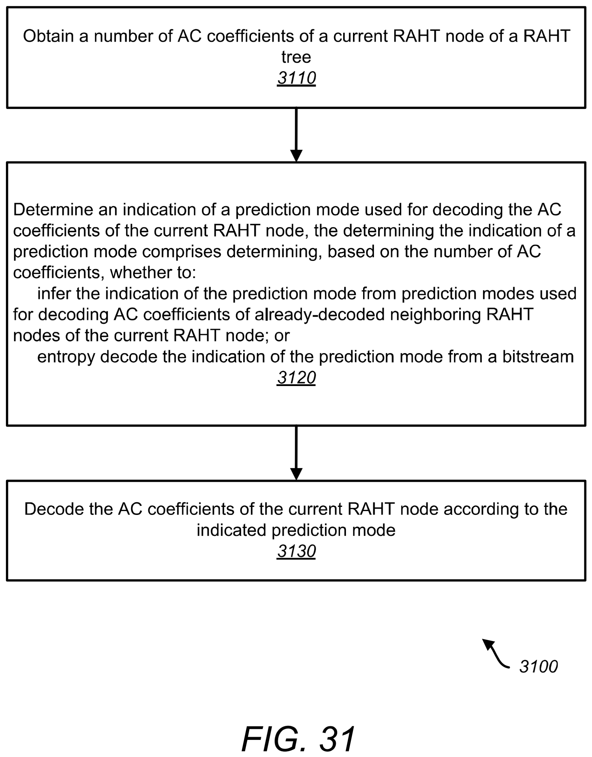

FIGS. 31 shows an example method for decoding or inferring a prediction mode used for decoding AC coefficients of a current RAHT node. More specifically, FIG. 31 shows a flowchart 3100 of an example method for entropy decoding or inferring a prediction mode used for decoding AC coefficients of a current RAHT node. The example method of flowchart 3100 may be performed and/or implemented, for example, by a decoder (e.g., decoder 120 as described herein with respect to FIG. 1), an example computer system 3200 as described herein with respect to FIG. 32, and/or an example computing device 3330 as described herein with respect to FIG. 33. At step 3110, a decoder may determine (e.g., obtain) a quantity (e.g., number) of AC coefficients of a current RAHT node of a RAHT tree .

At step 3120, the decoder may determine an indication of a prediction mode, used for decoding the AC coefficients of the current RAHT node. Determining the indication of a prediction mode may comprise determining, whether to infer the indication of the prediction mode from prediction modes used for decoding AC coefficients of already-decoded neighboring RAHT nodes of the current RAHT node. Determining the indication of a prediction mode may comprise entropy decoding the indication of the prediction mode from a bitstream. Determining whether to infer the indication of the prediction mode or entropy decode the indication of the prediction mode may be, for example, based on the quantity (e.g., number) of AC coefficients.

At step 3120, the decoder may first determine whether to infer an indication of a prediction mode or to decode the indication of the prediction mode, based on the number of AC coefficients. Following this determination, the decoder may either decode the indication of the prediction mode from a bitstream or infer the indication of the prediction mode from already-decoded neighboring RAHT nodes.

The indicated prediction mode maybe, for example, the same prediction mode determined by the encoder to encode the AC coefficients in the bitstream (e.g., steps 3020 and 3030).

At step 3130, the decoder may decode the AC coefficients of the current RAHT node according to the indicated prediction mode. Examples of decoding the AC coefficients in an intra prediction mode or an inter prediction mode are described herein.

Features of the present disclosure may be implemented in hardware using analog and/or digital circuits, in software, through the execution of instructions by one or more general purpose or special-purpose processors, or as a combination of hardware and software. Consequently, features of the present disclosure may be implemented in the environment of a computer system or other processing system. An example of such a computer system 3200 is shown in FIG. 32. FIG. 32 shows an example computer system in which examples of the present disclosure may be implemented. For example, the example computer system 3200 shown in FIG. 32 may implement one or more of the methods described herein. For example, various devices and/or systems described herein (e.g., in FIGS. 1, 6, 10-18, 22-27, 29, and 30) may be implemented in the form of one or more computer systems 3200. Furthermore, each of the steps of the flowcharts depicted in this disclosure may be implemented on one or more computer systems 3200. If/when more than one computer system 3200 is used to implement features of the present disclosure, the computer systems 3200 may be interconnected by one or more networks to form a cluster of computer systems that may act as a single pool of seamless resources. The interconnected computer systems 3200 may form a "cloud" of computers.

The computer system 3200 may comprise one or more processors, such as a processor 3204. The processor 3204 may be a special purpose processor, a general purpose processor, a microprocessor, and/or a digital signal processor. The processor 3204 may be connected to a communication infrastructure 3202 (e.g., a bus or network). The computer system 3200 may also comprise a main memory 3206 (e.g., a random access memory (RAM)) and/or a secondary memory 3208.

The secondary memory 3208 may comprise a hard disk drive 3210 and/or a removable storage drive 3212 (e.g., a magnetic tape drive, an optical disk drive, and/or the like). The removable storage drive 3212 may read from and/or write to a removable storage unit 3216. The removable storage unit 3216 may comprise a magnetic tape, an optical disk, and/or the like. The removable storage unit 3216 may be read by and/or may be written to the removable storage drive 3212. The removable storage unit 3216 may comprise a computer usable storage medium having stored therein computer software and/or data.

The secondary memory 3208 may comprise other similar means for allowing computer programs or other instructions to be loaded into the computer system 3200. Such means may include a removable storage unit 3218 and/or an interface 3214. Examples of such means may comprise a program cartridge and/or a cartridge interface (such as in video game devices), a removable memory chip (such as an erasable programmable read-only memory (EPROM) or a programmable read-only memory (PROM)) and associated socket, a thumb drive and USB port, and/or other removable storage units 3218 and interfaces 3214 which may allow software and/or data to be transferred from the removable storage unit 3218 to the computer system 3200.

The computer system 3200 may also comprise a communications interface 3220. The communications interface 3220 may allow software and data to be transferred between the computer system 3200 and external devices. Examples of the communications interface 3220 may include a modem, a network interface (e.g., an Ethernet card), a communications port, etc. Software and/or data transferred via the communications interface 3220 may be in the form of signals which may be electronic, electromagnetic, optical, and/or other signals capable of being received by the communications interface 3220. The signals may be provided to the communications interface 3220 via a communications path 3222. The communications path 3222 may carry signals and may be implemented using wire or cable, fiber optics, a phone line, a cellular phone link, an RF link, and/or any other communications channel(s).

The computer system 3200 may also comprise one or more sensor(s) 3224. The sensor(s) 3224 may measure or detect one or more physical quantities and convert the measured or detected physical quantities into an electrical signal in digital and/or analog form. For example, the sensor(s) 3224 may include an eye tracking sensor to track the eye movement of a user. A display of a point cloud may be updated, for example, based on the eye movement of a user. The sensor(s) 3224 may include a head tracking sensor to track the head movement of a user. A display of a point cloud may be updated, for example, based on the head movement of a user. The sensor(s) 3224 may include a camera sensor for taking photographs and/or a 3D scanning device (e.g., a laser scanning device, a structured light scanning device, and/or a modulated light scanning device). The 3D scanning devices may determine geometry information by moving one or more laser heads, structured light, and/or modulated light cameras relative to the object or scene being scanned. The geometry information may be used to construct a point cloud.

A computer program medium and/or a computer readable medium may be used to refer to tangible storage media, such as removable storage units 3216 and 3218 or a hard disk installed in the hard disk drive 3210. The computer program products may be means for providing software to the computer system 3200. The computer programs (which may also be called computer control logic) may be stored in the main memory 3206 and/or the secondary memory 3208. The computer programs may be received via the communications interface 3220. Such computer programs, when executed, may enable the computer system 3200 to implement the present disclosure as discussed herein. In particular, the computer programs, when executed, may enable the processor 3204 to implement the processes of the present disclosure, such as any of the methods described herein. Accordingly, such computer programs may represent controllers of the computer system 3200.

Features of the disclosure may be implemented in hardware using, for example, hardware components such as application-specific integrated circuits (ASICs) and gate arrays. Implementation of a hardware state machine to perform the functions described herein will also be apparent to persons skilled in the relevant art(s).

FIG. 33 shows example elements of a computing device that may be used to implement any of the various devices described herein, including, for example, a source device (e.g., 102), an encoder (e.g., 114), a destination device (e.g., 106), a decoder (e.g., decoder 120 as described herein with respect to FIG. 1), and/or any computing device described herein. The computing device 3330 may include one or more processors 3331, which may execute instructions stored in the random-access memory (RAM) 3333, the removable media 3334 (such as a Universal Serial Bus (USB) drive, compact disk (CD) or digital versatile disk (DVD), or floppy disk drive), or any other desired storage medium. Instructions may also be stored in an attached (or internal) hard drive 3335. The computing device 3330 may also include a security processor (not shown), which may execute instructions of one or more computer programs to monitor the processes executing on the processor 3331 and any process that requests access to any hardware and/or software components of the computing device 3330 (e.g., ROM 3332, RAM 3333, the removable media 3334, the hard drive 3335, the device controller 3337, a network interface 3339, a GPS 3341, a Bluetooth interface 3342, a WiFi interface 3343, etc.). The computing device 3330 may include one or more output devices, such as the display 3336 (e.g., a screen, a display device, a monitor, a television, etc.), and may include one or more output device controllers 3337, such as a video processor. There may also be one or more user input devices 3338, such as a remote control, keyboard, mouse, touch screen, microphone, etc. The computing device 3330 may also include one or more network interfaces, such as a network interface 3339, which may be a wired interface, a wireless interface, or a combination of the two. The network interface 3339 may provide an interface for the computing device 3330 to communicate with a network 3340 (e.g., a RAN, or any other network). The network interface 3339 may include a modem (e.g., a cable modem), and the external network 3340 may include communication links, an external network, an in-home network, a provider's wireless, coaxial, fiber, or hybrid fiber/coaxial distribution system (e.g., a DOCSIS network), or any other desired network. Additionally, the computing device 3330 may include a location-detecting device, such as a global positioning system (GPS) microprocessor 3341, which may be configured to receive and process global positioning signals and determine, with possible assistance from an external server and antenna, a geographic position of the computing device 3330.

The example in FIG. 33 may be a hardware configuration, although the components shown may be implemented as software as well. Modifications may be made to add, remove, combine, divide, etc. components of the computing device 3330 as desired. Additionally, the components may be implemented using basic computing devices and components, and the same components (e.g., processor 3331, ROM storage 3332, display 3336, etc.) may be used to implement any of the other computing devices and components described herein. For example, the various components described herein may be implemented using computing devices having components such as a processor executing computer-executable instructions stored on a computer-readable medium, as shown in FIG. 33. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: determining, by a computing device, a quantity of alternating current (AC) coefficients of a current RAHT node of a RAHT tree.

Clause 2. The method of clause 1, further comprising: determining an indication of a prediction mode used for decoding the AC coefficients of the current RAHT node, wherein the determining the indication of the prediction mode of a prediction mode comprises determining, based on the number of AC coefficients, whether to: infer the indication of the prediction mode from prediction modes used for decoding AC coefficients of already-decoded neighboring RAHT nodes of the current RAHT node; or decode the indication of the prediction mode from a bitstream.

Clause 3. The method of any one of clause 1-2, further comprising; decoding the AC coefficients of the current RAHT node based on the indicated prediction mode.

Clause 4. A method comprising: determining, by a computing device, a quantity of alternating current (AC) coefficients of a current region adaptive hierarchical transform (RAHT) node of a RAHT tree.

Clause 5. The method of clause 4, further comprising: determining, based on the quantity of AC coefficients, whether to: infer an indication of a prediction mode from prediction modes used for decoding AC coefficients of already-decoded neighboring RAHT nodes of the current RAHT node, or decode the indication of the prediction mode from a bitstream.

Clause 6 The method of any one of clauses 4-5, further comprising: determining the indication of the prediction mode used for decoding the AC coefficients of the current RAHT node, based on whether to infer or decode the indication of the prediction mode.

Clause 7. The method of any one of clauses 4-6, further comprising: decoding, based on the indicated prediction mode, the AC coefficients of the current RAHT node.

Clause 8. The method of any one of clauses 1-7, wherein the determining whether to infer the indication of the prediction mode is based on the quantity of AC coefficients being lower than a threshold.

Clause 9. The method of any one of clauses 1-8, wherein the determining whether to infer the indication of the prediction mode is based on a quantity of already-intra-predicted neighboring RAHT nodes of the current RAHT node or a quantity of already-inter-predicted neighboring RAHT nodes of the current RAHT node, wherein: an already-intra-predicted neighboring RAHT node is an already-decoded neighboring RAHT node using an intra prediction mode for coding its AC coefficients, and an already-inter-predicted neighboring RAHT node is an already-decoded neighboring RAHT node using an inter prediction mode for coding its AC coefficients.

Clause 10. The method of any one of clauses 1-9, wherein the determining whether to infer the indication of the prediction mode is further based on a prediction mode of a parent RAHT node of the current RAHT node.

Clause 11. The method of any one of clauses 1-10, wherein the determining whether to infer the indication of the prediction mode is based on the quantity of AC coefficients being lower than a second threshold and the quantity of already-intra-predicted neighboring RAHT nodes of the current RAHT node being lower than a third threshold.

Clause 12. The method of any one of clauses 1-11, wherein the determining whether to infer the indication of the prediction mode is based on a quantity of already-intra-predicted neighboring RAHT nodes of the current RAHT node that equal zero or a quantity of already-inter-predicted neighboring RAHT nodes of the current RAHT node equaling zero.

Clause 13. The method of any one of clauses 1-12, wherein the determining whether to infer the indication of the prediction mode is based on a quantity of already-intra-predicted neighboring RAHT nodes of the current RAHT node being lower than a second threshold or a quantity of already-inter-predicted neighboring RAHT nodes of the current RAHT node being lower than a third threshold.

Clause 14. The method of clauses 12-13 wherein the indication of the prediction is inferred and the prediction mode indicated by the indication is an inter prediction mode when the number of already-intra-predicted neighboring RAHT nodes of the current RAHT node is either equal to zero or lower than the first threshold.

Clause 15. The method of any one of clauses 12-13, wherein the indication of the prediction is inferred and the prediction mode indicated by the indication is an intra prediction mode when the number of already-inter-predicted neighboring RAHT nodes of the current RAHT node is either equal to zero or lower than the second threshold.

Clause 16. The method of any one of clauses 1-15,wherein determining whether to infer the indication of the prediction mode is based on a quantity of already-intra-predicted neighboring RAHT nodes of the current RAHT node or a quantity of already-inter-predicted neighboring RAHT nodes of the current RAHT node, wherein an already-intra-predicted neighboring RAHT nodes is an already-encoded/decoded neighboring RAHT node using an intra prediction mode for coding its AC coefficients, and an already-inter-predicted neighboring RAHT nodes is an already-coded/decoded neighboring RAHT node using an inter prediction mode for coding its AC coefficients.

Clause 17. The method of any one of clauses 1-15, wherein the already-decoded neighboring RAHT nodes of the current RAHT node comprise a parent node of the current RAHT node, and one or more other children RAHT nodes of the parent node.

Clause 18. The method of any one of clauses 1-17, wherein the determining whether to infer the indication of the prediction mode is based on the quantity of AC coefficients being lower than a first threshold and a quantity of already-inter-predicted neighboring RAHT nodes of the current RAHT node being lower than or equal to a second threshold.

Clause 19. The method of clause 18, wherein the inferred prediction mode for decoding the AC coefficients of the current RAHT node is an intra prediction mode.

Clause 20. The method of clause 8, wherein the determination to infer the indication is based on the number of AC coefficients is lower than a third threshold and the number of already-intra-predicted neighboring RAHT nodes of the current RAHT node is lower than a fourth threshold.

Clause 21. The method of clause 19, wherein the inferred prediction mode for decoding the AC coefficients of the current RAHT node is an inter prediction mode.

Clause 22. The method of any one of clauses 18 - 21, wherein the thresholds are predetermined values.

Clause 23. The method of any one of clauses 18 - 21, wherein the thresholds are signaled in a bitstream.

Clause 24. The method of any one of clauses 1-23, wherein the determining to infer the indication of the prediction mode is further based on the prediction mode of the parent RAHT node of the current RAHT node.

Clause 25. The method of clause 24, wherein the indication of the prediction is inferred and the prediction mode indicated by the indication is an intra prediction mode when the prediction mode of the parent RAHT mode is an intra prediction mode.

Clause 26. The method of clause 24, wherein the indication of the prediction is inferred and the prediction mode indicated by the indication is an inter prediction mode when the prediction mode of the parent RAHT mode is an inter prediction mode.

Clause 27. The method of any one of clauses 1-26, wherein the already-coded neighboring RAHT nodes of the current RAHT node comprises the parent node of the current RAHT node and one or more other children RAHT nodes of the parent node.

Clause 28. The method of any one of clauses 1-26, wherein the already-coded neighboring RAHT nodes of the current RAHT node comprises the parent node of the current RAHT, nodes at parent depth spatially close to the parent, and child nodes of the latter.

Clause 29. A method comprising: determining, by a computing device, a quantity of AC coefficients of a current region adaptive hierarchical transform (RAHT) node.

Clause 30. The method of clause 29, further comprising: determining an indication of a prediction mode used for decoding the AC coefficients of the current RAHT node, wherein the determining the indication of the prediction mode comprises determining, based on the number of AC coefficients, whether to: infer the indication of the prediction mode from prediction modes used for encoding AC coefficients of already-decoded encoded neighboring RAHT nodes of the current RAHT node; or derive the indication of the prediction mode as corresponding to a prediction mode selected from a set of prediction modes, wherein the indication of the selected prediction mode is entropy encoded in a bitstream.

Clause 31. The method of any one of clauses 29-30, further comprising: encoding the AC coefficients of the current RAHT node based on the indicated prediction mode.

Clause 32. A method comprising: determining, by a computing device, a quantity of alternating current (AC) coefficients of a current region adaptive hierarchical transform (RAHT) node.

Clause 33. The method of clause 32, further comprising: determining, based on the quantity of AC coefficients, whether to: infer an indication of a prediction mode from prediction modes used for encoding AC coefficients of already-encoded neighboring RAHT nodes of the current RAHT node, or derive the indication of the prediction mode as corresponding to a prediction mode selected from a set of prediction modes, wherein the indication of the selected prediction mode is encoded in a bitstream.

Clause 34. The method of any one of clauses 32-33, further comprising: determining the indication of the prediction mode used for encoding the AC coefficients of the current RAHT node, based on whether to infer or derive the indication of the prediction mode.

Clause 35. The method of any one of clauses 32-34, further comprising: encoding, based on the indicated prediction mode, the AC coefficients of the current RAHT node.

Clause 36. The method of any one of clauses 29-35, wherein the indication of the prediction mode is inferred, and wherein the prediction mode indicated by the indication of the prediction mode is an intra prediction mode.

Clause 37. The method of any one of clauses 29-36, wherein the already-encoded neighboring RAHT nodes of the current RAHT node comprise: a parent RAHT node of the current RAHT node; and one or more other child RAHT nodes of the parent RAHT node.

Clause 38. The method of any one of clauses 29-37, wherein the already-encoded neighboring RAHT nodes of the current RAHT node comprise: parent RAHT nodes of the current RAHT node; RAHT nodes at parent depth spatially close to the parent RAHT node; and child RAHT nodes, of the RAHT nodes at parent depth, spatially close to the parent RAHT node.

Clause 39. The method of any one of clauses 29-38, further comprising: selecting the prediction mode, from a set of prediction modes, based on rate distortion optimization (RDO) costs of prediction modes from the set of prediction modes.

Clause 40. The method of any one of clauses 29-39, wherein the determining whether to infer the indication of the prediction mode is based on a prediction mode of a parent RAHT node of the current RAHT node.

Clause 41. The method of clause 40, wherein the indication of the prediction is inferred and the prediction mode indicated by the indication is an intra prediction mode if the prediction mode of the parent RAHT mode is an intra prediction mode.

Clause 42. The method of claim 40, wherein the indication of the prediction is inferred and the prediction mode indicated by the indication is an inter prediction mode if the prediction mode of the parent RAHT mode is an inter prediction mode.

Clause 43. The method of any one of clauses 29-42, wherein the determining to infer the indication of the prediction mode is based on the number of AC coefficients being lower than a threshold.

Clause 44. The method of any one of clauses 29-43, wherein the determining to infer the indication of the prediction mode is based on a number of already-intra-predicted neighboring RAHT nodes of the current RAHT node and/or a number of already-inter-predicted neighboring RAHT nodes of the current RAHT node, wherein an already-intra-predicted neighboring RAHT nodes is an already-encoded/decoded neighboring RAHT node using an intra prediction mode for coding its AC coefficients, and an already-inter-predicted neighboring RAHT nodes is an already-coded/decoded neighboring RAHT node using an inter prediction mode for coding its AC coefficients.

Clause 45. The method of clause 44, wherein the determining to infer the indication of the prediction mode is based on the number of already-intra-predicted neighboring RAHT nodes of the current RAHT node equals zero or the number of already-inter-predicted neighboring RAHT nodes of the current RAHT node equals zero.

Clause 46. The method of clause 43, wherein determining to infer the indication of the prediction mode is based on the number of already-intra-predicted neighboring RAHT nodes of the current RAHT node is lower than a first threshold or the number of already-inter-predicted neighboring RAHT nodes of the current RAHT node is lower than a second threshold.

Clause 47. The method of any one of clauses 45-46, wherein the indication of the prediction is inferred and the prediction mode indicated by the indication is an inter prediction mode when the number of already-intra-predicted neighboring RAHT nodes of the current RAHT node is either equal to zero or lower than the first threshold.

Clause 48. The method of any one of clauses 45-46, wherein the indication of the prediction is inferred and the prediction mode indicated by the indication is an intra prediction mode when the number of already-inter-predicted neighboring RAHT nodes of the current RAHT node is either equal to zero or lower than the second threshold.

Clause 49. The method of clause 44, wherein the determining to infer the indication is based on the number of AC coefficients is lower than a first threshold and the number of already-inter-predicted neighboring RAHT nodes of the current RAHT node is lower than or equal to a second threshold.

Clause 50. The method of clause 44, wherein the inferred prediction mode for encoding the AC coefficients of the current RAHT node is an intra prediction mode.

Clause 51. The method of clause 43, wherein the determination to infer the indication is based on the number of AC coefficients is lower than a third threshold and the number of already-intra-predicted neighboring RAHT nodes of the current RAHT node is lower than a fourth threshold.

Clause 52. The method of clause 50, wherein the inferred prediction mode for encoding the AC coefficients of the current RAHT node is an inter prediction mode.

Clause 53. The method of any one of clauses 49 or 51, wherein the thresholds are predetermined values.

Clause 54. The method of any one of clauses 49 or 51, wherein the thresholds are signaled in a bitstream.

Clause 55. A method comprising: determining, by a computing device, a quantity of AC coefficients of a current region adaptive hierarchical transform (RAHT) node of a RAHT tree.

Clause 56. The method of clause 55, further comprising: inferring, based on the quantity of AC coefficients being lower than a threshold, an indication of a prediction mode from prediction modes used for decoding AC coefficients of already-decoded neighboring RAHT nodes of the current RAHT node.

Clause 57. The method of any one of clauses 55-56, further comprising:decoding the AC coefficients of the current RAHT node based on the inferred indication of the prediction mode.

Clause 58. The method of any one of clauses 55-57, further comprising: inferring, based on the quantity of AC coefficients being greater than or equal to the threshold, the indication of the prediction mode, and decoding the AC coefficients of the current RAHT node based on the inferred indication of the prediction mode.

Clause 59. The method of any one of clauses 55-58, wherein the already-decoded neighboring RAHT nodes of the current RAHT node comprise: a parent node of the current RAHT, nodes at a parent depth spatially close to the parent, and child nodes of the nodes at parent depth spatially close to the parent.

Clause 60. The method of any one of clauses 55-59, wherein the inferring the indication of the prediction mode is based on a prediction mode of a parent RAHT node of the current RAHT node.

Clause 61. A computing device comprising: one or more processors; and memory storing instructions that, when executed by the one or more processors, cause the computing device to perform the method of any one of clauses 1 to 60.

Clause 62. A system comprising: a first computing device configured to perform the method of any one of clauses 1 to 60; and a second computing device configured to encode or decode the indication.

Clause 63. A computer-readable medium storing instructions that, when executed, cause performance of the method of any one of clauses 1 to 60.

A computing device may perform a method comprising multiple operations. The computing device may comprise a decoder. The computing device may obtain a quantity of alternating current (AC) coefficients of a current RAHT node of a RAHT tree. The computing device may determine an indication of a prediction mode used for decoding the AC coefficients of the current RAHT node. Determining the indicated predicted mode of a prediction mode may comprise determining whether to infer the indication of the prediction mode from prediction modes used for decoding AC coefficients of already-decoded neighboring RAHT nodes of the current RAHT node or to decode (e.g., entropy decode) the indication of the prediction mode from a bitstream. Determining whether to infer the indication or decode the indication may be based on the quantity of AC coefficients. The computing device may decode the AC coefficients of the current RAHT node based on the indicated prediction mode. Determining whether to infer the indication of the prediction mode may be based on the quantity of AC coefficients being lower than a threshold. Determining whether to infer the indication of the prediction mode may be based on a quantity of already-intra-predicted neighboring RAHT nodes of the current RAHT node or a quantity of already-inter-predicted neighboring RAHT nodes of the current RAHT node. An already-intra-predicted neighboring RAHT node may be an already-decoded neighboring RAHT node using an intra prediction mode for coding its AC coefficients, and an already-inter-predicted neighboring RAHT node is an already-decoded neighboring RAHT node using an inter prediction mode for coding its AC coefficients. Determining to infer the indication of the prediction mode may be based on the quantity of AC coefficients being lower than a threshold. The selection of the prediction mode may be from the set of prediction modes and may be based on rate distortion optimization (RDO) costs of the set of prediction modes. Determining whether to infer the indication of the prediction mode may be further based on a prediction mode of a parent RAHT node of the current RAHT node. Determining whether to infer the indication of the prediction mode may be based on the quantity of AC coefficients being lower than a second threshold and the quantity of already-intra-predicted neighboring RAHT nodes of the current RAHT node being lower than a third threshold. The inferred prediction mode for decoding the AC coefficients of the current RAHT node may be an intra prediction mode. Determining to infer the indication may be based on the quantity of AC coefficients being lower than a third threshold and the quantity of already-intra-predicted neighboring RAHT nodes of the current RAHT node may be lower than a fourth threshold. The inferred prediction mode for decoding the AC coefficients of the current RAHT node may be an inter prediction mode. Thresholds may be predetermined values. The thresholds may be signaled in a bitstream. Determining whether to infer the indication of the prediction mode may be based on a quantity of already-intra-predicted neighboring RAHT nodes of the current RAHT node being lower than a second threshold or a quantity of already-inter-predicted neighboring RAHT nodes of the current RAHT node being lower than a third threshold. Determining whether to infer the indication of the prediction mode may be based on a quantity of already-intra-predicted neighboring RAHT nodes of the current RAHT node or a quantity of already-inter-predicted neighboring RAHT nodes of the current RAHT node. Already-decoded neighboring RAHT nodes of the current RAHT node may comprise a parent node of the current RAHT node, and one or more other children RAHT nodes of the parent node. Determining whether to infer the indication of the prediction mode may be based on a quantity of already-intra-predicted neighboring RAHT nodes of the current RAHT node that may equal zero or a quantity of already-inter-predicted neighboring RAHT nodes of the current RAHT node that may equal zero. Determining whether to infer the indication of the prediction mode may be based on the quantity of AC coefficients being lower than a first threshold and a quantity of already-inter-predicted neighboring RAHT nodes of the current RAHT node being lower than or equal to a second threshold. The indication of the prediction may be inferred and the prediction mode may be indicated by the indication being an inter prediction mode if the quantity of already-intra-predicted neighboring RAHT nodes of the current RAHT node is either equal to zero or lower than the first threshold. The indication of the prediction may be inferred and the prediction mode may be indicated by the indication being an intra prediction mode if the quantity of already-inter-predicted neighboring RAHT nodes of the current RAHT node is either equal to zero or lower than the second threshold. Determining to infer the indication of the prediction mode may be further based on the prediction mode of the parent RAHT node of the current RAHT node. The indication of the prediction may be inferred and the prediction mode may be indicated by the indication being an intra prediction mode if the prediction mode of the parent RAHT mode is an intra prediction mode. The indication of the prediction may be inferred and the prediction mode may be indicated by the indication being an inter prediction mode if the prediction mode of the parent RAHT mode is an inter prediction mode. Already-coded neighboring RAHT nodes of the current RAHT node may comprise the parent node of the current RAHT node and one or more other children RAHT nodes of the parent node. The already-coded neighboring RAHT nodes of the current RAHT node may comprise the parent node of the current RAHT, nodes at parent depth spatially close to the parent, and child nodes of the latter. The computing device may comprise one or more processors and memory, storing instructions that, when executed by the one or more processors, perform the method described herein. A system may comprise the computing device configured to perform the described method, additional operations, and/or include additional elements; and a second computing device configured to encode AC coefficients. A computer-readable medium may store instructions that, when executed, cause performance of the described method, additional operations, and/or include additional elements.

A computing device may perform a method comprising multiple operations. The computing device may comprise an encoder. The computing device may determine a quantity of alternating current (AC) coefficients of a current region adaptive hierarchical transform (RAHT) node of a RAHT tree. The computing device may determine whether to infer an indication of a prediction mode from prediction modes used for decoding AC coefficients of already-decoded neighboring RAHT nodes of the current RAHT node or decode the indication of the prediction mode from a bitstream, based on the quantity of AC coefficients. The computing device may determine the indicated prediction mode used for decoding the AC coefficients of the current RAHT node, based on whether to infer or decode the indication of the prediction mode. The computing device may decode the AC coefficients of the current RAHT node, based on the indicated prediction mode. Determining whether to infer the indication of the prediction mode may be based on the quantity of AC coefficients being lower than a threshold. Determining whether to infer the indication of the prediction mode may be based on a quantity of already-intra-predicted neighboring RAHT nodes of the current RAHT node or a quantity of already-inter-predicted neighboring RAHT nodes of the current RAHT node. An already-intra-predicted neighboring RAHT node may be an already-decoded neighboring RAHT node using an intra prediction mode for coding its AC coefficients, and an already-inter-predicted neighboring RAHT node is an already-decoded neighboring RAHT node using an inter prediction mode for coding its AC coefficients. Determining to infer the indication of the prediction mode may be based on the quantity of AC coefficients being lower than a threshold. The selection of the prediction mode may be from the set of prediction modes and may be based on rate distortion optimization (RDO) costs of the set of prediction modes. Determining whether to infer the indication of the prediction mode may be further based on a prediction mode of a parent RAHT node of the current RAHT node. Determining whether to infer the indication of the prediction mode may be based on the quantity of AC coefficients being lower than a second threshold and the quantity of already-intra-predicted neighboring RAHT nodes of the current RAHT node being lower than a third threshold. The inferred prediction mode for decoding the AC coefficients of the current RAHT node may be an intra prediction mode. Determining to infer the indication may be based on the quantity of AC coefficients being lower than a third threshold and the quantity of already-intra-predicted neighboring RAHT nodes of the current RAHT node may be lower than a fourth threshold. The inferred prediction mode for decoding the AC coefficients of the current RAHT node may be an inter prediction mode. Thresholds may be predetermined values. The thresholds may be signaled in a bitstream. Determining whether to infer the indication of the prediction mode may be based on a quantity of already-intra-predicted neighboring RAHT nodes of the current RAHT node being lower than a second threshold or a quantity of already-inter-predicted neighboring RAHT nodes of the current RAHT node being lower than a third threshold. Determining whether to infer the indication of the prediction mode may be based on a quantity of already-intra-predicted neighboring RAHT nodes of the current RAHT node or a quantity of already-inter-predicted neighboring RAHT nodes of the current RAHT node. Already-decoded neighboring RAHT nodes of the current RAHT node may comprise a parent node of the current RAHT node, and one or more other children RAHT nodes of the parent node. Determining whether to infer the indication of the prediction mode may be based on a quantity of already-intra-predicted neighboring RAHT nodes of the current RAHT node that may equal zero or a quantity of already-inter-predicted neighboring RAHT nodes of the current RAHT node that may equal zero. Determining whether to infer the indication of the prediction mode may be based on the quantity of AC coefficients being lower than a first threshold and a quantity of already-inter-predicted neighboring RAHT nodes of the current RAHT node being lower than or equal to a second threshold. The indication of the prediction may be inferred and the prediction mode may be indicated by the indication being an inter prediction mode if the quantity of already-intra-predicted neighboring RAHT nodes of the current RAHT node is either equal to zero or lower than the first threshold. The indication of the prediction may be inferred and the prediction mode may be indicated by the indication being an intra prediction mode if the quantity of already-inter-predicted neighboring RAHT nodes of the current RAHT node is either equal to zero or lower than the second threshold. Determining to infer the indication of the prediction mode may be further based on the prediction mode of the parent RAHT node of the current RAHT node. The indication of the prediction may be inferred and the prediction mode may be indicated by the indication being an intra prediction mode if the prediction mode of the parent RAHT mode is an intra prediction mode. The indication of the prediction may be inferred and the prediction mode may be indicated by the indication being an inter prediction mode if the prediction mode of the parent RAHT mode is an inter prediction mode. Already-coded neighboring RAHT nodes of the current RAHT node may comprise the parent node of the current RAHT node and one or more other children RAHT nodes of the parent node. The already-coded neighboring RAHT nodes of the current RAHT node may comprise the parent node of the current RAHT, nodes at parent depth spatially close to the parent, and child nodes of the latter. The computing device may comprise one or more processors and memory, storing instructions that, when executed by the one or more processors, perform the method described herein. A system may comprise the computing device configured to perform the described method, additional operations, and/or include additional elements; and a second computing device configured to encode the AC coefficients. A computer-readable medium may store instructions that, when executed, cause performance of the described method, additional operations, and/or include additional elements.

A computing device may perform a method comprising multiple operations. The computing device may comprise an encoder. The computing device may determine a quantity of alternating current (AC) of a current RAHT node of a RAHT tree. The computing device may determine an indication of a prediction mode used for decoding the AC coefficients of the current RAHT node. Determining the indication of the prediction mode may comprise determining, based on the quantity of AC coefficients, whether to infer the indication of the prediction mode from prediction modes used for encoding AC coefficients of already encoded neighboring RAHT nodes of the current RAHT node, or derive the indication of the prediction mode as corresponding to a prediction mode selected from a set of prediction modes, wherein the indication of the selected prediction mode may be encoded in a bitstream. The computing device may encode the AC coefficients of the current RAHT node based on the indicated prediction mode. The indication of the prediction mode may be inferred, and the prediction mode may be indicated by the indication of the prediction mode being an intra prediction mode. The already-encoded neighboring RAHT nodes of the current RAHT node may comprise a parent RAHT node of the current RAHT node, and one or more other child RAHT nodes of the parent RAHT node. The already-encoded neighboring RAHT nodes of the current RAHT node may comprise parent RAHT nodes of the current RAHT node, RAHT nodes at parent depth spatially close to the parent RAHT node, and child RAHT nodes, of the RAHT nodes at parent depth, spatially close to the parent RAHT node. The computing device may further select the prediction mode, from a set of prediction modes, based on rate distortion optimization (RDO) costs of prediction modes from the set of prediction modes. The indication of the prediction may be inferred and the prediction mode may be indicated by the indication being an inter prediction mode if the number of already-intra-predicted neighboring RAHT nodes of the current RAHT node being either equal to zero or lower than the first threshold. The indication of the prediction may be inferred and the prediction mode may be indicated by the indication being an intra prediction mode if the number of already-inter-predicted neighboring RAHT nodes of the current RAHT node being either equal to zero or lower than the second threshold. The inferred prediction mode for encoding the AC coefficients of the current RAHT node may be an intra prediction mode. The inferred prediction mode for encoding the AC coefficients of the current RAHT node may be an inter prediction mode. The thresholds may be predetermined values. The thresholds may be signaled in a bitstream. The indication of the prediction is inferred and the prediction mode indicated by the indication is an inter prediction mode when the prediction mode of the parent RAHT mode is an inter prediction mode. Determining to infer the indication of the prediction mode may be based on the number of already-intra-predicted neighboring RAHT nodes of the current RAHT node equaling zero or the number of already-inter-predicted neighboring RAHT nodes of the current RAHT node equaling zero. Determining to infer the indication of the prediction mode may be based on the number of already-intra-predicted neighboring RAHT nodes of the current RAHT node being lower than a first threshold or the number of already-inter-predicted neighboring RAHT nodes of the current RAHT node being lower than a second threshold. The indication of the prediction may be inferred and the prediction mode may be indicated by the indication being an inter prediction mode if the number of already-intra-predicted neighboring RAHT nodes of the current RAHT node is either equal to zero or lower than the first threshold. The indication of the prediction may be inferred and the prediction mode may be indicated by the indication being an intra prediction mode if the number of already-inter-predicted neighboring RAHT nodes of the current RAHT node is either equal to zero or lower than the second threshold. Determining to infer the indication may be based on the number of AC coefficients being lower than a first threshold and the number of already-inter-predicted neighboring RAHT nodes of the current RAHT node being lower than or equal to a second threshold. Determining to infer the indication may be based on the number of AC coefficients being lower than a third threshold and the number of already-intra-predicted neighboring RAHT nodes of the current RAHT node is lower than a fourth threshold. Determining whether to infer the indication of the prediction mode may be based on a prediction mode of a parent RAHT node of the current RAHT node. Determining to infer the indication of the prediction mode may be based on the number quantity of AC coefficients being lower than a threshold. Determining to infer the indication of the prediction mode may be based on a number of already-intra-predicted neighboring RAHT nodes of the current RAHT node and/or a number of already-inter-predicted neighboring RAHT nodes of the current RAHT node. An already-intra-predicted neighboring RAHT nodes may be an already-encoded neighboring RAHT node using an intra prediction mode for coding its AC coefficients, and an already-inter-predicted neighboring RAHT nodes may be an already-encoded neighboring RAHT node using an inter prediction mode for coding its AC coefficients. The computing device may comprise one or more processors and memory, storing instructions that, when executed by the one or more processors, perform the method described herein. A system may comprise the computing device configured to perform the described method, additional operations, and/or include additional elements; and a second computing device configured to decode the AC coefficients. A computer-readable medium may store instructions that, when executed, cause performance of the described method, additional operations, and/or include additional elements.

A computing device may perform a method comprising multiple operations. The computing device may comprise an encoder. The computing device may determine a quantity of alternating current (AC) coefficients of a current region adaptive hierarchical transform (RAHT) node of a RAHT tree. The computing device may determine whether to infer an indication of a prediction mode from prediction modes used for encoding AC coefficients of already-encoded neighboring RAHT nodes of the current RAHT node, or derive the indication of the prediction mode as corresponding to a prediction mode selected from a set of prediction modes, wherein the indication of the selected prediction mode is encoded in a bitstream. This determination may be based on the quantity of AC coefficients. The computing device may determine the indication of the prediction mode used for encoding the AC coefficients of the current RAHT node, based on whether to infer or derive the indication of the prediction mode. The computing device may encode the AC coefficients of the current RAHT node based on the indicated prediction mode. The indication of the prediction mode may be inferred, and the prediction mode may be indicated by the indication of the prediction mode being an intra prediction mode. The already-encoded neighboring RAHT nodes of the current RAHT node may comprise a parent RAHT node of the current RAHT node, and one or more other child RAHT nodes of the parent RAHT node. The already-decoded neighboring RAHT nodes of the current RAHT node may comprise parent RAHT nodes of the current RAHT node, RAHT nodes at parent depth spatially close to the parent RAHT node, and child RAHT nodes, of the RAHT nodes at parent depth, spatially close to the parent RAHT node. The computing device may further select the prediction mode, from a set of prediction modes, based on rate distortion optimization (RDO) costs of prediction modes from the set of prediction modes. The indication of the prediction may be inferred and the prediction mode may be indicated by the indication being an inter prediction mode if the number of already-intra-predicted neighboring RAHT nodes of the current RAHT node being either equal to zero or lower than the first threshold. The indication of the prediction may be inferred and the prediction mode may be indicated by the indication being an intra prediction mode if the number of already-inter-predicted neighboring RAHT nodes of the current RAHT node being either equal to zero or lower than the second threshold. The inferred prediction mode for encoding the AC coefficients of the current RAHT node may be an intra prediction mode. The inferred prediction mode for encoding the AC coefficients of the current RAHT node may be an inter prediction mode. The thresholds may be predetermined values. The thresholds may be signaled in a bitstream. The indication of the prediction is inferred and the prediction mode indicated by the indication is an inter prediction mode when the prediction mode of the parent RAHT mode is an inter prediction mode. Determining to infer the indication of the prediction mode may be based on the number of already-intra-predicted neighboring RAHT nodes of the current RAHT node equaling zero or the number of already-inter-predicted neighboring RAHT nodes of the current RAHT node equaling zero. Determining to infer the indication of the prediction mode may be based on the number of already-intra-predicted neighboring RAHT nodes of the current RAHT node being lower than a first threshold or the number of already-inter-predicted neighboring RAHT nodes of the current RAHT node being lower than a second threshold. The indication of the prediction may be inferred and the prediction mode may be indicated by the indication being an inter prediction mode if the number of already-intra-predicted neighboring RAHT nodes of the current RAHT node is either equal to zero or lower than the first threshold. The indication of the prediction may be inferred and the prediction mode may be indicated by the indication being an intra prediction mode if the number of already-inter-predicted neighboring RAHT nodes of the current RAHT node is either equal to zero or lower than the second threshold. Determining to infer the indication may be based on the number of AC coefficients being lower than a first threshold and the number of already-inter-predicted neighboring RAHT nodes of the current RAHT node being lower than or equal to a second threshold. Determining to infer the indication may be based on the number of AC coefficients being lower than a third threshold and the number of already-intra-predicted neighboring RAHT nodes of the current RAHT node is lower than a fourth threshold. Determining whether to infer the indication of the prediction mode may be based on a prediction mode of a parent RAHT node of the current RAHT node. Determining to infer the indication of the prediction mode may be based on the number quantity of AC coefficients being lower than a threshold. Determining to infer the indication of the prediction mode may be based on a number of already-intra-predicted neighboring RAHT nodes of the current RAHT node and/or a number of already-inter-predicted neighboring RAHT nodes of the current RAHT node. An already-intra-predicted neighboring RAHT nodes may be an already-encoded neighboring RAHT node using an intra prediction mode for coding its AC coefficients, and an already-inter-predicted neighboring RAHT nodes may be an already-encoded neighboring RAHT node using an inter prediction mode for coding its AC coefficients. The computing device may comprise one or more processors and memory, storing instructions that, when executed by the one or more processors, perform the method described herein. A system may comprise the computing device configured to perform the described method, additional operations, and/or include additional elements; and a second computing device configured to decode the AC coefficients. A computer-readable medium may store instructions that, when executed, cause performance of the described method, additional operations, and/or include additional elements.

A computing device may perform a method comprising multiple operations. The computing device may comprise an encoder. The computing device may A computing device may determine a quantity of alternating current (AC) coefficients of a current region adaptive hierarchical transform (RAHT) node of a RAHT tree. The computing device may infer, based on the quantity of AC coefficients being lower than a threshold, an indication of a prediction mode from prediction modes used for decoding AC coefficients of already-decoded neighboring RAHT nodes of the current RAHT node. The computing device may decode the AC coefficients of the current RAHT node based on the inferred indication of the prediction mode. The computing device may further derive the indication of the prediction mode based on the quantity of AC coefficients being greater than or equal to the threshold. The computing device may further decode the AC coefficients of the current RAHT node based on the derived indication of the prediction mode. The already-decoded neighboring RAHT nodes of the current RAHT node may comprise a parent node of the current RAHT, nodes at a parent depth spatially close to the parent, and child nodes of the nodes at parent depth spatially close to the parent. Inferring the indication of the prediction mode may be based on a prediction mode of a parent RAHT node of the current RAHT node. The computing device may comprise one or more processors and memory, storing instructions that, when executed by the one or more processors, perform the method described herein. A system may comprise the computing device configured to perform the described method, additional operations, and/or include additional elements; and a second computing device configured to encode the AC coefficients. A computer-readable medium may store instructions that, when executed, cause performance of the described method, additional operations, and/or include additional elements.

One or more examples herein may be described as a process which may be depicted as a flowchart, a flow diagram, a data flow diagram, a structure diagram, and/or a block diagram. Although a flowchart may describe operations as a sequential process, one or more of the operations may be performed in parallel or concurrently. The order of the operations shown may be re-arranged. A process may be terminated when its operations are completed, but could have additional steps not shown in a figure. A process may correspond to a method, a function, a procedure, a subroutine, a subprogram, etc. If a process corresponds to a function, its termination may correspond to a return of the function to the calling function or the main function.

Operations described herein may be implemented by hardware, software, firmware, middleware, microcode, hardware description languages, or any combination thereof. When implemented in software, firmware, middleware or microcode, the program code or code segments to perform the necessary tasks (e.g., a computer-program product) may be stored in a computer-readable or machine-readable medium. A processor(s) may perform the necessary tasks. Features of the disclosure may be implemented in hardware using, for example, hardware components such as application-specific integrated circuits (ASICs) and gate arrays. Implementation of a hardware state machine to perform the functions described herein will also be apparent to persons skilled in the art.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein. Computer-readable medium may comprise, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

A non-transitory tangible computer readable media may comprise instructions executable by one or more processors configured to cause operations described herein. An article of manufacture may comprise a non-transitory tangible computer readable machine-accessible medium having instructions encoded thereon for enabling programmable hardware to cause a device (e.g., an encoder, a decoder, a transmitter, a receiver, and the like) to allow operations described herein. The device, or one or more devices such as in a system, may include one or more processors, memory, interfaces, and/or the like.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more of the operations described herein may be conditional. For example, one or more operations may be performed if certain criteria are met, such as in computing device, a communication device, an encoder, a decoder, a network, a combination of the above, and/or the like. Example criteria may be based on one or more conditions such as device configurations, traffic load, initial system set up, packet sizes, traffic characteristics, a combination of the above, and/or the like. If the one or more criteria are met, various examples may be used. It may be possible to implement any portion of the examples described herein in any order and based on any condition.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1. A method comprising:

   determining, by a computing device, a quantity of alternating current (AC) coefficients of a current region adaptive hierarchical transform (RAHT) node;
   determining, based on the quantity of AC coefficients, whether to:

   infer an indication of a prediction mode from prediction modes used for decoding AC coefficients of already-decoded neighboring RAHT nodes of the current RAHT node, or
   decode the indication of the prediction mode from a bitstream;

   based on whether to infer or decode the indication of the prediction mode determining the indicated prediction mode used for decoding the AC coefficients of the current RAHT node; and
   decoding, based on the indicated prediction mode, the AC coefficients of the current RAHT node.

2. The method of claim 1, wherein the determining whether to infer the indication of the prediction mode is based on the quantity of AC coefficients being lower than a threshold.

3. The method of any one of claims 1-2, wherein the determining whether to infer the indication of the prediction mode is based on a quantity of already-intra-predicted neighboring RAHT nodes of the current RAHT node or a quantity of already-inter-predicted neighboring RAHT nodes of the current RAHT node, wherein:

an already-intra-predicted neighboring RAHT node is an already-decoded neighboring RAHT node using an intra prediction mode for coding its AC coefficients, and
an already-inter-predicted neighboring RAHT node is an already-decoded neighboring RAHT node using an inter prediction mode for coding its AC coefficients.

4. The method of any one of claims 1-3, wherein the determining whether to infer the indication of the prediction mode is further based on a prediction mode of a parent RAHT node of the current RAHT node.

5. The method of any one of claims 1-4, wherein the determining whether to infer the indication of the prediction mode is based on the quantity of AC coefficients being lower than a second threshold and the quantity of already-intra-predicted neighboring RAHT nodes of the current RAHT node being lower than a third threshold.

6. The method of any one of claims 1-5, wherein the determining whether to infer the indication of the prediction mode is based on a quantity of already-intra-predicted neighboring RAHT nodes of the current RAHT node being lower than a second threshold or a quantity of already-inter-predicted neighboring RAHT nodes of the current RAHT node being lower than a third threshold.

7. The method of any one of claims 1-6, wherein the determining whether to infer the indication of the prediction mode is based on a quantity of already-intra-predicted neighboring RAHT nodes of the current RAHT node or a quantity of already-inter-predicted neighboring RAHT nodes of the current RAHT node.

8. The method of any one of claims 1-7, wherein the already-decoded neighboring RAHT nodes of the current RAHT node comprise:

a parent node of the current RAHT node; and
one or more other children RAHT nodes of the parent node.

9. The method of any one of claims 1-8, wherein the determining whether to infer the indication of the prediction mode is based on a quantity of already-intra-predicted neighboring RAHT nodes of the current RAHT node that equal zero or a quantity of already-inter-predicted neighboring RAHT nodes of the current RAHT node equaling zero.

10. The method of any one of claims 1-9, wherein the determining whether to infer the indication of the prediction mode is based on the quantity of AC coefficients being lower than a first threshold and a quantity of already-inter-predicted neighboring RAHT nodes of the current RAHT node being lower than or equal to a second threshold.

11. The method of any one of claims 1-10, wherein the indication of the prediction mode is inferred, and wherein the prediction mode indicated by the indication of the prediction mode is an intra prediction mode.

12. The method of any one of claims 1-11, wherein the determining to infer the indication of the prediction mode is further based on the prediction mode of the parent RAHT node of the current RAHT node

13. A computing device comprising:

one or more processors; and
memory storing instructions that, when executed by the one or more processors, cause the computing device to perform the method of any one of claims 1 to 12.

14. A system comprising:

a first computing device configured to perform the method of any one of claims 1 to 12; and
a second computing device configured to encode the indication.

15. A computer-readable medium storing instructions that, when executed, cause performance of the method of any one of claims 1 to 12.

FIG. 1

FIG. 2

FIG. 3

FIG. 4

FIG. 5

```
┌─────────────────────────────────────┐
│  Determine occupancy configuration β │
│                 602                  │
└─────────────────────────────────────┘
                   │
                   ▼
┌─────────────────────────────────────┐
│     Dynamically reduce using $DR^n$  │
│                 604                  │
└─────────────────────────────────────┘
                   │
                   ▼
┌─────────────────────────────────────┐
│      Lookup context index in LUT     │
│                 606                  │
└─────────────────────────────────────┘
                   │
                   ▼
┌─────────────────────────────────────┐
│            Select context            │
│                 608                  │
└─────────────────────────────────────┘
                   │
                   ▼
┌─────────────────────────────────────┐
│  Entropy code occupancy of current   │
│             child cuboid             │
│                 610                  │
└─────────────────────────────────────┘
```

# FIG. 6

FIG. 7

*FIG. 8A*

*FIG. 8B*

EP 4 730 766 A1

FIG. 8C

EP 4 730 766 A1

$$P = uA + vB + wC$$

u+v+w = 1
0 ≤ u, v, w

*FIG. 9A*

*FIG. 9B*

current point cloud 1011

Encode geometry
1010

geometry information 1012

decoded geometry 1013

Map attributes of the
current point cloud to
decoded geometry
1025

attributes 10111

Determine at least one portion
of the decoded geometry
1020

portion information 1021

bitstream
1090

portion of geometry 1022

mapped attributes 1031

Encode attributes for each portion
1030

attribute information 1032

1000

FIG. 10

*FIG. 11*

FIG. 12

FIG. 13A

EP 4 730 766 A1

*FIG. 13B*

*FIG. 13C*

61

EP 4 730 766 A1

inter mode

intra mode

1120, 1320

reference point cloud 1411 →

MV 1412 →

Perform motion compensation
1410

*motion compensated
geometry1413*

portion of geometry 1421 →

Perform attributes projection onto the
portion geometry
1420

Extrapolate attributes of
already-coded portions
1430

← *already-coded
portions 1432*

*projected attributes 1422*

*attribute predictors 1431*

1400

## FIG. 14

FIG. 15

EP 4 730 766 A1

*attribute predictors 1124*

*1130*

Transform attribute predictors
1610

*portion of geometry 1022*

*attribute coefficients 1611*

*mapped attribute
coefficients 1621*

Transform portion attributes
1620

*mapped attributes 1031*

*residual coefficients 1631*

Quantize
1630

*quantized coefficients 1641*

entropy encode
1640

*attribute information 1032*

*1600*

## FIG. 16

attribute information 1232

1330

entropy decode
1710

quantized coefficients 1711

Inverse quantize
1720

residual coefficients 1721

portion of
geometry 1222

Inverse transform
1730

residual attributes 1731

attribute predictors 1324

decoded attributes 1233

*FIG. 17*

1700

EP 4 730 766 A1

FIG. 18

**FIG. 19**

EP 4 730 766 A1

**2000**

**2010**

**2020**

transform along
three directions

**2001**

**2011**

**2021**

DC coefficients at
depth d

DC coefficients at
depth d-1

AC coefficients at
depth d

*FIG. 20*

2110

2112

2111

$c_{Ai,d}$

$\sqrt{w_i}$

$a_{i,d}$

$a_{i,c,up}$

$\sqrt{w_i}$

$c_{Ai,c,pred}$

2100

predicted AC coefficients

AC coefficients

residual AC coefficients

*FIG. 21*

residual AC coefficients $\longrightarrow \oplus \longleftarrow$ predicted AC coefficients $\longleftarrow c_{Ai,c,pred}$

decoded AC coefficients

2200

**FIG. 22**

FIG. 23

current RAHT node 2405

obtain prediction modes of
neighboring RAHT nodes
2420

neighboring prediction modes 2421

majority voting
2430

most used prediction mode 2431

determine best
prediction mode for
current node (RDO)
2410

select context
2440

number of AC coefficients of the current RAHT node 2442

parent's prediction mode 2443

context 2441

entropy encoder
2450

prediction mode information 2451

bitstream
2490

selected prediction mode 2411

2400

## FIG. 24

*current RAHT node 2505*

```
obtain prediction modes of
neighboring RAHT nodes
        2510
```

*neighboring modes 2511*

```
majority voting
     2520
```

*most used mode 2521*

```
select context
     2530
```
← *number of AC coefficients of the current RAHT node 2532*

← *parent's prediction mode 2533*

*context 2531*

```
entropy decoder
     2540
```
← *prediction mode information 2542* — ```bitstream
2590```

*decoded prediction mode 2541*

*2500*

## FIG. 25

current RAHT node 2605

obtain N$_{AC}$
2610

determine indication
2620

indication of prediction mode 2621

indication?

not inferred

inferred

derive prediction mode
2640

infer the prediction mode
2630

inferred mode 2631

selected prediction mode 2641

context 2441

entropy encoder
2450

prediction mode information 2451

bitstream
2690

2600

*FIG. 26*

current RAHT node 2705

obtain $N_{AC}$
2610

determine indication
2620

indication of prediction mode 2621

indication ?

inferred

not inferred

infer the prediction mode
2630

context 2531 → entropy decoder
2540

prediction mode information 2542

bitstream
2590

inferred mode 2631

decoded prediction mode 2541

2700

FIG. 27

EP 4 730 766 A1

EP 4 730 766 A1

#occurrence of selection
of intra prediction mode

FIG. 28A

FIG. 28B

EP 4 730 766 A1

current RAHT node 2905

obtain $N_{AC}$
2610

obtain $N_{intra}$ and $N_{inter}$
2910

$N_{AC}$ 2919

$N_{intra}$, $N_{inter}$ 2911

2920

infer the prediction mode
2921

yes

$N_{AC} \leq th_{AC,intra}$ and $N_{inter} \leq th_{inter}$?

Intra prediction mode
2922

no

inferred mode 2631

2930

infer the prediction mode
2931

yes

$N_{AC} \leq th_{AC,inter}$ and $N_{intra} \leq th_{intra}$?

No (not inferred)

Inter prediction mode
2932

2900

FIG. 29

Obtain a number of AC coefficients of a current RAHT node of a RAHT tree
*3010*

Determine an indication of a prediction mode used for encoding the AC coefficients of the current RAHT node, the determining the indication includes determining, based on the number of AC coefficients, whether to:

infer the indication of the prediction mode from prediction modes used for encoding AC coefficients of already-encoded neighboring RAHT nodes of the current RAHT node; or

derive the indication as corresponding to a prediction mode selected from a set of prediction modes, wherein the indication of the selected prediction mode is entropy encoded in a bitstream
*3020*

Encode the AC coefficients of the current RAHT node according to the indicated prediction mode
*3030*

*3000*

# FIG. 30

Obtain a number of AC coefficients of a current RAHT node of a RAHT
tree
*3110*

Determine an indication of a prediction mode used for decoding the AC
coefficients of the current RAHT node, the determining the indication of a
prediction mode comprises determining, based on the number of AC
coefficients, whether to:
    infer the indication of the prediction mode from prediction modes used
for decoding AC coefficients of already-decoded neighboring RAHT
nodes of the current RAHT node; or
    entropy decode the indication of the prediction mode from a bitstream
*3120*

Decode the AC coefficients of the current RAHT node according to the
indicated prediction mode
*3130*

*3100*

# FIG. 31

FIG. 32

*FIG. 33*

| | Europäisches Patentamt |  | |
|---|---|---|---|
| | European Patent Office | **EUROPEAN SEARCH REPORT** | **Application Number** |
| | Office européen des brevets | | **EP 25 21 0174** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "G-PCC 2nd edition codec description", 143. MPEG MEETING; 20230717 - 20230721; GENEVA; (MOTION PICTURE EXPERT GROUP OR ISO/IEC JTC1/SC29/WG11), , no. n23041 4 October 2023 (2023-10-04), XP030311995, Retrieved from the Internet: URL:https://dms.mpeg.expert/doc_end_user/d ocuments/143_Geneva/wg11/MDS23041_WG07_N00 648.zip MDS23041_WG07_N00648_v1.docx [retrieved on 2023-10-04] * pages 109-110; figure 92 * ----- | 1-15 | INV. H04N19/00 |
| A | WEI ZHANG ET AL: "[G-PCC][New] On disabling Transform Domain Prediction of RAHT", 140. MPEG MEETING; 20221024 - 20221028; MAINZ; (MOTION PICTURE EXPERT GROUP OR ISO/IEC JTC1/SC29/WG11), , no. m61015 19 October 2022 (2022-10-19), XP030305440, Retrieved from the Internet: URL:https://dms.mpeg.expert/doc_end_user/d ocuments/140_Mainz/wg11/m61015-v1-m61015.z ip m61015/m61015 On disabling Transform Domain Prediction of RAHT.docx [retrieved on 2022-10-19] * pages 2,3; figure 3 * ----- -/-- | 1-15 | |

| | TECHNICAL FIELDS SEARCHED (IPC) |
|---|---|
| | G06T H04N |

The present search report has been drawn up for all claims

| Place of search | Date of completion of the search | Examiner |
|---|---|---|
| Munich | 10 March 2026 | Di Cagno, Gianluca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................
& : member of the same patent family, corresponding document

EPO FORM 1503 03.82 (P04C01)

**page 1 of 2**

Europäisches
Patentamt

European
Patent Office

Office européen
des brevets

# EUROPEAN SEARCH REPORT

**Application Number**

EP 25 21 0174

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | LASSERRE (OFINNO) S ET AL: "[GPCC][EE13.70] On completely local and improved entropy coding in RAHT", 148. MPEG MEETING; 20241104 - 20241108; KEMER; (MOTION PICTURE EXPERT GROUP OR ISO/IEC JTC1/SC29/WG11), , no. m69574 26 October 2024 (2024-10-26), XP030327814, Retrieved from the Internet: URL:https://dms.mpeg.expert/doc_end_user/d ocuments/148_Kemer/wg11/m69574-v1-m69574%5 BGPCC%5D%5BEE13.70%5DOncompletelylocalandi mprovedentropycodinginRAHT.docx.zip m69574 [GPCC][EE13.70] On completely local and improved entropy coding in RAHT.pptx [retrieved on 2024-10-26] * the whole document * ----- | 1-15 | |

TECHNICAL FIELDS
SEARCHED     (IPC)

The present search report has been drawn up for all claims

| Place of search | Date of completion of the search | Examiner |
|---|---|---|
| Munich | 10 March 2026 | Di Cagno, Gianluca |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**page 2 of 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63709672